# EUROPEAN PATENT APPLICATION

(11) **EP 4 742 005 A1**
(43) Date of publication of application: **13.05.2026**
(21) Application number: 24852408.4
(22) Date of filing: 09.08.2024
(51) Int. Cl.: G06F 3/01, G06F 3/00, G06T 19/00, G06F 3/04842

(54) **METHOD FOR SUPPORTING OBJECT SELECTION IN VIRTUAL ENVIRONMENT AND ELECTRONIC DEVICE SUPPORTING SAME**

(30) Priority: 09.08.2023 KR 20230104156; 30.11.2023 KR 20230170845
(71) Applicant: Samsung Electronics Co., Ltd., Suwon-si, Gyeonggi-do 16677 (KR)
(72) Inventor: AHN, Sohmin, Suwon-si, Gyeonggi-do 16677 (KR); KANG, Donghee, Suwon-si, Gyeonggi-do 16677 (KR); YI, Taeha, Suwon-si, Gyeonggi-do 16677 (KR); LEE, Hyeonggeon, Suwon-si, Gyeonggi-do 16677 (KR)
(74) Representative: Gulde & Partner
(86) International application number: PCT/KR2024/011901
(87) International publication number: WO 2025/034055

(57) **Abstract**

An embodiment disclosed herein provides a method for supporting object selection in a virtual environment, and an electronic device supporting same. An electronic device according to one embodiment may comprise a display, memory, and a processor. The electronic device may operate to recognize an input device in a virtual environment. The electronic device according to one embodiment may operate to determine a virtual space for determining target virtual objects on the basis of attributes of the input device. The electronic device according to one embodiment may operate to determine the target virtual objects on the basis of the virtual space. The electronic device according to one embodiment may operate to generate affordances corresponding to the respective target virtual objects. The electronic device according to one embodiment may operate to display the affordances according to a designated arrangement mode.

## Description

### [Technical Field]

An embodiment of the present disclosure provides a method capable of supporting object selection in a virtual environment, and an electronic device supporting the same.

### [Background Art]

Recently, research and development on an extended reality (XR) technology such as virtual reality (VR), augmented reality (AR), and/or mixed reality (MR) are being conducted. Recently, VR, AR, and/or MR technologies are being variously utilized in various fields (e.g., an entertainment field, an infotainment field, a smart home field, and/or a smart factory field), and a hardware part and/or a software part of an electronic device for the utilization are continuously being researched and developed.

For example, a wearable electronic device may, alone (e.g., a standalone scheme) or by interworking between at least two devices with each other (e.g., a tethered scheme), provide, through an application related to an AR service, one image through a display of the wearable electronic device by overlapping (or by overlaying) various digital contents (e.g., a virtual image) on a real world. For example, recently, an AR environment such as a tethered AR scheme of connecting an electronic device (e.g., a smart phone) and a wearable electronic device and providing virtual contents generated by the electronic device through a display of the wearable electronic device, and a standalone AR scheme of, without connection with an electronic device, generating virtual contents by the wearable electronic device alone and providing the virtual contents through a display, is being implemented.

As described above, due to a technological development of a recent AR service, users using an AR service are increasing, and user needs (needs) according to the increase are also increasing. For example, for a user using an AR service, a demand to more accurately, intuitively, and conveniently select and display contents of an AR environment is increasing.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

In an embodiment of the present disclosure, a method for supporting object selection in a virtual environment and an electronic device supporting the same are provided.

In an embodiment of the present disclosure, a method for providing, based on an input device recognized in the virtual environment, an affordance (or a guide handle) by which an object in the virtual environment may be easily selected, and an electronic device supporting the same are provided.

In an embodiment of the present disclosure, a method for determining a display position of an affordance supporting object selection in the virtual environment and a type of the affordance, and the electronic device supporting the same are provided.

Technical problems to be solved by this document are not limited to the above-mentioned technical problems, and other technical problems, which are not described above, may be clearly understood from the following descriptions by those skilled in the art to which the present disclosure pertains.

### [Solution to Problem]

An electronic device, according to an embodiment of the present disclosure, may include a display, at least one processor including processing circuitry, and a memory storing instructions (or commands). In an embodiment, the memory may store instructions causing the electronic device to perform operations, when the instructions are executed by the at least one processor, individually and/or collectively.

The instructions according to an embodiment, when executed by the at least one processor, may cause the electronic device to recognize an input device in a virtual environment. The instructions according to an embodiment, when executed by the at least one processor, may cause the electronic device to determine a virtual space for determining target virtual objects based on an attribute of the input device. The instructions according to an embodiment, when executed by the at least one processor, may cause the electronic device to determine the target virtual objects based on the virtual space. The instructions according to an embodiment, when executed by the at least one processor, may cause the electronic device to generate affordances corresponding to the respective target virtual objects. The instructions according to an embodiment, when executed by the at least one processor, may cause the electronic device to display the affordances according to a designated arrangement mode.

An operation method of the electronic device according to an embodiment of the present disclosure may include an operation of recognizing an input device in a virtual environment. The operation method may include an operation of determining a virtual space for determining target virtual objects based on an attribute of the input device. The operation method may include an operation of determining the target virtual objects based on the virtual space. The operation method may include an operation of generating affordances corresponding to the respective target virtual objects. The operation method may include an operation of displaying the affordances according to a designated arrangement mode.

In various embodiments of the present disclosure to solve the above described technical objects, a computer-readable storage medium in which a program for executing the method in a processor is recorded may be included.

According to an embodiment, a non-transitory computer-readable storage medium (or a storage medium or a computer program product) storing one or more programs is described. According to an embodiment, the one or more programs, when executed by a processor of the electronic device, may include commands (or instructions) performing an operation of recognizing an input device in a virtual environment, an operation of determining a virtual space for determining target virtual objects based on an attribute of the input device, an operation of determining the target virtual objects based on the virtual space, an operation of generating affordances corresponding to the respective target virtual object, and an operation of displaying the affordances according to a designated arrangement mode.

An additional range of the applicability of the present disclosure will become apparent from the following detailed description. However, various alterations and modifications may be clearly understood by those skilled in the art without departing from the spirit and scope of the present disclosure. Accordingly, it should be understood that the detailed description and the specific embodiments such as the exemplary embodiments of the present disclosure are just provided for illustrative purposes.

### [Advantageous Effects of Invention]

According to an electronic device, an operation method thereof, and a storage medium according to an embodiment of the present disclosure, an affordance (or a guide handle) by which an object in a virtual environment may be easily selected, based on an input device recognized in the virtual environment, may be provided. According to an embodiment, in a virtual environment including dense objects, support may be provided such that a user accurately and easily selects an object desired by the user among the dense objects. According to an embodiment, when object selection is performed in a virtual environment, an object shape is maintained, and, by providing an affordance based on an object included in a selectable range by a user input, immersion regarding use of the virtual environment by a user may be maintained. According to an embodiment, user needs according to use of a virtual service (e.g., an AR service and/or a VR service) are satisfied, and a new user experience (UX) may be provided to a user.

In addition, various effects that can be directly or indirectly identified through the present document may be provided. The effects obtained by the present disclosure are not limited to the aforementioned effects, and other effects, which are not mentioned above, will be clearly understood by those skilled in the art to which the present disclosure pertains from the following description.

### [Brief Description of Drawings]

In connection with the description of the drawings, the same or similar reference numerals may be used for the same or similar components.
FIG. 1 is a block diagram of an electronic device in a network environment according to various embodiments.
FIG. 2 is a diagram illustrating an example of an electronic device according to an embodiment.
FIG. 3 is a diagram illustrating an example of an internal structure of the electronic device according to an embodiment.
FIG. 4A is a diagram illustrating a network environment between the electronic device according to an embodiment and another electronic device.
FIG. 4B is a diagram illustrating an example of displaying a virtual environment in the electronic device according to an embodiment.
FIG. 5 is a diagram schematically illustrating a configuration of the electronic device according to an embodiment.
FIG. 6 is a flowchart illustrating an operation method of the electronic device according to an embodiment of the present disclosure.
FIGS. 7A, 7B, 7C, and 7D are diagrams illustrating operation examples of providing an affordance in association with a virtual object in the electronic device according to an embodiment of the present disclosure.
FIG. 8 is a flowchart illustrating an operation method of the electronic device according to an embodiment of the present disclosure.
FIG. 9 is a diagram illustrating examples of an indicator for each of various input devices in the electronic device according to an embodiment of the present disclosure.
FIG. 10 is a diagram illustrating examples of a virtual space generated in the electronic device according to an embodiment of the present disclosure and an indicator corresponding to an input device.
FIG. 11 is a flowchart illustrating an operation method of the electronic device according to an embodiment of the present disclosure.
FIG. 12 is a diagram illustrating an example of providing a virtual space corresponding to an input device in the electronic device according to an embodiment of the present disclosure.
FIG. 13 is a diagram illustrating an example of a resolution for each input device provided in the electronic device according to an embodiment of the present disclosure.
FIG. 14 is a flowchart illustrating an operation method of the electronic device according to an embodiment of the present disclosure.
FIG. 15 is a flowchart illustrating an operation method of the electronic device according to an embodiment of the present disclosure.
FIGS. 16A and 16B are diagrams illustrating examples of determining a target virtual object in the electronic device according to an embodiment of the present disclosure.
FIG. 17 is a flowchart illustrating an operation method of the electronic device according to an embodiment of the present disclosure.
FIG. 18 is a flowchart illustrating an operation method of the electronic device according to an embodiment of the present disclosure.
FIGS. 19A, 19B, and 19C are diagrams illustrating examples of providing an affordance in the electronic device according to an embodiment of the present disclosure.
FIG. 20 is a flowchart illustrating an operation method of the electronic device according to an embodiment of the present disclosure.
FIGS. 21A, 21B, and 21C are diagrams illustrating examples of determining a size of an affordance in the electronic device according to an embodiment of the present disclosure.
FIGS. 22A and 22B are diagrams illustrating operation examples of providing an affordance in association with a virtual object in the electronic device according to an embodiment of the present disclosure.
FIGS. 23A, 23B, and 23C are diagrams illustrating operation examples of providing an affordance in association with a virtual object in the electronic device according to an embodiment of the present disclosure.
FIGS. 24A, 24B, and 24C are diagrams illustrating operation examples of providing an affordance in association with a virtual object in the electronic device according to an embodiment of the present disclosure.
FIGS. 25A and 25B are diagrams illustrating operation examples of providing an affordance in association with a virtual object in the electronic device according to an embodiment of the present disclosure.
FIG. 26 is a diagram illustrating an operation example of providing an affordance in the electronic device according to an embodiment of the present disclosure.
FIGS. 27A, 27B, and 27C are diagrams illustrating operation examples of providing an affordance in association with a virtual object in the electronic device according to an embodiment of the present disclosure.
FIGS. 28A and 28B are diagrams illustrating operation examples of providing an affordance in association with a virtual object in the electronic device according to an embodiment of the present disclosure.

### [Mode for the Invention]

Hereinafter, embodiments of the disclosure will be described in detail with reference to the drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

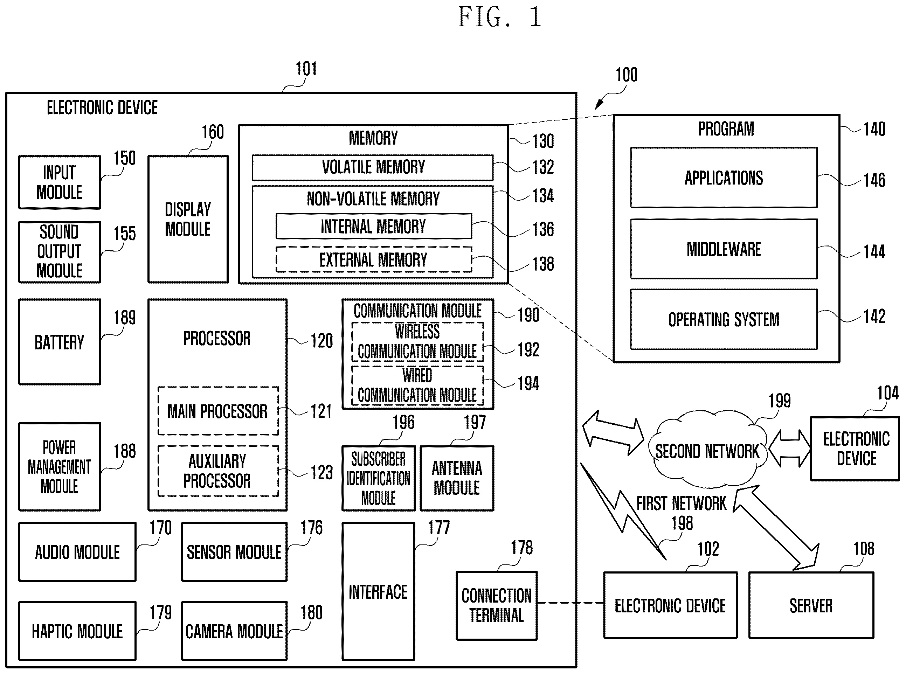

Fig. 1 is a block diagram illustrating an electronic device in a network environment according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed in the present document may be a device in various forms. The electronic device may include, for example, a portable communication device (e.g., a smartphone), a computer device, a portable multimedia device, a portable medical device, a camera, a wearable device, or a home appliance. The electronic device according to the embodiment of the present document is not limited to the above-mentioned devices.

Various embodiments of this document and the terms used in the embodiments are not intended to limit the technical features disclosed in this document to the particular embodiments and should be understood as including various alterations, equivalents, or alternatives of the corresponding embodiments. In connection with the description of the drawings, the similar reference numerals may be used for the similar or relevant constituent elements. The singular form of a noun corresponding to an item may include one or plurality of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st" and "2nd," or "first" and "second" may be used to simply distinguish a corresponding constituent element from another, and does not limit the constituent elements in other aspect (e.g., importance or order). When a constituent element (e.g., a first constituent element) is referred to, with or without the term "operatively" or "communicatively," as "coupled with," "coupled to," "connected with," or "connected to" another constituent element (e.g., a second constituent element), it means that the constituent element may be coupled with the other constituent element directly (e.g., wiredly), wirelessly, or via a third constituent element.

The term "module" used in various embodiments of the present document may include a unit implemented in hardware, software, or firmware, and may interchangeably be used with other terms, for example, "logic," "logic block," "component (or part)," or "circuitry". The module may be a single integral component (i.e., part), or a minimum unit or portion thereof, adapted to perform one or more functions. For example, according to one embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, the processor (e.g., processor 120) of the machine (e.g., electronic device 101) may invoke and execute at least one of one or more commands stored from the storage medium. This allows the machine to be operated to perform at least one function according to the at least one commands invoked. The one or more commands may include a code generated by a compiler or a code executable by an interpreter. The machine-readable storage medium may be provided in the form of a non-transitory storage medium. Here, "non-transitory" only means that the storage medium is a tangible device and does not include signals (e.g., electromagnetic waves), and this term does not distinguish between the case where the data is stored on the storage medium permanently and the case where the data is stored temporarily.

According to one embodiment, the methods according to various embodiments disclosed in this document may be included in and provided as a computer program product. The computer program product may be traded as a product between a seller and a buyer. The computer program product may be distributed in the form of a device-readable storage medium (e.g., compact disc read only memory (CD-ROM)), or it may be distributed online (e.g., downloaded or uploaded) through an application store (e.g., Play Store^{™}) or directly between two user devices (e.g., smartphones). In case of the distribution online, at least part of the computer program product may be temporarily generated or at least temporarily stored in the machine-readable storage medium, such as memory of the manufacturer's server, a server of the application store, or a relay server.

According to various embodiments, each constituent element (e.g., module or program), among the above-mentioned constituent elements, may include a single object or a plurality of objects, and some of the plurality of objects may be disposed separately in different constituent elements. According to various embodiments, one or more constituent elements, among the above-mentioned constituent elements, or operations may be omitted, or one or more other constituent elements or operations may be added. Alternatively or additionally, a plurality of constituent elements (e.g., modules or programs) may be integrated into a single constituent element. In this case, the integrated constituent element may perform one or more functions of each of the plurality of constituent elements in the same or similar manner as they are performed by a corresponding one of the plurality of constituent elements before the integration. According to various embodiments, operations performed by the module, the program, or another constituent element may be carried out sequentially, in parallel, repeatedly, or heuristically, or one or more of the operations may be executed in a different order or omitted, or one or more other operations may be added.

Prior to describing various embodiments of the present disclosure, a description is provided of an electronic device 101 to which an embodiment of the present disclosure may be applied.

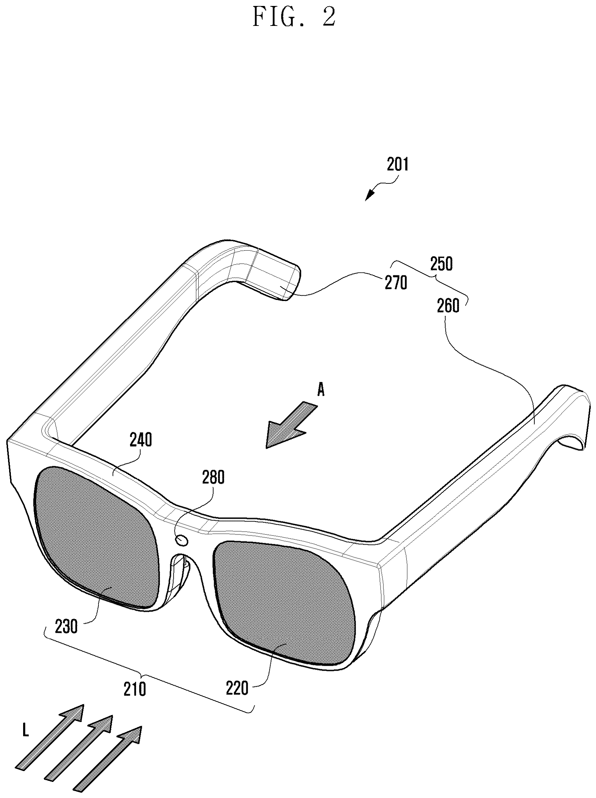

FIG. 2 is a diagram illustrating an example of an electronic device according to an embodiment.

According to an embodiment, FIG. 2 illustrates an example in which the electronic device 101 is a wearable electronic device 201 in a glasses form (e.g., a glasses-type display device or augmented reality (AR) glass), however, the example is not limited thereto. For example, the wearable electronic device 201 may include various forms of devices that include a display, are worn (or mounted) on a part of a body of a user (e.g., a face or a head part), and provide augmented reality (AR), mixed reality (MR), and/or virtual reality (VR) services. For example, the wearable electronic device 201 may be implemented in at least one form among a glass form, a goggles form, a helmet form, or a hat form, however, the example is not limited thereto.

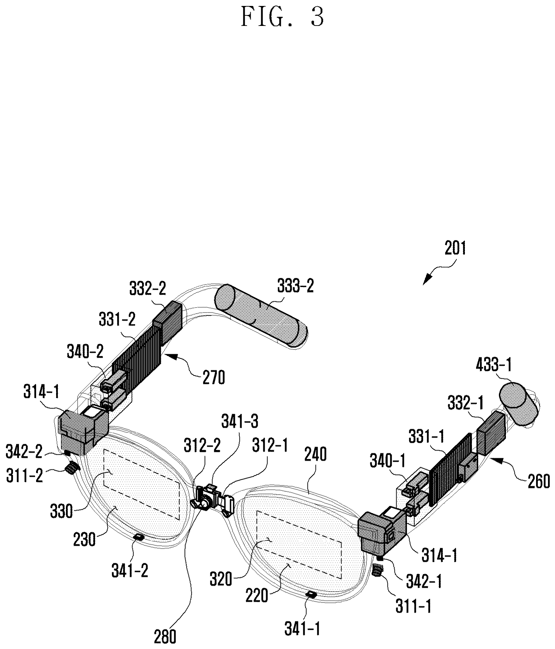

According to an embodiment, the wearable electronic device 201 may include a video see-through (VST) device. For example, the VST device may selectively provide an augmented reality service and a virtual reality service. The VST device may include a plurality of cameras, and may track a gaze of a user based on the plurality of cameras (e.g., eye tracking cameras 312-1 and 312-2 of FIG. 3). In an embodiment, eye tracking may indicate a technology of tracking a position and/or a movement of a gaze of a user. According to an embodiment, the VST device may capture or detect a real world in front of a user based on a plurality of cameras, and may display the real world through a display (a display respectively corresponding to both eyes of a user). The VST device may provide an augmented reality service by displaying a virtual object while displaying the real world.

The wearable electronic device 201 described below may be a device including at least a part among constituent elements included in the electronic device 101 as described with reference to FIG. 1 Even when not mentioned in the following description, the wearable electronic device 201 according to the present disclosure may be interpreted as being able to include various constituent elements as described with reference to FIG. 1.

According to an embodiment, the wearable electronic device 201 may be worn on a face of a user, and may provide an image (e.g., an augmented reality image, a mixed reality image, and/or a virtual reality image) to a user. According to an embodiment, the wearable electronic device 201 may provide an AR service of adding virtual information (or a virtual object) to at least a part of a real reality space (or an environment). For example, the wearable electronic device 201 may provide virtual information to a user by overlapping the virtual information on a real reality space corresponding to a field of view (FOV) of a wearer.

With reference to FIG. 2, the wearable electronic device 201 may include a glass member (or a window member) 210 disposed at a position corresponding to both eyes (e.g., a left eye and a right eye) of a user, a main frame (or a main body part) 240 fixing the glass member 210, a support frame (or a support member) 250 connected at both ends of the main frame 240 and rested on ears of a user, and a camera module 280 (e.g., a camera for photographing).

According to an embodiment, the glass member 210 may include a first glass 220 corresponding to a left eye of a user and a second glass 230 corresponding to a right eye of a user. According to an embodiment, the glass member 210 may be supported by the main frame 240. For example, the glass member 210 may be fitted into an opening formed in the main frame 240. According to an embodiment, an AR image emitted from a display module (e.g., the display module 160 of FIG. 1) may be projected onto the glass member 210.

According to an embodiment, a waveguide (e.g., an optical waveguide or a transparent waveguide) may be formed in at least a partial area of the glass member 210. In an embodiment, the waveguide may perform a role of guiding the AR image emitted from the display module to eyes of a user. A detailed description of the waveguide is described with reference to a description related to the first glass 220 and the second glass 230 of FIG. 3.

According to an embodiment, the glass member 210 is exemplified as being implemented in a form separated into the first glass 220 and the second glass 230 so as to respectively correspond to a left eye and a right eye of a user as illustrated in FIG. 2, however, according to some embodiments, the glass member 210 may also be implemented in one glass form without distinction between the first glass 220 and the second glass 230.

According to an embodiment, the main frame 240 and the support frame 250 may be implemented in a glasses form.

In an embodiment, the main frame 240 may have a structure rested at least partially on a nose of a user. According to an embodiment, the main frame 240 may support the glass member 210. According to an embodiment, the main frame 240 may be formed of a synthetic resin material. According to an embodiment, as a glass member 210 is fitted into an opening formed in the main frame 240, the main frame 240 may support the glass member 210.

In an embodiment, the support frame 250 may include a first support frame 260 rested on a first-direction ear (e.g., a left ear) and a second support frame 270 rested on a second-direction ear (e.g., a right ear). For example, the main frame 240 and the support frame 250 (e.g., the first support frame 260 and the second support frame 270) may be connected through a hinge part (not illustrated), and may be coupled such that folding is possible.

In an embodiment, the support frame 250 may be rotatably connected to the main frame 240. According to an embodiment, the support frame 250 may include the first support frame 260 and the second support frame 270. The first support frame 260, when viewed from an 'A' direction, may be connected to the main frame 240 at a left side (e.g., a first direction) with respect to the main frame 240. The second support frame 270, when viewed from an 'A' direction, may be connected to the main frame 240 at a right side (e.g., a second direction) with respect to the main frame 240.

In an embodiment, the support frame 250 may also be fixedly installed in the main frame 240. For example, the first support frame 260 connected to a left side of the main frame 240 and the second support frame 270 connected to a right side of the main frame 240 may also be formed to be connected to each other. According to an embodiment, the support frame 250 connected to both sides of the main frame 240 may form a ring form and may be worn in a scheme of being inserted onto a head of a user. In addition, the support frame 250 may be transformed into various forms in which the wearable electronic device 201 may be worn on a face of a user.

According to an embodiment, the support frame 250 may be formed to be rested on ears of a user. For example, the wearable electronic device 201 may be worn on a face of a user in a scheme in which the support frame 250 connected to the main frame 240 is rested on ears of a user. According to an embodiment, the support frame 250 may rotate with respect to the main frame 240. According to an embodiment, the support frame 250 may rotate in a direction approaching the main frame 240, such that a volume of the wearable electronic device 201 may be reduced.

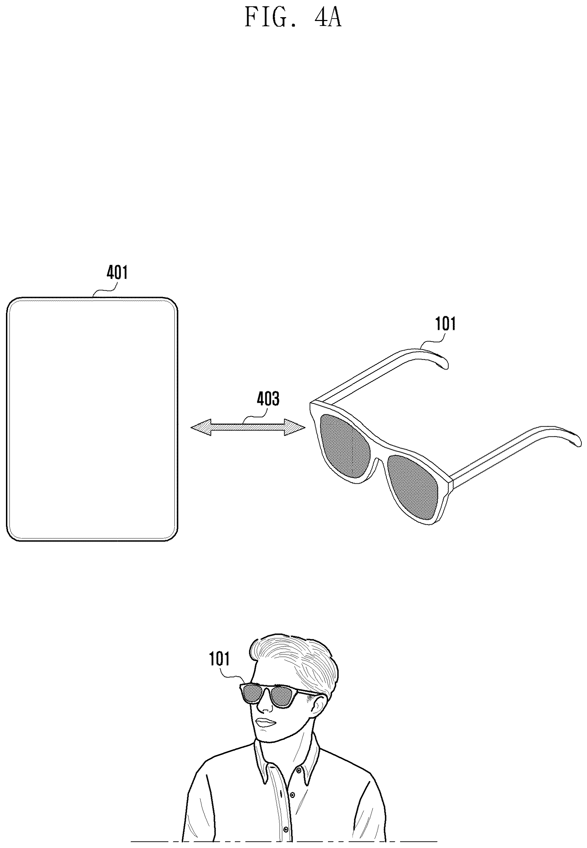

According to an embodiment, a display module (e.g., the display module 160 of FIG. 1) may output an AR image generated by a processor 120 (e.g., the processor 120 of FIG. 1) of an electronic device 201 or a processor of another electronic device (e.g., another electronic device 401 of FIG. 4A) connected to the electronic device 201 (e.g., a tethered electronic device (e.g., a smart phone)). When an AR image is generated in the display module and projected onto the glass member 210, an object included in the AR image is combined with visible light L incident from a front (e.g., a direction in which a user views) through the glass member 210, such that AR is implemented. The display module may be a projector having a very small size (e.g., a micro projector, a pico projector). For example, the display module may be a laser scanning display (LSD), a digital micro-mirror display (DMD), and/or a liquid crystal on silicon (LCoS). According to an embodiment, the display module may be a transparent display. In this case, a light-emitting element included in the display module may be directly disposed in the glass member 210. In addition, the display module may be various display devices for implementing AR.

In an embodiment, the glass member 210, the support frame 250, and/or the display module may be provided as a pair so as to correspond to a left eye and a right eye of a user. For example, the glass member 210 may include a first glass 220 and a second glass 230, and the support frame 250 may include the first support frame 260 and the second support frame 270. According to an embodiment, at least a part among the above-described constituent elements may be different between a configuration corresponding to a left eye and a configuration corresponding to a right eye.

According to an embodiment, the camera module 280 may, for example, indicate a camera for photographing (e.g., a front photographing camera). For example, the camera module 280 may be implemented by being disposed in the main frame 240 so as to photograph (or capture) a subject at a front surface of the wearable electronic device 201 (or a front surface viewed by a user). For example, the camera module 280 may be disposed at a central portion (or a center point) between the first glass 220 and the second glass 230 in the main frame 240 so as to photograph a front of the main frame 240. In an embodiment, the front of the main frame 240 may mean a direction in which a user views when a user wears the wearable electronic device 201.

According to an embodiment, the camera module 280 may include at least one camera, and the wearable electronic device 201 may, through the camera module 280, perform operations such as photographing of a real world positioned in front of a user, recognition of an object, and/or recognition of a space including three-dimensional depth information. According to an embodiment, the wearable electronic device 201 may also obtain, through the camera module 280, relative position information of a recognized object with respect to the wearable electronic device 201 or position information of an object in a recognized space.

In an embodiment, the wearable electronic device 201 may include, in addition to the camera module 280, a plurality of other cameras, and a detailed description of the camera module 280 and the plurality of other cameras is described with reference to FIG. 3.

FIG. 3 is a diagram illustrating an example of an internal structure of the electronic device according to an embodiment.

According to an embodiment, the wearable electronic device 201 (e.g., the electronic device 101 of FIG. 1) may be a device implemented in a form worn on a face or a head part of a user. According to an embodiment, the wearable electronic device 201 may include a plurality of glasses (e.g., the first glass 220 and the second glass 230) respectively corresponding to both eyes (e.g., a left eye and a right eye) of a user, and may be implemented in a glasses form. According to an embodiment, the wearable electronic device 201 may provide an image related to an AR service to a user. According to an embodiment, the wearable electronic device 201 may project or display a virtual object onto the first glass 220 and/or the second glass 230, such that at least one virtual object is viewed as being overlapped on a real world recognized by a user through the first glass 220 and/or the second glass 230 of the wearable electronic device 201.

With reference to FIG. 3, the wearable electronic device 201 according to an embodiment may include a main frame (or a main body part) 240, a support frame (e.g., a first support frame 260, a second support frame 270), and a hinge part (e.g., a first hinge part 340-1, a second hinge part 340-2).

According to an embodiment, the main frame 240 and the support frame (e.g., the first support frame 260, and/or the second support frame 270) may mount various constituent elements of the wearable electronic device 201. According to an embodiment, the main frame 240 and the support frames 260 and 270 may be operatively connected through the hinge parts 340-1 and 340-2.

According to an embodiment, the main frame 240 may include a portion formed such that the main frame 240 may be rested at least partially on a nose of a user.

According to an embodiment, the support frames 260 and 270 may include a support member in a form that may be hooked on ears of a user. According to an embodiment, the support frames 260 and 270 may include the first support frame 260 rested on a left ear of a user and the second support frame 270 rested on a right ear of a user.

According to an embodiment, the first hinge part 340-1 may connect the first support frame 260 and the main frame 240 such that the first support frame 260 is rotatable with respect to the main frame 240. According to an embodiment, the second hinge part 340-2 may connect the second support frame 270 and the main frame 240 such that the second support frame 270 is rotatable with respect to the main frame 240. According to another embodiment, the hinge parts 340-1 and 340-2 of the wearable electronic device 201 may be omitted. For example, the support frames 260 and 270 may be directly connected to the main frame 240 and may be fixedly installed.

According to an embodiment, the main frame 240 may include glasses (e.g., the first glass 220 and the second glass 230) corresponding to both eyes (e.g., a left eye and a right eye) of a user, a display module (e.g., a first display module 314-1 and a second display module 314-2), an optical waveguide (e.g., a first optical waveguide 320 and a second optical waveguide 330), a camera module 280 (e.g., a camera for photographing or a front photographing camera), a recognition camera (e.g., a first recognition camera 311-1, a second recognition camera 311-2), and an eye tracking camera (e.g., a first eye tracking camera 312-1, a second eye tracking camera 312-2), at least one microphone (e.g., a first microphone 341-1, a second microphone 341-2, and/or a third microphone 341-3), and at least one lighting member (e.g., a first lighting member 342-1 and/or a second lighting member 342-2).

According to an embodiment, the wearable electronic device 201 may display various information as light generated in the display modules 314-1 and 314-2 is projected onto the glasses 220 and 230. For example, light generated in the first display module 314-1 may be projected onto the first glass 220, and light generated in the second display module 314-2 may be projected onto the second glass 230. According to an embodiment, the first glass 220 and the second glass 230 may be formed of a material of which at least a part is transparent (e.g., a transparent member). According to an embodiment, the first glass 220 (or a first transparent member) corresponding to a left eye of a user may be connected to the first display module 314-1, and the second glass 230 (or a second transparent member) corresponding to a right eye of a user may be connected to the second display module 314-2. According to an embodiment, the first glass 220 and the second glass 230 may be formed of a glass plate, a plastic plate, and/or a polymer, and may be manufactured to be transparent or translucent.

According to an embodiment, the display module (e.g., the first display module 314-1 and the second display module 314-2) may include a liquid crystal display (LCD), a digital micro-mirror device (DMD), a liquid crystal on silicon (LCoS), an organic light emitting diode (OLED), or a micro light emitting diode (micro LED).

According to an embodiment, the first glass 220 and the second glass 230 may include a condensing lens and/or an optical waveguide (or a transparent waveguide) (e.g., the first optical waveguide 320, the second optical waveguide 330). According to an embodiment, the optical waveguides 320 and 330 may be positioned at least partially in a part of the glasses 220 and 230. For example, the first optical waveguide 320 may be partially positioned in the first glass 220, and the second optical waveguide 330 may be partially positioned in the second glass 230. According to an embodiment, the optical waveguides 320 and 330 may perform a role of delivering a light source generated by the display modules 314-1 and 314-2 to eyes of a user. According to an embodiment, the light emitted from the display modules 314-1 and 314-2 may be incident on one surface (or one end) of the glasses 220 and 230. The light incident on one surface of the glasses 220 and 230 may be delivered to a user through the optical waveguides 320 and 330 formed (or positioned) in the glasses 220 and 230.

In an embodiment, the optical waveguides 320 and 330 may be manufactured of glass, plastic, or polymer, and may include a nano pattern formed on one surface of an inside or an outside. The nano pattern may include a polygonal or curved lattice structure (grating structure). According to an embodiment, light incident on one surface of the glasses 220 and 230 may propagate or be reflected within the optical waveguides 320 and 330 by the nano pattern and may be delivered to a user. According to an embodiment, the optical waveguides 320 and 330 may include at least one among at least one diffractive element (diffractive optical element (DOE), holographic optical element (HOE)) or a reflective element (e.g., a reflective mirror). According to an embodiment, the optical waveguides 320 and 330 may guide light emitted from the display modules 314-1 and 314-2 (e.g., a light source part) to eyes of a user by using at least one diffractive element or reflective element.

In an embodiment, a diffractive element may include an input optical member/an output optical member (not illustrated). An input optical member may mean an input grating area, and an output optical member (not illustrated) may mean an output grating area. An input grating area may perform a role of an input end diffracting (or reflecting) light output from the display modules 314-1 and 314-2 (e.g., micro LED) to deliver the light to glasses (e.g., the first glass 220, the second glass 230). An output grating area may perform a role of an exit diffracting (or reflecting) the light delivered to the glasses (e.g., the first glass 220, the second glass 230) of the optical waveguides 320 and 330 to eyes of a user.

In an embodiment, a reflective element may include a total internal reflection optical element or a total internal reflection waveguide for total internal reflection (TIR). Total internal reflection may mean, as one scheme of guiding light, making an incident angle such that light input through an input grating area (e.g., a virtual image) is reflected by about 100% on one surface (e.g., a designated surface) of the optical waveguides 320 and 330, such that the light is delivered by about 100% to an output grating area.

According to an embodiment, a light path of light emitted from the display modules (e.g., 314-1, 314-2) may be guided to the optical waveguides 320 and 330 through an input optical member. Light moving inside the optical waveguides 320 and 330 may be guided, through the output optical member, in a direction of eyes of a user.

According to an embodiment, the display modules 314-1 and 314-2 may include a plurality of panels (or display areas), and the plurality of panels may be positioned in the glasses 220 and 230. According to an embodiment, at least a part of the display modules 314-1 and 314-2 may be configured with a transparent element, and a user may, through the display modules 314-1 and 314-2, recognize a real space at a rear surface of the display modules 314-1 and 314-2. According to an embodiment, the display modules 314-1 and 314-2 may display a virtual object in at least a partial area of a transparent element such that a user views that a virtual object (or virtual information) is added to at least a part of a real reality space. According to an embodiment, when the display modules 314-1 and 314-2 are transparent micro LEDs, a configuration of the optical waveguides 320 and 330 in the glasses 220 and 230 may be omitted.

According to an embodiment, the wearable electronic device 201 may include a plurality of cameras (e.g., a first camera, a second camera, and a third camera). For example, the first camera (e.g., the camera module 280 of FIG. 2) may be the photographing camera 280 (e.g., an RGB camera) for photographing an image corresponding to a field of view (FoV) of a user and/or measuring a distance to an object. The second camera may be the eye tracking cameras (or eye tracking camera modules) 312-1 and 312-2 for checking a direction of a gaze of a user. The third camera may be recognition cameras 311-1 and 311-2 (gesture camera modules) for recognizing a predetermined space.

According to an embodiment, the photographing camera 280 may photograph a front direction of the wearable electronic device 201, and the eye tracking cameras 312-1 and 312-2 may photograph a direction opposite to a photographing direction of the photographing camera 280. For example, the first eye tracking camera 312-1 may partially photograph a left eye of a user, and the second eye tracking camera 312-2 may partially photograph a right eye of a user. According to an embodiment, the wearable electronic device 201 may, based on image information related to a real reality space obtained through the photographing camera 280, display a virtual object (or virtual information) related to the AR service together. According to an embodiment, the wearable electronic device 201 may display a virtual object based on the display modules disposed corresponding to both eyes of a user (e.g., the first display module 314-1 corresponding to a left eye, and/or the second display module 314-2 corresponding to a right eye). According to an embodiment, the wearable electronic device 201 may display a virtual object based on preset setting information (e.g., image resolution (or display resolution), frame rate, brightness, and/or a display area).

According to an embodiment, the photographing camera 280 may include high resolution (HR) cameras and/or photo video (PV) cameras as high-resolution cameras. For example, the photographing camera 280 may be utilized to obtain a high-quality image such as an auto focus function and shake correction(OIS). The photographing camera 280 may also be implemented as global shutter (GS) cameras and rolling shutter (RS) cameras in addition to a color camera.

According to an embodiment, the eye tracking cameras 312-1 and 312-2 may detect a gaze direction (e.g., a pupil movement) of a user. For example, the eye tracking cameras 312-1 and 312-2 may detect a pupil of a user and track a gaze direction. In an embodiment, a tracked gaze direction may be utilized such that a center of a virtual image including a virtual object moves corresponding to the gaze direction. For example, the eye tracking cameras 312-1 and 312-2 may detect a pupil, and global shutter (GS) cameras may be utilized such that a fast pupil movement is tracked without screen dragging, and performance and specifications of each of the eye tracking cameras 312-1 and 312-2 may be substantially identical.

According to an embodiment, the recognition cameras 311-1 and 311-2 may detect a user gesture and/or a predetermined space within a preset distance (e.g., a predetermined space). According to an embodiment, the recognition cameras 311-1 and 311-2 may be used for 3DoF, 6DoF head tracking, hand detection, and/or hand tracking. For example, the recognition cameras 311-1 and 311-2 may be utilized to perform a function of simultaneous localization and mapping (SLAM) through spatial recognition for 6DoF and depth photographing. According to an embodiment, the recognition cameras 311-1 and 311-2 may be utilized for a gesture recognition function for recognizing a user gesture. The recognition cameras 311-1 and 311-2 may include cameras including GS. For example, the recognition cameras 311-1 and 311-2 may include cameras including GS having less screen dragging (or RS phenomenon may be reduced) such as rolling shutter (RS) cameras, in order to detect and track a fast hand motion and/or a fine movement of a finger.

According to an embodiment, the wearable electronic device 201 may, by using at least one camera 311-1, 311-2, 312-1, 312-2, and/or 280, detect an eye corresponding to a dominant eye and/or an auxiliary eye among a left eye and/or a right eye of a user. For example, the wearable electronic device 201 may, based on a gaze direction of a user with respect to an external object or a virtual object, detect an eye corresponding to the dominant eye and/or the auxiliary eye.

A number and a position of at least one camera (e.g., the photographing camera 280, the eye tracking cameras 312-1 and 312-2, and/or recognition cameras 311-1 and 311-2) included in the wearable electronic device 201 illustrated in FIG. 3 may not be limited. For example, based on a form (e.g., a shape or a size) of the wearable electronic device 201, a number and a position of at least one camera (e.g., the photographing camera 280, the eye tracking cameras 312-1 and 312-2, and/or recognition cameras 311-1 and 311-2) may be variously changed.

According to an embodiment, the wearable electronic device 201 may include at least one lighting member (or a light emitting device(illumination LED)) (e.g., a first lighting member 342-1, a second lighting member 342-2) for increasing accuracy of at least one camera (e.g., the photographing camera 280, the eye tracking cameras 312-1 and 312-2, and/or recognition cameras 311-1 and 311-2). For example, the first lighting member 342-1 may be disposed in a portion corresponding to a left eye of a user, and the second lighting member 342-2 may be disposed in a portion corresponding to a right eye of a user.

According to an embodiment, the lighting members 342-1 and 342-2 may be utilized for different purposes, respectively, depending on a position attached to the wearable electronic device 201. In an embodiment, the lighting members 342-1 and 342-2 may be used, as an auxiliary means for increasing accuracy (e.g., easiness of eye gaze detection), when a pupil of a user is photographed by the eye tracking cameras 312-1 and 312-2, and may include an IR LED generating light of an infrared wavelength. In an embodiment, the lighting members 342-1 and 342-2 may be used, as an auxiliary means for supplementing ambient brightness, when a subject to be photographed is not easy to detect due to a dark environment or mixing of a plurality of light sources and reflected light, when a user gesture is photographed by recognition cameras 311-1 and 311-2.

According to an embodiment, the wearable electronic device 201 may include microphones (e.g., a first microphone 341-1, a second microphone 341-2, and a third microphone 341-3) for receiving a voice of a user and ambient sound.

According to an embodiment, the first support frame 260 (or a first housing) and/or the second support frame 270 (a second housing) may include a printed circuit board (PCB) (e.g., a first printed circuit board 331-1, a second printed circuit board 331-2), a speaker (e.g., a first speaker 332-1, a second speaker 332-2) for outputting an audio signal, batteries (e.g., a first battery 333-1, a second battery 333-2), and/or hinge parts (e.g., a first hinge part 340-1, a second hinge part 340-2).

According to an embodiment, the printed circuit boards 331-1 and 331-2 may include a flexible PCB (FPCB). The printed circuit boards 331-1 and 331-2 may deliver an electrical signal to each component (e.g., a camera, a display module, a microphone, and/or a speaker) of the wearable electronic device 201.

According to an embodiment, the speakers 332-1 and 332-2 may include the first speaker 332-1 for delivering an audio signal to a left ear of a user and the second speaker 332-2 for delivering an audio signal to a right ear of a user.

According to an embodiment, the batteries 333-1 and 333-2 may, through a power management module (e.g., the power management module 188 of FIG. 1), supply power to the printed circuit boards 331-1 and 331-2. According to an embodiment, the wearable electronic device 201 may, through the first support frame 260 and the second support frame 270, include a plurality of batteries 333-1 and 333-2, and, through the power management module, supply power to the printed circuit boards 331-1 and 331-2. For example, the plurality of batteries 333-1 and 333-2 may be electrically connected to the power management module.

Although not illustrated, the wearable electronic device 201 such as examples of FIG. 2 and FIG. 3 may be accommodated by a designated external device (e.g., a case) (not illustrated). According to an embodiment, the case may include a function of simply storing and charging the wearable electronic device 201. According to an embodiment, in addition to charging and storing purposes of the wearable electronic device 201, the case may include constituent elements such as a camera and/or a processor, and the case may also be used as an auxiliary computation device of the wearable electronic device 201 by using the constituent elements. For example, when accommodated in the case, the wearable electronic device 201 may perform communication (e.g., wired communication and/or wireless communication) with the case, and the case may perform some functions of a host device (e.g., a smart phone).

According to an embodiment, the wearable electronic device 201 may provide an AR service alone or in conjunction with at least one other electronic device (e.g., a host device (e.g., the electronic device 101)). For example, the wearable electronic device 201 may be connected to a host device (e.g., the other electronic device 401 of FIG. 4A), and may operate in a tethered AR scheme of connecting to a network (e.g., cloud) through the host device to provide the AR service. According to an embodiment, the wearable electronic device 201 may also provide the AR service by operating in a scheme of connecting to a network (e.g., cloud) standalone without connection with a host device (e.g., the electronic device 101).

FIG. 4A is a diagram illustrating a network environment between the electronic device according to an embodiment and another electronic device.

With reference to FIG. 4A, the electronic device 101 (e.g., the wearable electronic device 201 of FIG. 2 or FIG. 3) according to an embodiment may be connected to the other electronic device 401. The electronic device 101 and the other electronic device 401 may be connected by wire or connected wirelessly (e.g., pairing). For example, the electronic device 101 may be connected to the other electronic device 401 through short-range wireless communication 403 such as Bluetooth, low energy Bluetooth, Wi-Fi, Wi-Fi direct, or ultra-wide band (UWB). According to an embodiment, the other electronic device 401 may include a smart phone, a tablet, a personal computer (PC), a notebook, and/or a display device (e.g., a monitor or a TV). According to an embodiment, the electronic device 101 may include AR glasses, smart glasses, or a head mount device (HMD, head mounted display).

According to an embodiment, the electronic device 101 may, for an AR service, directly generate related data (e.g., an AR image) (e.g., generate based on stored or processed data), or obtain the related data from an outside (e.g., the other electronic device 401 or a server (e.g., the server 108 of FIG. 1)), and may display the related data through a display (e.g., the display module 160 of FIG. 1). For example, the electronic device 101 may be wearable on a body (e.g., a face) of a user, and may display, as one image (e.g., an AR screen), by overlapping various digital contents (e.g., an AR image) on a real world through the display module 160. According to an embodiment, the electronic device 101 may receive image data (e.g., an AR image) from the other electronic device 401, and may display the received image data, together with various objects of a real world, through the display module 160.

According to an embodiment, when communication connection with the other electronic device 401 is made, the electronic device 101 may periodically transmit, to the other electronic device 401, image information photographed through the camera module (e.g., the camera module 180 of FIG. 1), and gaze information (e.g., FOV and/or AOV) of a user, and/or may transmit, to the other electronic device 101, when a state change (e.g., a change of a position or a direction) of the electronic device 101 occurs. According to an embodiment, when connection with the other electronic device 401 is made, the electronic device 101 may provide (e.g., transmit), to the other electronic device 401, at least one information such as image information, gaze information, device information, sensing information, function information, and/or position information.

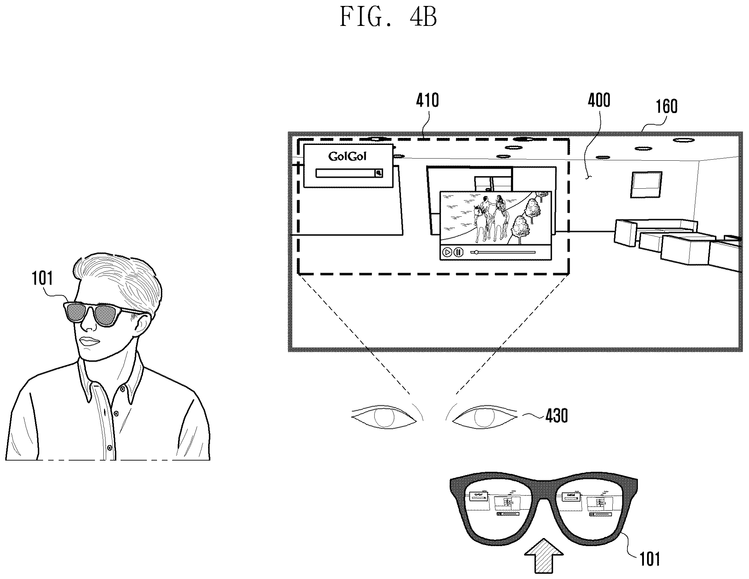

FIG. 4B is a diagram illustrating an example of displaying a virtual environment in the electronic device according to an embodiment.

In an embodiment, FIG. 4B may indicate a state in which a user wears the electronic device 101, and is viewing an AR screen provided through the display module 160 of the electronic device 101. For example, FIG. 4B may indicate a state in which a user is viewing contents 410 (or a virtual object or an augmented reality image) overlapped on at least a part of a real space 400 (or a virtual environment) through an AR screen of the electronic device 101. According to an embodiment, the contents 410 may include a virtual object displayed on a field of view(FOV) 430 of a user. In an embodiment, the contents 410 (or an augmented reality image) may be that graphic data corresponding to at least one application, in a real reality space 400 in which a user wearing the electronic device 101 is positioned, is provided as a virtual object.

With reference to FIG. 4B, the electronic device 101 may be a situation in which the electronic device 101 is worn by a user, and is displaying, on at least a part of the real space 400, one or more contents 410 (or a virtual object (or information) related to the contents) through the display module 160 of the electronic device 101. For example, the electronic device 101 may provide, to a user, by overlapping at least one virtual information on a real reality space 400 corresponding to a field of view 430 of a user. In an embodiment, a situation in which the contents 410 are displayed may include, for example, a situation of displaying an execution screen of an application (e.g., a browser, a shopping app, and/or SNS) capable of performing a search function when a user performs gesture input and/or eye gaze with respect to a real object of the real reality space 400, a situation of displaying an execution screen (e.g., a moving image reproduction screen or an image reproduction screen) of an application (e.g., a player) for reproducing media contents, and/or a situation of executing designated simulation by a user on a virtual space (e.g., a situation of using a collaboration tool or a situation of playing a game). For example, the contents 410 may include information, which may be provided by each corresponding application, such as virtual information (or a virtual object or a graphic image) corresponding to a first application, virtual information corresponding to a second application, and/or virtual information corresponding to a third application.

According to an embodiment, in a state in which the contents 410 are provided, the electronic device 101 may track a gaze 430 of a user, and may provide, as an AR screen (or a virtual environment or an execution screen), through the display module 160, virtual information related to at least one real object of the real space 400 corresponding to a gaze 430 of a user or an execution screen of an application execution designated by a user. For example, a user may, by using the electronic device 101, use an AR service, according to movement of a gaze 430 of a user, for the contents 410 corresponding to various real objects in the real reality space 400.

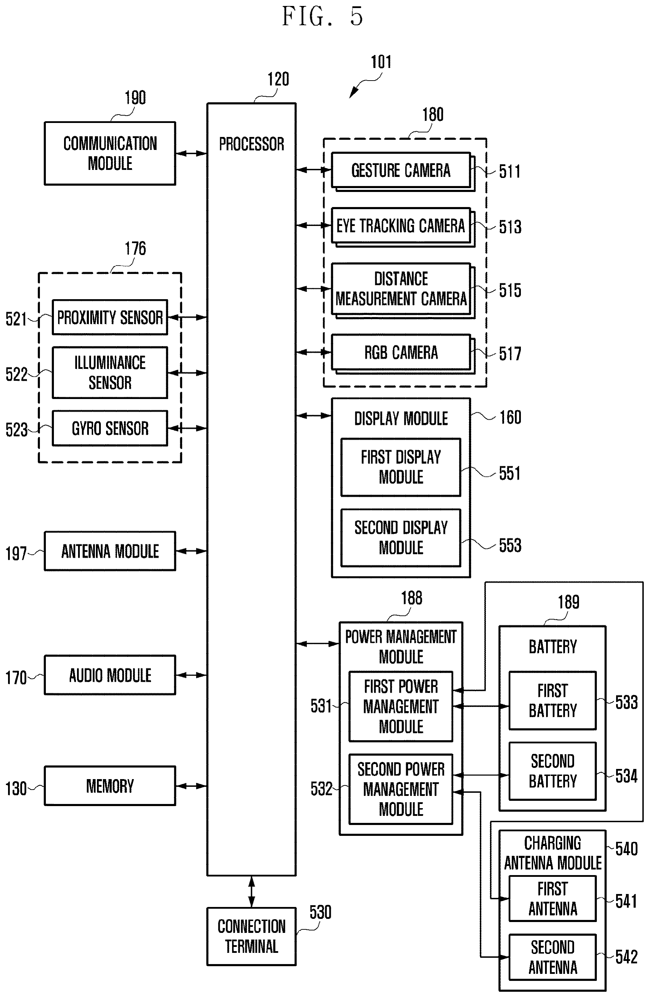

FIG. 5 is a diagram schematically illustrating a configuration of the electronic device according to an embodiment.

According to an embodiment, in FIG. 5, an example in which the electronic device 101 is a wearable electronic device of a glasses form (e.g., the wearable electronic device 201 of FIG. 2 or FIG. 3) is illustrated, but limitation is not made thereto. According to an embodiment, the electronic device 101 may include constituent elements of the electronic device 101 and the wearable electronic device 201 as described in a description part with reference to FIG. 1 to FIG. 3. Hereinafter, a term "the wearable electronic device 101" may be used as a term including the electronic device 101 of FIG. 1 and the wearable electronic device 201 of FIG. 2 or FIG. 3.

With reference to FIG. 5, the wearable electronic device 101 may include the processor 120, the memory 130, the display module 160, the audio module 170, the sensor module 176, the camera module 180, the power management module 188, the battery 189, the communication module 190, the antenna module 197, and/or the charging antenna module 540. According to an embodiment, the wearable electronic device 101 may be connected, through a connection terminal 530 (e.g., USB TYPE-C), with an external electronic device (not illustrated). For example, the power management module 188 of the wearable electronic device 101 may receive power from an external electronic device through the connection terminal 530 and may charge the battery 189. For example, the processor 120 of the wearable electronic device 101 may perform power line communication with an external electronic device through the connection terminal 530. For example, the power management module 188 of the wearable electronic device 101 may receive, wirelessly, power from an external electronic device through the charging antenna module 540 and may charge the battery 189. According to an embodiment, the wearable electronic device 101 may be configured of a main frame (or main body part) (e.g., the main frame 240 of FIG. 2 or FIG. 3) and support frames (or leg members) (e.g., the first support frame 260 and/or the second support frame 270 of FIG. 2 or FIG. 3). According to an embodiment, components of the wearable electronic device 101 may be disposed in the main frame 240 and/or the support frames 260 and 270.

According to an embodiment, the processor 120 may execute a program stored in the memory 130, to control at least one other constituent element (e.g., a hardware component or a software constituent element), and may perform various data processing or computation. According to an embodiment, the processor 120 may provide an augmented reality service to a user. The processor 120 may, through the display module 160, output at least one virtual object such that at least one virtual object is viewed as added to a real space corresponding to a field of view of a user wearing the wearable electronic device 101.

According to an embodiment, the memory 130 may correspond to the memory 130 of FIG. 1. According to an embodiment, the memory 130 may store various data used by at least one component (e.g., the processor 120 or the sensor module 176) of the wearable electronic device 101. The data may include, for example, software (e.g., the program 140 of FIG. 1) and input data or output data for a command related thereto. The memory 130 may include a volatile memory (not illustrated) or a non-volatile memory (not illustrated).

According to an embodiment, the memory 130 may store instructions that, when executed individually and/or collectively by the processor 120 (e.g., the processor 120 of FIG. 1), cause the electronic device 101 to perform an operation. The instructions may be stored, on the memory 130, as software (e.g., the program 140 of FIG. 1), and may be executable by the processor 120.

According to an embodiment, the instructions may, when executed by at least one processor, cause the wearable electronic device 101 (or the electronic device 101) to recognize an input device in a virtual environment. According to an embodiment, the instructions may, when executed by at least one processor, cause the wearable electronic device 101 (or the electronic device 101) to determine a virtual space for determining a target virtual object based on an attribute of the input device. According to an embodiment, the instructions may, when executed by at least one processor, cause the wearable electronic device 101 (or the electronic device 101) to determine a target virtual object based on the virtual space. According to an embodiment, the instructions may, when executed by at least one processor, cause the wearable electronic device 101 (or the electronic device 101) to generate affordances corresponding to the respective target virtual objects. According to an embodiment, the instructions may, when executed by at least one processor, cause the wearable electronic device 101 (or the electronic device 101) to display the affordances according to a designated arrangement mode.

The display module 160 may visually provide information to an outside (e.g., a user) of the wearable electronic device 101. The display module 160 may include, for example, a display, a hologram device, or a projector, and a control circuit for controlling the device. According to an embodiment, the display module 160 of the wearable electronic device 101 may include at least one glass (e.g., the first glass 220 of FIG. 2 or FIG. 3) and/or the second glass 230. According to an embodiment, the first glass 220 may include at least a part of the first display module 551, and the second glass 230 may include at least a part of the second display module 553. For example, the first display module 551 and/or the second display module 553 may each include a display panel. The display panel may be configured of a transparent element such that a user recognizes a real space through the display module 160. The display module 160 may display at least one virtual object on at least a part of the display panel such that a user wearing the wearable electronic device 101 views that a virtual object is added to a real space.

For example, a field of view of a user may include an angle and/or a range in which a user recognizes an object. According to an embodiment, the display module 160 may include the first display module 551 corresponding to a left eye among both eyes of a user and/or the second display module 553 corresponding to a right eye. According to an embodiment, the processor 120 may load setting information related to performance of the display module 160 (e.g., image resolution (or display resolution), frame rate, a size of a display area, and/or sharpness) from the memory 130, and may adjust performance of the display module 160 based on the setting information.

According to an embodiment, for each display panel included in the display module 160, setting information may be determined individually. For example, a first display panel corresponding to a left eye may be set based on first setting information, and a second display panel corresponding to a right eye may be set based on second setting information. According to an embodiment, the setting information may set at least a part of one display panel included in the display module 160 differently. For example, the wearable electronic device 101 may set at least one among image resolution (or display resolution), frame rate, and/or sharpness for the display module 160 differently. According to an embodiment, the wearable electronic device 101 may reduce power consumption by changing a setting of the display module 160 at least partially.

According to an embodiment, the audio module 170 may, based on control of the processor 120, convert sound into an electrical signal, or conversely convert an electrical signal into sound. For example, the audio module 170 may include the speakers 332-1 and 332-2 of FIG. 3 and/or the microphones (e.g., the first microphone 341-1, the second microphone 341-2, and the third microphone 341-3) of FIG. 3.

The sensor module 176 may detect an operating state (e.g., power or temperature) of the wearable electronic device 101, or an external environment state (e.g., a user state), and may generate an electrical signal or a data value corresponding to the detected state. According to an embodiment, the sensor module 176 of the wearable electronic device 101 may include a proximity sensor 521, an illuminance sensor 522, and/or a gyro sensor 523.

According to an embodiment, the proximity sensor 521 may detect an object adjacent to the wearable electronic device 101.

According to an embodiment, the illuminance sensor 522 may measure a brightness level around the wearable electronic device 101. According to an embodiment, the processor 120 may, by using the illuminance sensor 522, check a brightness level around the wearable electronic device 101, and may change brightness-related setting information of the display module 160 based on the brightness level. For example, when ambient brightness is brighter than preset brightness, the processor 120 may set a brightness level of the display module 160 higher such that visibility of a user is increased.

According to an embodiment, the gyro sensor 523 may detect a posture and a position of the wearable electronic device 101. For example, the gyro sensor 523 may detect whether the wearable electronic device 101 is correctly worn on a head of a user. For example, the gyro sensor 523 may detect movement of the wearable electronic device 101 or a user wearing the wearable electronic device 101. For example, the gyro sensor 523 may detect movement of the support frames (e.g., the first support frame 260 and/or the second support frame 270 of FIG. 2 or FIG. 3) of the wearable electronic device 101.

According to an embodiment, the sensor module 176 of the wearable electronic device 101 may include an acceleration sensor and/or a Hall sensor. According to an embodiment, the acceleration sensor may detect movement of the support frames (e.g., the first support frame 260 and/or the second support frame 270 of FIG. 2 or FIG. 3) of the wearable electronic device 101. According to an embodiment, the Hall sensor may detect a change of a magnetic field, and may detect movement of the support frames (e.g., the first support frame 260 and/or the second support frame 270 of FIG. 2 or FIG. 3) of the wearable electronic device 101.

The communication module 190 may support establishment of a direct (e.g., wired) communication channel or a wireless communication channel between the wearable electronic device 101 and an external electronic device (e.g., another electronic device, a server, and/or a charging device), and communication performance through the established communication channel. The communication module 190 may include one or more communication processors which are operated independently of the processor 120 (e.g., an application processor), and which support direct (e.g., wired) communication or wireless communication. According to an embodiment, the wearable electronic device 101 may, through the communication module 190 (e.g., a wireless communication circuit), perform wireless communication with another electronic device (e.g., a smart phone or a wearable electronic device). For example, the wearable electronic device 101 may perform wireless communication with another electronic device, and may exchange commands and/or data with each other. According to an embodiment, the wearable electronic device 101 may, through the communication module 190, be controlled at least partially by another external electronic device. For example, under control of another external electronic device, at least one function of the wearable electronic device 101 may be performed. According to an embodiment, the wearable electronic device 101 may, through the camera module 180, transmit, through the communication module 190, to an external device (e.g., another electronic device and/or the server), object information (e.g., an image) positioned in a real reality space, distance information with an object, gaze information of a user, and/or gesture information of a user.

The antenna module 197 may transmit a signal or power to an outside (e.g., an external electronic device) or may receive a signal or power from an outside. According to an embodiment, the antenna module 197 may include an antenna including a radiator formed of a conductor or a conductive pattern formed on a substrate (e.g., PCB). According to an embodiment, the antenna module 197 may include a plurality of antennas (e.g., an array antenna). A signal or power may be transmitted or received between the communication module 190 and an external electronic device through the selected at least one antenna. According to an embodiment, in addition to the radiator, another component (e.g., a radio frequency integrated circuit (RFIC)) may be additionally formed as a part of the antenna module 197.

According to an embodiment, the wearable electronic device 101 may, based on control of another electronic device connected wirelessly and/or wiredly, change at least a part of a setting of the display panel. According to an embodiment, the wearable electronic device 101 may transmit, to another electronic device, dominant eye/auxiliary eye related information (e.g., distance information with an object positioned in a real space, eye tracking information of a user, gesture information of a user) obtained through a camera (e.g., the camera module 180) of the wearable electronic device 101.

According to an embodiment, another electronic device may, based on dominant eye/auxiliary eye related information received from the wearable electronic device 101, transmit, to the wearable electronic device 101, setting information of the display panel included in a glass (e.g., the first glass 220 and/or the second glass 230) corresponding to a detected dominant eye or auxiliary eye. According to an embodiment, the wearable electronic device 101 may, based on setting information of the display panel received from another electronic device, change at least a part of a setting of the display panel. For example, a setting of the display panel may be changed to lower quality of the display panel, and at least a part of the setting may be changed to an extent that a user may not perceive. According to an embodiment, the wearable electronic device 101 may reduce image resolution of the display panel, may reduce frame rate, or may adjust a size and a position of a display area of the display panel.

The camera module 180 may photograph a still image and a moving image. According to an embodiment, the camera module 180 may include one or more lenses, image sensors, image signal processors, or flashes. According to an embodiment, the camera module 180 of the wearable electronic device 101 may include a gesture camera 511, an eye tracking camera 513, a distance measurement camera (depth camera) 515, and/or a red green blue (RGB) camera 517.

According to an embodiment, the gesture camera 511 may detect movement of a user. The recognition cameras 311-1 and 311-2 of FIG. 3 may include the gesture camera 511. For example, the gesture camera 511 may be disposed in the wearable electronic device 101 by at least one or more, and may detect hand movement of a user within a preset distance. The gesture camera 511 may include a simultaneous localization and mapping camera (SLAM camera) for recognizing information (e.g., a position and/or a direction) related to a surrounding space of the wearable electronic device 101. A gesture recognition area of the gesture camera 511 may be set based on a capturable range of the gesture camera 511.

According to an embodiment, the eye tracking camera 513 (e.g., the first eye tracking camera 312-1 and the second eye tracking camera 312-2 of FIG. 3) may track movement of a left eye and a right eye of a user. According to an embodiment, the processor 120 may, by using the eye tracking camera 513, check a gaze direction of a left eye and a gaze direction of a right eye. For example, the eye tracking camera 513 may include the first eye tracking camera 312-1 for checking a gaze direction of a left eye, and the second eye tracking camera 312-2 for checking a gaze direction of a right eye. According to an embodiment, the processor 120 may determine a dominant eye and an auxiliary eye based on a gaze direction of a left eye and a gaze direction of a right eye.

According to an embodiment, the distance measurement camera 515 may measure a distance with an object positioned in a front of the wearable electronic device 101. The photographing camera 280 of FIG. 2 or FIG. 3 may include the distance measurement camera 515. The distance measurement camera 515 may include a time of flight (TOF) camera and/or a depth camera. According to an embodiment, the distance measurement camera 515 may photograph a front direction of the wearable electronic device 101, and the eye tracking camera 513 may photograph an opposite direction to a photographing direction of the distance measurement camera 515.

According to an embodiment, the wearable electronic device 101 may, by using the distance measurement camera 515, measure a distance with an object, and may change a setting of the display panel when the distance is equal to or greater than a threshold value. For example, the wearable electronic device 101 may maintain display performance of the display panel when a distance with an object is close, such that the distance is equal to or less than the threshold value. According to an embodiment, the wearable electronic device 101 may recognize one among objects positioned in a gaze direction (e.g., FOV) which a user is viewing, by the eye tracking camera 513, and may calculate depth of a distance with the object through a depth camera, or may measure a distance with the object through a time of flight (TOF) camera.

According to an embodiment, the red green blue (RGB) camera 517 may detect colorrelated information of an object and distance information with an object. According to an embodiment, the wearable electronic device 101 may integrate the distance measurement camera (depth camera) 515 and the red green blue (RGB) camera 517, to include one type of camera. For example, the photographing camera 280 of FIG. 2 or FIG. 3 may include the distance measurement camera 515 and/or the RGB camera 517.

According to an embodiment, the gesture camera 511, the eye tracking camera 513, the distance measurement camera (depth camera) 515, and/or the RGB camera 517 included in the camera module 180 may each be included in the wearable electronic device 101, or a part may be implemented as a camera of an integrated form. For example, the distance measurement camera 515 and the RGB camera 517 may be implemented as one integrated camera.

According to an embodiment, the power management module 188 may manage power supplied to the wearable electronic device 101. The power management module 188 may include a plurality of power management modules (e.g., a first power management module 531, a second power management module 532). At least a part among the first power management module 531 or the second power management module 532 may be directly connected to the processor 120 to supply power. At least a part among the first power management module 531 or the second power management module 532 may receive power from an external electronic device through a connection terminal 530 (e.g., TYPE-C) to charge the battery 189 or to supply power to other components of the wearable electronic device 101. According to an embodiment, the wearable electronic device 101 may, through a wireless charging method, receive power from an external electronic device to charge the battery 188. According to an embodiment, the wearable electronic device 101 may wirelessly receive external power from the charging antenna module 540.

According to an embodiment, the power management module 188 may be electrically connected with components of the wearable electronic device 101 (e.g., the memory 130, the display module 160, the audio module 170, the sensor module 176, the camera module 180, and/or the communication module 190). For example, the power management module 188 may, based on control of the processor 120, provide power of the battery 189 to components of the wearable electronic device 101. According to an embodiment, the wearable electronic device 101 may, through the first power management module 531, be supplied with power from a first battery 533, and, through the second power management module 532, be supplied with power from a second battery 534. According to an embodiment, the processor 120 may, by at least partially changing a setting of the display module 160 based on information obtained by using the at least one camera 511, 513, 515, and 517 included in the camera module 180, manage consumed power.

The battery 189 may supply power to at least one constituent element of the wearable electronic device 101. According to an embodiment, the battery 189 may include, for example, a non-rechargeable primary battery, a rechargeable secondary battery, or a fuel cell. According to an embodiment, the battery 189 may, under control of the power management module 188, be charged by being supplied with power or be discharged by providing power. According to an embodiment, the battery 189 may include a plurality of batteries (e.g., the first battery 533, the second battery 534). For example, the plurality of batteries (e.g., the first battery 533, the second battery 534) may be disposed in the main frame (e.g., the main frame 240 of FIG. 2 or FIG. 3) and the support frame (e.g., the first support frame 260 and/or the second support frame 270 of FIG. 2 or FIG. 3). According to an embodiment, the first battery 533 may be disposed in the first support frame 260, and the second battery 534 may be disposed in the second support frame 270.

The charging antenna module 540 may receive power from an outside of the wearable electronic device 101. According to an embodiment, the charging antenna module 540 may include at least a part among a configuration and/or a function of the antenna module 197. According to an embodiment, the charging antenna module 540 may include a loop-type antenna and/or a coil-type antenna. According to an embodiment, the charging antenna module 540 may include a plurality of antennas (e.g., a first antenna 541, a second antenna 542). For example, the plurality of antennas (e.g., the first antenna 541, the second antenna 542) may receive a magnetic field and/or an electromagnetic field from an outside, and may deliver, to the power management module 188 and/or the battery 189, a current generated through magnetic induction and/or magnetic resonance due to an external magnetic field and/or an electromagnetic field. According to an embodiment, the plurality of antennas (e.g., the first antenna 541, the second antenna 542) may be disposed in the main frame (e.g., the main frame 240 of FIG. 2 or FIG. 3) and the support frame (e.g., the first support frame 260 and/or the second support frame 270 of FIG. 2 or FIG. 3). According to an embodiment, the first antenna 541 may be disposed in the first support frame 260, and the second antenna 542 may be disposed in the second support frame 270.

According to an embodiment of the present disclosure, the processor 120 may perform an application-layer processing function required by a user of the wearable electronic device 101. According to an embodiment, the processor 120 may provide control and commands of functions for various blocks of the wearable electronic device 101. According to an embodiment, the processor 120 may perform operation or data processing regarding control and/or communication of each component of the wearable electronic device 101. For example, the processor 120 may include at least a part among a configuration and/or a function of the processor 120 of FIG. 1. According to an embodiment, the processor 120 may be operatively connected with components of the wearable electronic device 101. According to an embodiment, the processor 120 may load(load) a command or data received from other components of the wearable electronic device 101 to the memory 130, process a command or data stored in the memory 130, and store result data.

According to an embodiment, the processor 120 may include processing circuitry and/or executable program elements. According to an embodiment, the processor 120 may, based on the processing circuitry and/or the executable program elements, control (or process) an overall operation related to supporting a function of the electronic device 101.

According to an embodiment, the processor 120 may perform an operation of recognizing an input device in a virtual environment. According to an embodiment, the processor 120 may perform an operation of determining a virtual space for determining a target virtual object based on an attribute of the input device. According to an embodiment, the processor 120 may perform an operation of determining a target virtual object based on the virtual space. According to an embodiment, the processor 120 may perform an operation of generating affordances corresponding to the target virtual object, respectively. According to an embodiment, the processor 120 may perform an operation of displaying the affordances according to a designated arrangement mode.

According to an embodiment, the processor 120 may perform an operation of displaying, through a display, an execution screen for a virtual environment including a plurality of virtual objects. According to an embodiment, the processor 120 may perform an operation of recognizing the input device while displaying the execution screen. According to an embodiment, the processor 120 may perform an operation of recognizing an indicator corresponding to an input device based on recognizing the input device. According to an embodiment, the processor 120 may perform an operation of determining an attribute of the input device based on recognizing the indicator.

According to an embodiment, the processor 120 may perform an operation of calculating a virtual space corresponding to an attribute of the input device based on the indicator. According to an embodiment, the processor 120 may perform an operation of determining a target virtual object included in the virtual space among a plurality of virtual objects of an execution screen based on the virtual space. According to an embodiment, the processor 120 may perform an operation of generating an affordance based on the target virtual object included in the virtual space. According to an embodiment, the processor 120 may perform an operation of displaying the affordance in association with the target virtual object.

According to an embodiment, a detailed operation of the processor 120 of the electronic device 101 is described with reference to drawings described later.

According to an embodiment, the processor 120 may be a system semiconductor in charge of various functions of the electronic device 101. According to an embodiment, the processor 120 may be configured in a system on chip (SoC) form, to integrate various semiconductor technologies into one, and may include a technology-intensive semiconductor chip implementing system blocks as one chip.

According to an embodiment, the processor 120 may include an application processor (AP). According to an embodiment, the processor 120 may include components such as a graphics processing unit (GPU), an image signal processor (ISP), a central processing unit (CPU), a neural processing unit (NPU), a digital signal processor (DSP), a modem, connectivity, and/or security. According to an embodiment, the processor 120 may operate individually and/or collectively.

According to an embodiment, operations performed in the processor 120 may be implemented by executing instructions stored in a storage medium (or a computer program product or a storage medium). For example, the storage medium may include a non-transitory computer readable storage medium recording a program for executing various operations performed in the processor 120.

Embodiments described in the present disclosure may be implemented in a storage medium readable by a computer or a similar device by using software, hardware, or a combination of the software and the hardware. According to hardware implementations, the operations described in an embodiment may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for performing other functions.

In an embodiment, a computer readable storage medium (or a computer program product or a storage medium) recording a program for allowing the electronic device 101 to perform (or execute) various operations is provided.

The operations may include an operation of recognizing an input device in a virtual environment, an operation of determining a virtual space for determining a target virtual object based on an attribute of the input device, an operation of determining the target virtual object based on the virtual space, an operation of generating an affordance corresponding to each target virtual object, and an operation of displaying the affordance according to a designated arrangement mode.

The operations may include an operation of displaying, through a display, an execution screen for a virtual environment including a plurality of virtual objects, an operation of recognizing the input device while displaying the execution screen, an operation of recognizing an indicator corresponding to the input device based on recognizing the input device, an operation of determining an attribute of the input device based on recognizing the indicator, an operation of calculating a virtual space corresponding to an attribute of the input device based on the indicator, an operation of determining a target virtual object included in the virtual space among a plurality of virtual objects of the execution screen based on the virtual space, an operation of generating an affordance based on the target virtual object included in the virtual space, and an operation of displaying the affordance in association with the target virtual object.

The electronic devices 101 and 201 according to an embodiment of the present disclosure may include the display 160, the memory 130, and processing circuitry, and may include at least one processor 120 operatively connected to the display 160 and the memory 130. According to an embodiment, the memory 130 may store instructions causing the electronic devices 101 and 201 to perform operations when executed individually and/or collectively(individually and/or collectively) by at least one processor 120.

According to an embodiment, the instructions may, when executed by the at least one processor 120, cause the electronic device to recognize an input device 720 in virtual environments 400 and 700. According to an embodiment, the instructions may, when executed by the at least one processor 120, cause the electronic device to determine a virtual space 740 for determining a target virtual object 750 based on an attribute of the input device 720. According to an embodiment, the instructions may, when executed by the at least one processor 120, cause the electronic device to determine the target virtual object 750 based on the virtual space 740. According to an embodiment, the instructions may, when executed by the at least one processor 120, cause the electronic device to generate an affordance 760 corresponding to each target virtual object 750. According to an embodiment, the instructions may, when executed by the at least one processor 120, cause the electronic device to display the affordance 760 according to a designated arrangement mode.

According to an embodiment, the instructions may, when executed by the at least one processor 120, cause the electronic device to display an execution screen for the virtual environment including a plurality of virtual objects through the display. According to an embodiment, the instructions may, when executed by the at least one processor 120, cause the electronic device to recognize the input device while displaying the execution screen. According to an embodiment, the instructions may, when executed by the at least one processor 120, cause the electronic device to recognize an indicator 900 corresponding to the input device based on recognizing the input device.

According to an embodiment, the input device may include a device supporting user input for manipulating a virtual object in the virtual environment.

According to an embodiment, the affordance may include a designated object supporting to enable a direct selection for the target virtual object among the plurality of virtual objects.

According to an embodiment, the instructions may, when executed by the at least one processor 120, cause the electronic device to determine an attribute of the input device, and to calculate a virtual space corresponding to an attribute of the input device based on the indicator.

According to an embodiment, the virtual space may include a virtual sphere formed with a resolution value based on an attribute of the input device as a diameter, centered on the indicator.

According to an embodiment, the resolution value may include a first resolution value predefined in the input device. According to an embodiment, the resolution value may include a second resolution value related to user noise generated by a user using the input device.

According to an embodiment, the instructions may, when executed by the at least one processor 120, cause the electronic device to calculate the resolution value based on the first resolution value and the second resolution value.

According to an embodiment, the instructions may, when executed by the at least one processor 120, cause the electronic device to map a center of gravity of the virtual space based on the indicator, and to form the virtual space having the diameter based on the center of gravity.

According to an embodiment, the instructions may, when executed by the at least one processor 120, cause the electronic device to determine a size and/or a spacing of the affordance based on the resolution value.

According to an embodiment, the instructions may, when executed by the at least one processor 120, cause the electronic device, based on the virtual space, to determine, among the plurality of virtual objects of the execution screen, the target virtual object included in the virtual space.

According to an embodiment, the instructions may, when executed by the at least one processor 120, cause the electronic device to determine whether the target virtual object included in the virtual space satisfies a designated condition. According to an embodiment, the instructions may, when executed by the at least one processor 120, cause the electronic device, when the target virtual object satisfies the designated condition, to enter a guide generation mode for providing the affordance.

According to an embodiment, the designated condition may include a condition in which the target virtual object is a plurality of target virtual objects of at least two target virtual objects, and a distance between centers of gravity of each of the plurality of target virtual objects is equal to or less than a designated proximity distance.

According to an embodiment, the instructions may, when executed by the at least one processor 120, cause the electronic device to determine whether a plurality of target virtual objects is included in the virtual space. According to an embodiment, the instructions may, when executed by the at least one processor 120, cause the electronic device, when the plurality of target virtual objects is included, to determine a center of gravity corresponding to each of the plurality of target virtual objects. According to an embodiment, the instructions may, when executed by the at least one processor 120, cause the electronic device to determine distances between centers of gravity of each of the plurality of target virtual objects. According to an embodiment, the instructions may, when executed by the at least one processor 120, cause the electronic device to compare the distances between the centers of gravity with the designated proximity distance. According to an embodiment, the instructions may, when executed by the at least one processor 120, cause the electronic device, when at least one distance among the distances between the centers of gravity is equal to or less than the designated proximity distance, to enter the guide generation mode.

According to an embodiment, the designated arrangement mode may include a first mode of providing affordances by arranging the affordances in a space contacting a surface of the virtual space and the target virtual object. According to an embodiment, the designated arrangement mode may include a second mode of providing affordances by arranging the affordances as a list corresponding to the respective target virtual objects from an outside of the virtual space.

According to an embodiment, the instructions may, when executed by the at least one processor 120, cause the electronic device, when the target virtual object spans the virtual space, to provide an object-based affordance based on a space where the target virtual object contacts the surface of the virtual space. According to an embodiment, the instructions may, when executed by the at least one processor 120, cause the electronic device, when the target virtual object is inside the virtual space, to provide the object-based affordance based on a space on an extension line from the target virtual object to the surface of the virtual space. According to an embodiment, the instructions may, when executed by the at least one processor 120, cause the electronic device, when an interval between the target virtual objects is smaller than a radius of the virtual space, to provide a list-based affordance in an outer peripheral space of the virtual space.

Hereinafter, an operation method of the electronic device 101 of various embodiments is described in detail. The operations performed by the electronic device 101, according to various embodiments, may be executed by the processor 120, which includes various processing circuitry and/or executable program elements of the electronic device 101. According to an embodiment, operations performed in the electronic device 101 may be stored as instructions in the memory 130, and may be performed (or executed) individually and/or collectively by the processor 120.

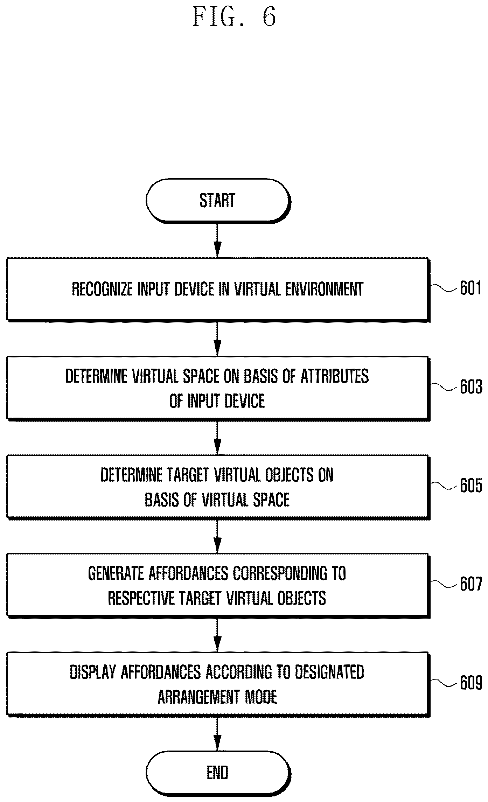

FIG. 6 is a flowchart illustrating an operation method of the electronic device according to an embodiment of the present disclosure.

According to an embodiment, FIG. 6 may indicate an example of an operation in which the electronic device 101 according to an embodiment may support selection of a virtual object in a virtual environment without rearrangement or enlarged display of the virtual object, such that immersion of user experience is not interrupted.

An operation method supported in the electronic device 101 according to an embodiment of the present disclosure may be performed, for example, according to the flowchart illustrated in FIG. 6. The flowchart illustrated in FIG. 6 is an example according to an embodiment of an operation of the electronic device 101, and an order of at least some operations may be changed or performed in parallel, performed as independent operations, or at least some other operations may be performed complementarily to at least some operations. According to an embodiment of the present disclosure, operations 601 to 609 may be performed in at least one processor 120 of the electronic device 101 (e.g., the processor 120 of FIG. 1 or FIG. 5).

As illustrated in FIG. 6, an operation method performed by the electronic device 101 according to an embodiment may include an operation 601 of recognizing an input device in a virtual environment, an operation 603 of determining a virtual space for determining a target virtual object based on an attribute of the input device, an operation 605 of determining the target virtual object based on the virtual space, an operation 607 of generating an affordance corresponding to each target virtual object, and an operation 609 of displaying the affordance according to the designated arrangement mode.

With reference to FIG. 6, in operation 601, the processor 120 of the electronic device 101 may perform an operation of recognizing an input device in a virtual environment. According to an embodiment, the processor 120 may, through a user's display (e.g., the display module 160 of FIG. 1 or FIG. 5), display the execution screen (e.g., an AR screen or a VR screen) corresponding to the virtual environment. According to an embodiment, the processor 120 may, through the execution screen, provide content overlaid on at least a part of the real world (or the actual world) or a virtual world. According to an embodiment, the content may include a plurality of virtual objects shown on the user's field of view. In an embodiment, the content may be that graphic data corresponding to an application executed through the display of the electronic device 101 is provided as a virtual object.

According to an embodiment, the processor 120 may recognize an input device while displaying the execution screen corresponding to the virtual environment. In an embodiment, the input device may include various devices (or means) for supporting a user input for manipulating content (e.g., a virtual object) in the virtual environment. According to an embodiment, the input device is connected with the electronic device 101 through a direct (e.g., wired) communication channel or wireless communication, and the input device connected by the processor 120 may be recognized. According to an embodiment, the input device enters into the execution screen displayed through the display, and may be recognized (e.g., vision-based recognition) by the processor 120.

According to an embodiment, the input device may include a hardware device such as a mouse, a smart pen (or an electronic pen), a controller, and a wearable device (e.g., a ring (e.g., a smart ring) and/or a watch) connected with the electronic device 101 in a designated communication scheme. According to an embodiment, the input device may include an object (or an object device) such as a user hand (or a finger), a stylus pen, a wearable device (e.g., a smart ring and/or a watch), and/or a glove recognized through the execution screen in the virtual environment. According to an embodiment, the input device may include a plurality of cameras (e.g., the eye tracking cameras 312-1 and 312-2 of FIG. 3). For example, the electronic device 101 may, by using the plurality of cameras, track a user gaze (eye tracking), and may allow a position and/or a movement of the user gaze to be recognized as an indicator corresponding to the input device.

In operation 603, the processor 120 may perform an operation of determining the virtual space for determining the target virtual object based on an attribute of the input device. According to an embodiment, the processor 120 may, based on recognizing the input device, determine an attribute (or a type) corresponding to the input device. According to an embodiment, the processor 120 may determine whether the recognized input device corresponds to a user hand, a wearable device, a controller, a glove, a smart pen, a stylus pen, a mouse, and/or a camera for eye tracking. According to an embodiment, the processor 120 may determine the attribute of the input device, and may determine a size (or a range) of the virtual space (or a virtual sphere or a resolution sphere) based on the attribute of the input device. According to an embodiment, the virtual space may include a virtual sphere (or a resolution sphere) formed with a resolution value based on the attribute of the input device as a diameter, centered on the input device (e.g., the indicator of the input device). According to an embodiment, the virtual space may be a space virtually (or internally) generated for determining, among a plurality of virtual objects on the execution screen, the target virtual object that becomes a target of user selection based on a position of the input device. For example, the virtual space may not be displayed on the execution screen.

In operation 605, the processor 120 may perform an operation of determining the target virtual object based on the virtual space. According to an embodiment, the processor 120 may, among the plurality of virtual objects on the execution screen, extract (or infer) a virtual object included in the virtual space formed based on the input device, as the target virtual object. According to an embodiment, the target virtual object may include a plurality of virtual objects (e.g., at least two virtual objects).

In operation 607, the processor 120 may perform an operation of generating an affordance corresponding to each target virtual object. According to an embodiment, the processor 120 may, based on determining the target virtual object based on the virtual space, generate an affordance corresponding to each target virtual object. According to an embodiment, the affordance may include a designated object (e.g., a handle, an icon, an image, or a list) supporting to enable a direct selection for the target virtual object, among the plurality of virtual objects on the execution screen. According to an embodiment, the affordance may be provided as graphic data.

In operation 609, the processor 120 may perform an operation of displaying the affordance according to the designated arrangement mode. According to an embodiment, the designated arrangement mode may include an object-based arrangement mode (e.g., a first mode) providing affordances by arranging the affordances in a space contacting the target virtual object and the surface of the virtual space, and a list-based arrangement mode (e.g., a second mode) providing affordances by arranging the affordances as a list corresponding to the respective target virtual objects from an outside of the virtual space. According to an embodiment, operation examples regarding providing the affordance according to the designated arrangement mode are described with reference to drawings described later.

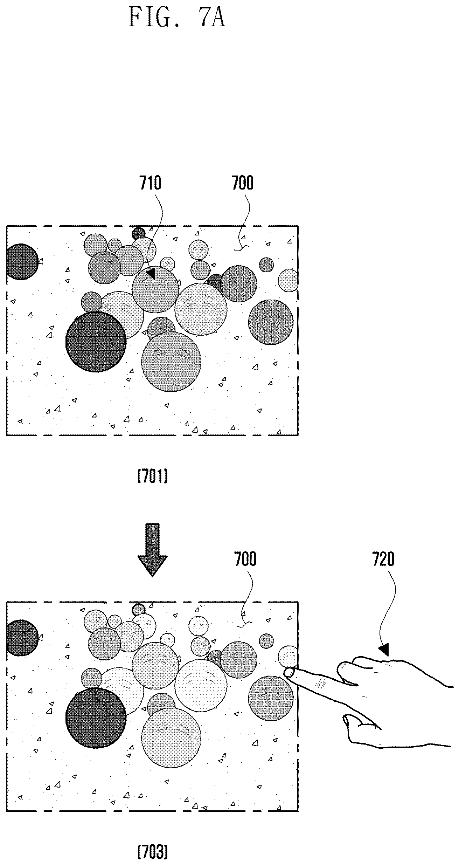

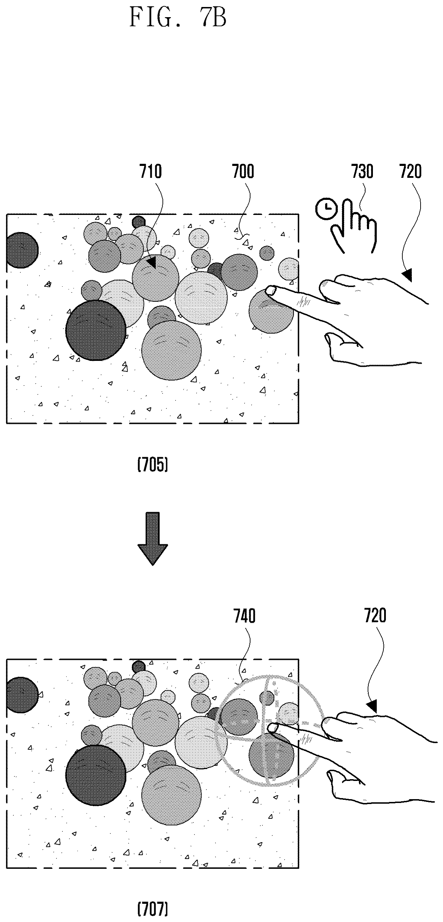

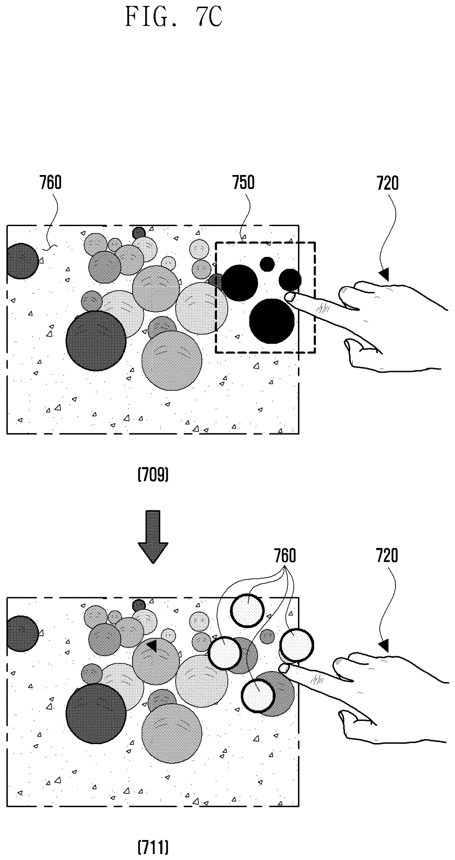

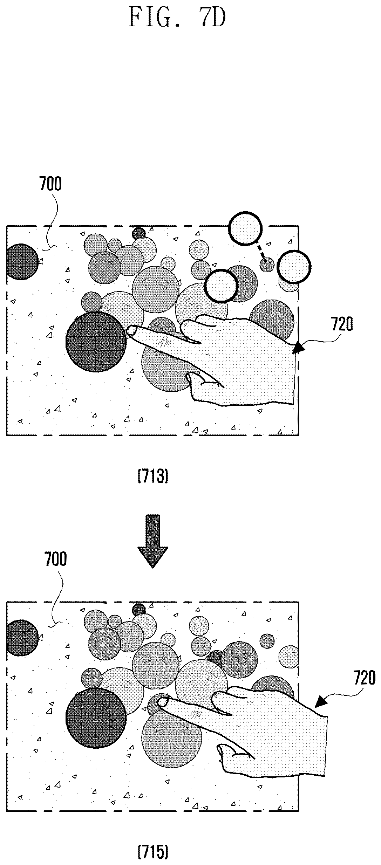

FIGS. 7A, 7B, 7C, and 7D are diagrams illustrating operation examples of providing an affordance in association with a virtual object in the electronic device according to an embodiment of the present disclosure.

According to an embodiment, FIGS. 7A, 7B, 7C, and 7D may indicate examples of an operation of providing an affordance supporting selection of a virtual object in association with a virtual object of a virtual environment in the electronic device 101 according to an embodiment.

With reference to FIGS. 7A to 7D, the example screen <701> may indicate a state in which the electronic device 101 displays the virtual environment 700 (or the execution screen 700 of the virtual environment) through the display (e.g., the display module 160 of FIG. 1 or FIG. 5). As illustrated in the example screen <701>, the electronic device 101 may display a plurality of virtual objects 710 through the virtual environment 700.

The example screen <703> and the example screen <705> may indicate examples of a situation in which the input device 720 is recognized while displaying the virtual environment 700. According to an embodiment, in FIGS. 7B to 7D, the input device 720 is an example of a user hand (e.g., a finger), and the electronic device 101 may recognize the user hand 720 entering the virtual environment 700.

The example screen <705> may indicate a state in which the input device 720 recognized in the virtual environment 700 is stopped at a certain position on the virtual environment 700 for a designated certain time 730. For example, a user may move the input device 720 on a space (or a position) where a virtual object to be selected exists among the plurality of virtual objects 710 of the virtual environment 700, and may stop (or hold) the input device 720 for a designated certain time (e.g., about N seconds, about N seconds is a time to a degree capable of recognizing holding of the input device 720). According to an embodiment, the electronic device 101 may, when the input device 720 is stopped for the designated certain time in the virtual environment 700, detect as a trigger for starting an operation for selecting a virtual object based on the input device 720. According to an embodiment, the electronic device 101 may further perform an operation of determining an indicator (e.g., a pointing point) based on the input device 720.

The example screen <707> may indicate an example of forming the virtual space 740 based on the input device 720. According to an embodiment, the virtual space 740 may include a virtual sphere (or a resolution sphere) formed with a resolution value based on an attribute of the input device 720 as a diameter, centered on the input device 720 (e.g., the indicator of the input device 720). According to an embodiment, the virtual space 740 may be a space virtually (or internally) generated for determining a target virtual object (e.g., a virtual object 750) that becomes a target of user selection based on a position of the input device 720, among a plurality of virtual objects 710 on the virtual environment 700. For example, the virtual space 740 may not be displayed on the display (or the virtual environment 700). According to an embodiment, the electronic device 101 may search for a virtual object 750 included in the virtual space 740 around the input device 720 (e.g., the indicator of the input device 720), among the plurality of virtual objects 710.

The example screen <709> may indicate an example for the searched virtual object 750. For example, the electronic device 101 may, based on the virtual space 740, determine a target virtual object (e.g., a virtual object 750 included in the virtual space 740) to generate an affordance 760 (e.g., a handle), among the plurality of virtual objects 710, based on the input device 720 (e.g., the indicator of the input device 720). In an embodiment, in the example screen <709>, an example in which four virtual objects 750 are extracted (or inferred) as target virtual objects may be indicated for convenience of description. For example, in the example screen <709>, four virtual objects 750 are illustrated by being emphasized (e.g., highlighting) to be distinguished from other virtual objects, but this may be for convenience of description. For example, the target virtual object 750 may be provided to be distinguished by a graphical effect in consideration of user intuitiveness, or may be provided in a state without any change without a graphical effect.

The example screen <711> may indicate an example of providing an affordance 760 in association with the target virtual object 750. According to an embodiment, the electronic device 101 may provide the affordances 760 corresponding to the target virtual objects 750, by arranging the affordances 760 around the input device 720 (e.g., through the virtual space 740). For example, the electronic device 101 may generate and provide four affordances 760 such as a first affordance (or a first handle), a second affordance (or a second handle), a third affordance (or a third handle), and a fourth affordance (or a fourth handle), corresponding to four virtual objects 750 such as a first virtual object, a second virtual object, a third virtual object, and a fourth virtual object, respectively.

The example screen <713> may indicate an example in which the input device 720 (e.g., the indicator of the input device 720) moves (e.g., a position change). For example, a user may move the input device 720 to outside of a provided area of the affordance 760 (e.g., outside of the virtual space 740). For example, a user may move (or change) a position of the input device 720 to select another virtual object among the plurality of virtual objects 710, or to perform another operation using the input device 720, or to release the affordance 760.

The example screen <715> may indicate an example of a state in which the affordance 760 is removed and is not displayed on the virtual environment 700 according to movement of the input device 720. According to an embodiment, the electronic device 710 may, when detecting movement of the input device 720, immediately remove the affordance 760, or may maintain a state of displaying the affordance 760 for a designated certain time. According to an embodiment, the electronic device 101 may display the affordance 760 on the virtual environment 700 until another target virtual object is determined, and when another target virtual object is determined, the existing affordance 760 disappears, and another affordance may be generated and provided in association with the other target virtual object.

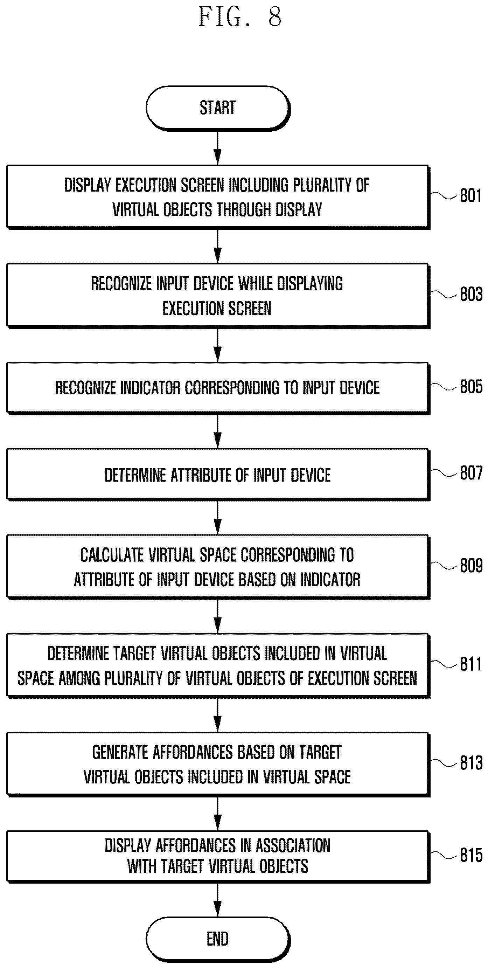

FIG. 8 is a flowchart illustrating an operation method of the electronic device according to an embodiment of the present disclosure.

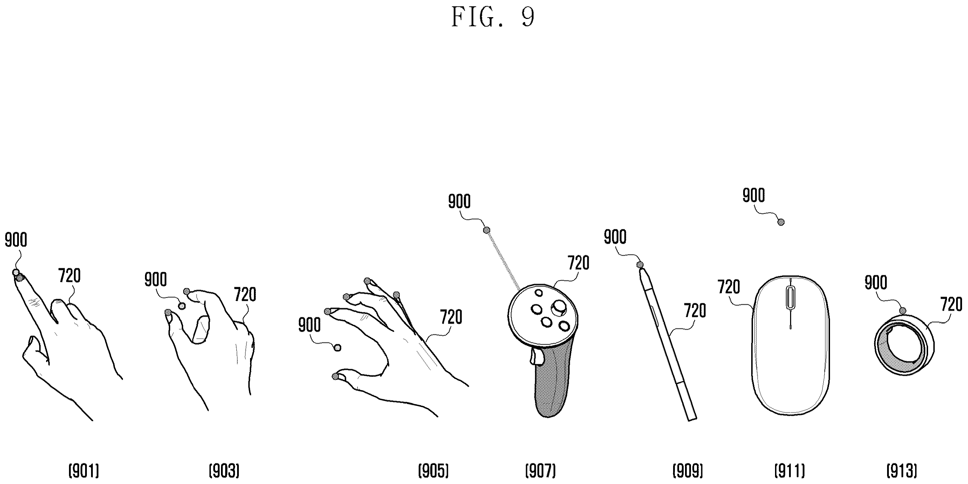

FIG. 9 is a diagram illustrating examples of an indicator for each of various input devices in the electronic device according to an embodiment of the present disclosure.

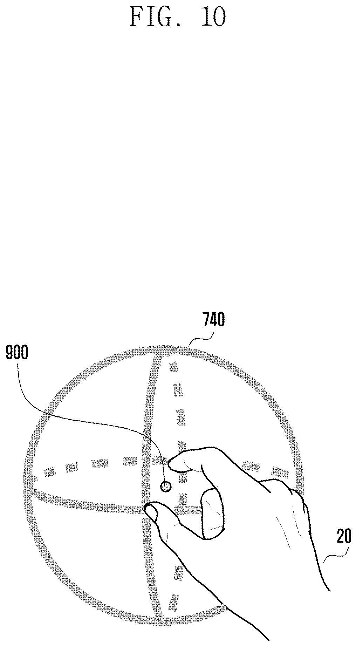

FIG. 10 is a diagram illustrating examples of a virtual space generated in the electronic device according to an embodiment of the present disclosure and an indicator corresponding to an input device.

According to an embodiment, FIG. 8 may indicate an example of an operation of providing an affordance supporting selection of a virtual object in association with a virtual object of a virtual environment in the electronic device 101 according to an embodiment.

An operation method supported in the electronic device 101 according to an embodiment of the present disclosure may be performed, for example, according to the flowchart illustrated in FIG. 8. The flowchart illustrated in FIG. 8 is an example according to an embodiment of an operation of the electronic device 101, and an order of at least some operations may be changed or performed in parallel, performed as independent operations, or at least some other operations may be performed complementarily to at least some operations. According to an embodiment of the present disclosure, operations 801 to 815 may be performed in at least one processor 120 of the electronic device 101 (e.g., the processor 120 of FIG. 1 or FIG. 5).

According to an embodiment, the operation described in FIG. 8 may be performed, for example, heuristically in combination with operations described in FIGS. 6 to 7D, or may be performed heuristically in combination with at least some other operations by replacing at least some operations of the described operations, or may be performed heuristically as a detailed operation of at least some operations of the described operations.

As illustrated in FIG. 8, an operation method performed by the electronic device 101 according to an embodiment may include an operation 801 of displaying, through a display, an execution screen for a virtual environment including a plurality of virtual objects, an operation 803 of recognizing an input device while displaying the execution screen, an operation 805 of recognizing an indicator corresponding to the input device, an operation 807 of determining an attribute of the input device, an operation 809 of calculating a virtual space corresponding to the attribute of the input device based on the indicator, an operation 811 of determining, among the plurality of virtual objects of the execution screen, a target virtual object included in the virtual space based on the virtual space, an operation 813 of generating an affordance based on the target virtual object included in the virtual space, and an operation 815 of displaying the affordance in association with the target virtual object.

With reference to FIG. 8, in operation 801, the processor 120 of the electronic device 101 may perform an operation of displaying, through the display, an execution screen for a virtual environment including a plurality of virtual objects. According to an embodiment, the processor 120 may, through a user's display (e.g., the display module 160 of FIG. 1 or FIG. 5), display the execution screen (e.g., an AR screen or a VR screen) corresponding to the virtual environment. According to an embodiment, the processor 120 may, through the execution screen, provide content (e.g., a plurality of virtual objects) overlaid on at least a part of the real world (or the actual world) or a virtual world. For example, the processor 120 may display, through the display, an execution screen including the plurality of virtual objects 710 as in the example screen <701> of FIG. 7A.

In operation 803, the processor 120 may perform an operation of recognizing an input device while displaying the execution screen. In an embodiment, the input device may include various devices (or means) for supporting a user input for controlling an operation of content (e.g., a virtual object) in the virtual environment. According to an embodiment, when detecting an operation (e.g., pointer movement) in the virtual environment by an input device connected with the electronic device 101, the processor 120 may recognize the input device connected with the electronic device 101. According to an embodiment, when detecting entry of the input device into the execution screen displayed through the display, the processor 120 may recognize the input device entered into the execution screen. An example thereof is illustrated in the example screen <703> of FIG. 7A and the example screen <705> of FIG. 7B.

In operation 805, the processor 120 may perform an operation of recognizing an indicator corresponding to an input device, based on recognizing the input device. According to an embodiment, the processor 120 may recognize (or determine) the indicator 900 based on an input type of the input device 720 and/or input coordinates of the input device 720. For example, the processor 120 may, for a vision-based input device (e.g., a user hand, a glove), cognitively infer the indicator 900 based on an input type, and may, for an input device having sensor-based coordinates (e.g., a controller, a smart pen, a mouse), recognize coordinates of the input device 720 as the indicator 900, and an eye tracking-based input device (e.g., the eye tracking cameras 312-1 and 312-2 of FIG. 3) may recognize a position and/or movement of a user's gaze as the indicator 900. According to an embodiment, in a case of the eye tracking-based input device, for example, a position and/or movement of a user's gaze may function as a mouse cursor, and may allow a position at which a user's gaze stays to be recognized as the indicator 900.

With reference to FIG. 9, examples 901, 903, and 905 may indicate a case in which the input device 720 is a user hand, example 907 may indicate a case in which the input device 720 is a controller, example 909 may indicate a case in which the input device 720 is a smart pen, example 911 may indicate a case in which the input device 720 is a mouse, and example 913 may indicate a case in which the input device 720 is a smart ring. According to an embodiment, in example 913, a ring-type wearable device (e.g., a smart ring) worn on a user's finger is illustrated and is described, but the present disclosure is not limited thereto. For example, an exemplary input device 720 of the present disclosure may include a bracelet-type wearable device or a watch-type wearable device.

In example 901, the processor 120 may vision-recognize an index finger as the input device 720, and may recognize a tip (e.g., fingertip) (or a position of a tip) of the index finger as the indicator 900. In example 903, the processor 120 may vision-recognize a thumb and an index finger as the input device 720, and may recognize a middle position between a first tip of the thumb and a second tip of the index finger as a position of the indicator 900. In example 905, the processor 120 may vision-recognize an entire finger as the input device 720, and may recognize a middle position between tips of five fingers as a position of the indicator 900.

In example 907, the processor 120 may recognize a controller connected with the electronic device 101 as the input device 720, and may recognize coordinates of a pointing point indicated by the controller as a position of the indicator 900. In example 909, the processor 120 may recognize a smart pen connected with the electronic device 101 as the input device 720, and may recognize coordinates of a pointing point indicated by the smart pen (or tip coordinates of the smart pen) as a position of the indicator 900. In example 911, the processor 120 may recognize a mouse connected with the electronic device 101 as the input device 720, and may recognize pointer coordinates of the mouse as a position of the indicator 900.

In example 913, the processor 120 may recognize a smart ring connected with the electronic device 101 as the input device 720, and may recognize a position of the smart ring as a position of the indicator 900. For example, the smart ring may include various components such as a motion sensor for detecting movement of the smart ring, a communication circuit for connecting with the electronic device 101, and a biometric sensor (e.g., a PPG sensor) capable of detecting a user's biometric information. According to an embodiment, when the input device 720 is a smart ring (or a smart bracelet or a smart watch), the electronic device 101 may be connected with the smart ring by designated wireless communication (e.g., short-range communication such as UWB communication or Bluetooth communication). According to an embodiment, the processor 120 may recognize (or search for) an accurate position of the smart ring through the designated wireless communication, and may designate a position of the smart ring as a position of the indicator 900.

According to an embodiment, the processor 120 may identify a position of the smart ring through vision recognition, or may determine a position of the smart ring by using motion sensing information obtained from the smart ring through wireless communication together with vision recognition. For example, the smart ring may include a light emitting device such as an LED, for facilitating vision recognition of the smart ring in the electronic device 101. According to an embodiment, the electronic device 101 may vision-recognize a light emitting point in the smart ring to determine an initial position of the smart ring, and thereafter, may receive motion sensing information from the smart ring to estimate movement from the initial position.

According to an embodiment, the processor 120 may use a position of the smart ring or a change thereof as a function of the indicator 900. For example, the processor 120 may perform an interaction for manipulating content (e.g., a virtual object) with the smart ring. For example, the processor 120 may determine a target virtual object based on the smart ring, and may provide affordances corresponding to the target virtual object according to a designated arrangement mode.

According to an embodiment, the processor 120 may real-time monitor a position of the smart ring or a position change (e.g., movement) of the smart ring based on designated wireless communication and/or vision recognition, and may, based on that the smart ring stays for a certain time on a virtual object, or based on that a selection signal (e.g., a user input using the smart ring (e.g., a designated touch input, a designated gesture input, or a muscle tension change input)) is received from the smart ring on a virtual object, select a virtual object at a position of the smart ring. According to an embodiment, the processor 120 may, in a state in which a virtual object is selected, detect a change (e.g., movement information based on movement or a designated gesture) of the smart ring, and may move the virtual object corresponding to the change of the smart ring. For example, the processor 120 may operate, in interoperation with the smart ring, to recognize a position of the smart ring as the indicator 900 and to manipulate a virtual object.

According to an embodiment, the processor 120 may use a position of a user's gaze or a change thereof as a function of the indicator 900. For example, the processor 120 may perform an interaction for manipulating content (e.g., a virtual object) based on a user's gaze. For example, the processor 120 may, based on at least one virtual object at a position of a user's gaze through eye tracking, determine a target virtual object, and may provide affordances corresponding to the respective target virtual objects according to a designated arrangement mode.

According to an embodiment, the processor 120 may, based on eye tracking, real-time monitor a position of a user's gaze or a position change (e.g., movement) of a user's gaze, and may, based on that a user's gaze stays for a certain time on a virtual object, or based on that a selection signal (e.g., detecting a user's eye blinking or a user input (e.g., a selection gesture input) on a virtual object positioned at a position of a user's gaze) is received (or detected) from eye tracking on a virtual object, select a virtual object at a position of a user's gaze. According to an embodiment, the processor 120 may, in a state in which a virtual object is selected, detect a change (e.g., movement information based on movement or a designated gesture) of a user's gaze, and may move the virtual object corresponding to the change of the user's gaze. For example, the processor 120 may operate, in interoperation with a user's gaze, to recognize a position of the user's gaze as the indicator 900 and to manipulate a virtual object.

In operation 807, the processor 120 may perform an operation of determining an attribute of an input device. According to an embodiment, the processor 120 may determine resolution (e.g., a predefined attribute (or capability) for the input device) according to a size (or a type) of the input device. In an embodiment, the resolution may indicate an ability to distinguish and select a specific virtual object by using the input device. According to an embodiment, the resolution may be different for each input device, and resolution for each input device (e.g., a resolution value) may be stored in advance in the memory 130 of the electronic device 101. According to an embodiment, with reference to drawings described later, resolution for each input device is described.

In operation 809, the processor 120 may perform an operation of calculating a virtual space corresponding to an attribute of the input device based on the indicator. According to an embodiment, the processor 120 may determine a size (or a range) of a virtual space (or a virtual sphere or a resolution sphere) based on an attribute (e.g., resolution) of the input device. According to an embodiment, the virtual space may include a virtual sphere (or a resolution sphere) formed with a resolution value of the input device as a diameter, centered on the input device (e.g., the indicator of the input device). An example thereof is illustrated in FIG. 10.

With reference to FIG. 10, the virtual space 740 may be a space virtually (or internally) generated to determine a target virtual object that is a target of a user selection, based on a position (e.g., the indicator 900) of the input device among a plurality of virtual objects on an execution screen. For example, the virtual space 740 may not be displayed on the execution screen. An example thereof is illustrated in the example screen <707> of FIG. 7B.

According to an embodiment, the virtual space 740 may indicate a space required to be secured to accurately select any one virtual object among a plurality of virtual objects of a virtual environment by using the input device 720. According to an embodiment, the virtual space 740 may be expressed as a virtual sphere shape having a designated distance (or length) from the indicator 900 of the input device 720 (e.g., a length having about 1/2 of a resolution value as a radius). According to an embodiment, with reference to drawings described later, the virtual space 740 differently expressed according to a resolution value for each input device is described.

In operation 811, the processor 120 may perform an operation of determining a target virtual object included in the virtual space among a plurality of virtual objects of the execution screen based on the virtual space. According to an embodiment, the processor 120 may, among the plurality of virtual objects on the execution screen, extract (or infer) a virtual object included in the virtual space formed based on the input device, as the target virtual object. According to an embodiment, the target virtual object may include a plurality of virtual objects (e.g., at least two virtual objects). An example thereof is illustrated in the example screen <709> of FIG. 7C.

In operation 813, the processor 120 may perform an operation of generating an affordance based on a target virtual object included in the virtual space. According to an embodiment, the processor 120 may, based on determining the target virtual object based on the virtual space, generate an affordance corresponding to each target virtual object. According to an embodiment, the affordance may include a designated object (e.g., a handle, an icon, an image, or a list) supporting to enable a direct selection for the target virtual object, among the plurality of virtual objects on the execution screen. According to an embodiment, the affordance may be provided as graphic data.

In operation 815, the processor 120 may perform an operation of displaying an affordance in association with a target virtual object. According to an embodiment, the processor 120 may, to support an easy selection of a target virtual object, provide affordances by distinguishing the affordances based on the virtual space corresponding to a secured space. An example thereof is illustrated in the example screen <711> of FIG. 7C. According to an embodiment, the designated arrangement mode may include an object-based arrangement mode (e.g., a first mode) providing affordances by arranging the affordances in a space contacting the target virtual object and the surface of the virtual space, and a list-based arrangement mode (e.g., a second mode) providing affordances by arranging the affordances as a list corresponding to the respective target virtual objects from an outside of the virtual space. According to an embodiment, with reference to drawings described later, an operation example of providing an affordance according to the designated arrangement mode is described.

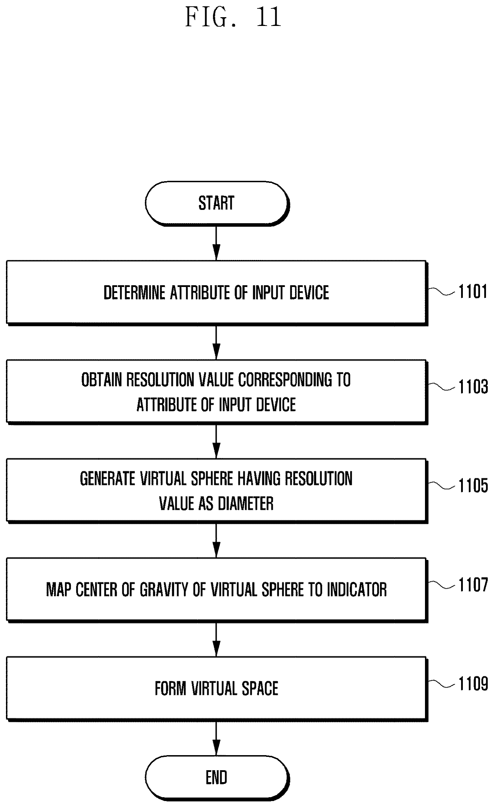

FIG. 11 is a flowchart illustrating an operation method of the electronic device according to an embodiment of the present disclosure.

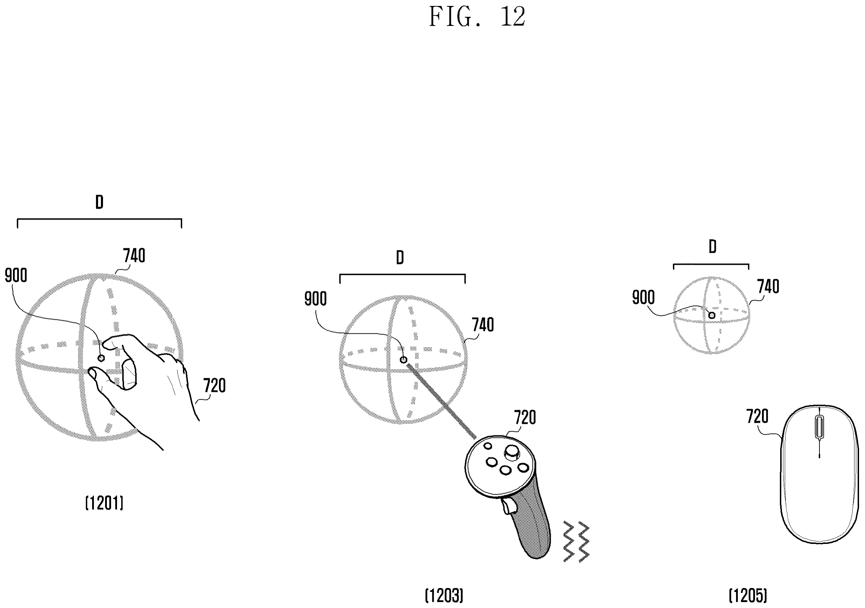

FIG. 12 is a diagram illustrating an example of providing a virtual space corresponding to an input device in the electronic device according to an embodiment of the present disclosure.

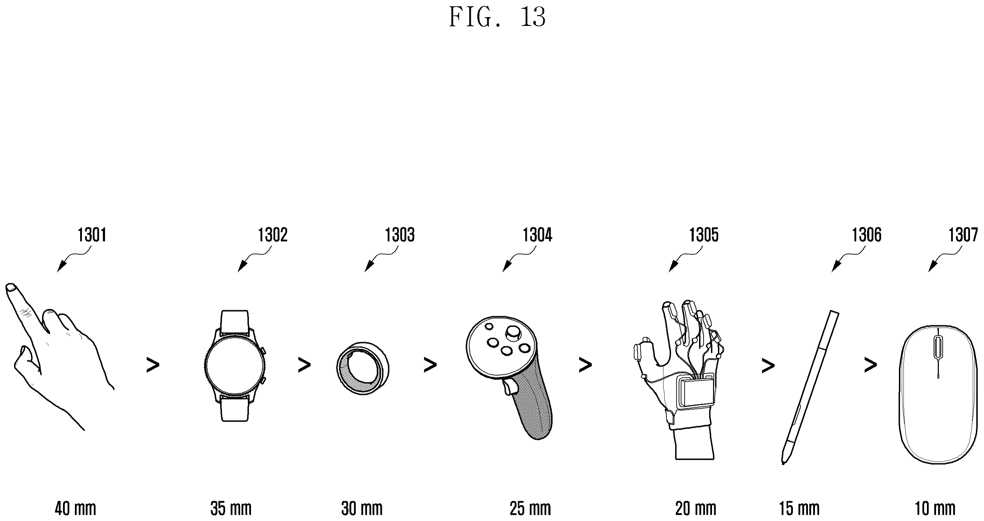

FIG. 13 is a diagram illustrating an example of a resolution for each input device provided in the electronic device according to an embodiment of the present disclosure.

According to an embodiment, FIG. 11 may indicate an example of an operation of providing a virtual space based on an attribute of an input device in the electronic device 101 according to an embodiment.

An operation method supported in the electronic device 101 according to an embodiment of the present disclosure may be performed, for example, according to the flowchart illustrated in FIG. 11. The flowchart illustrated in FIG. 11 is an example according to an embodiment of an operation of the electronic device 101, and an order of at least some operations may be changed or performed in parallel, performed as independent operations, or at least some other operations may be performed complementarily to at least some operations. According to an embodiment of the present disclosure, operations 1101 to 1109 may be performed in at least one processor 120 of the electronic device 101 (e.g., the processor 120 of FIG. 1 or FIG. 5).

According to an embodiment, the operation described in FIG. 11 may be performed, for example, heuristically in combination with operations described in FIGS. 6 to 10, or may be performed heuristically in combination with at least some other operations by replacing at least some operations of the described operations, or may be performed heuristically as a detailed operation of at least some operations of the described operations.

As illustrated in FIG. 11, an operation method performed by the electronic device 101 according to an embodiment may include an operation 1101 of determining an attribute of an input device, an operation 1103 of obtaining a resolution value corresponding to the attribute of the input device, an operation 1105 of generating a virtual sphere having the resolution value as a diameter, an operation 1107 of mapping a center of gravity (e.g., a center point of a sphere) of the virtual sphere to an indicator, and an operation 1109 of forming a virtual space.

With reference to FIG. 11, in operation 1101, the processor 120 of the electronic device 101 may perform an operation of determining an attribute of an input device. According to an embodiment, the processor 120 may, based on recognizing an input device in a state of providing a virtual environment, determine an attribute (e.g., a type) of the input device. According to an embodiment, the input device may include a hardware device such as a mouse, a smart pen (or an electronic pen), a controller, and a wearable device (e.g., a ring and/or a watch) connected with the electronic device 101 in a designated communication scheme. According to an embodiment, the input device may include an object (or an object device) such as a user hand (or a finger), a stylus pen, a wearable device, and/or a glove recognized through an execution screen in a virtual environment.

In operation 1103, the processor 120 may perform an operation of obtaining a resolution value corresponding to an attribute of an input device. According to an embodiment, the processor 120 may determine resolution (e.g., a predefined attribute (or capability) for the input device) according to a size (or a type) of the input device. In an embodiment, the resolution may indicate an ability to distinguish and select a specific virtual object by using the input device. According to an embodiment, the electronic device 101 may store resolution for each input device (e.g., a resolution value) in the memory 130 in advance. An example thereof is illustrated in FIGS. 12 and 13.

As illustrated in FIGS. 12 and 13, resolution may be different for each input device 720. According to an embodiment, a resolution value for each input device may be stored in advance in the memory 130 of the electronic device 101. According to an embodiment, a resolution value for each input device may be stored in an outside (e.g., a cloud server) of the electronic device 101, and the electronic device 101 may, when necessary, obtain (e.g., request and receive) and use a resolution value corresponding to a recognized input device from the outside

With reference to FIG. 12, examples <1201>, <1203>, and <1205> may indicate examples when the input device 720 is a user hand (e.g., a thumb finger and an index finger), a controller, and a mouse. According to an embodiment, the processor 120 may determine a size (or a range) of the virtual space 740 based on a predefined resolution value corresponding to a size (or a type) of the input device 720. According to an embodiment, the processor 120 may form the virtual space 740 (e.g., a virtual sphere or a resolution sphere) with a resolution value of the input device 720 as a diameter, centered on the input device 720 (e.g., the indicator 900 of the input device). For example, the processor 120 may express the virtual space 740 in a virtual sphere shape having a designated distance (or length) from the indicator 900 of the input device 720 (e.g., a length having a resolution value as a radius).

According to an embodiment, example <1201> may indicate an example in which a first resolution value (e.g., about 40 mm) is set for the input device 720 (e.g., a user hand), the processor 120 forms the virtual space 740 having the first resolution value as a diameter, and maps and provides a center of gravity of the virtual space 740 to the indicator 900. According to an embodiment, example <1203> may indicate an example in which a second resolution value (e.g., about 25 mm) is set for the input device 720 (e.g., a controller), the processor 120 forms the virtual space 740 having the second resolution value as a diameter, and maps and provides a center of gravity of the virtual space 740 to the indicator 900. According to an embodiment, example <1205> may indicate an example in which a third resolution value (e.g., about 10 mm) is set for the input device 720 (e.g., a mouse), the processor 120 forms the virtual space 740 having the third resolution value as a diameter, and maps and provides a center of gravity of the virtual space 740 to the indicator 900.

According to an embodiment, a resolution value may be defined and/or learned based on manipulation precision of an object selection using the input device 720. For example, a relatively large (or high) resolution value may be set for an input device (e.g., a user hand) having low accuracy for object selection, and a relatively small (or low) resolution value may be set for an input device (e.g., a mouse) having high accuracy for object selection. For example, that a resolution value is small may indicate forming a sphere having a small diameter of the virtual space 740. According to an embodiment, the input device 720 for which a small resolution value is set may indicate a device having high accuracy of an object selection because noise according to an object selection (e.g., noise for recognition of the input device 720 (e.g., hardware noise such as camera noise) and/or user noise such as hand tremor) is small. According to an embodiment, an example of a resolution value which may be set for each input device 720 based on noise which may occur in the input device 720 is illustrated in FIG. 13.

With reference to FIG. 13, FIG. 13 may indicate various examples of a predefined resolution value for each type of the input device 720. For example, a relatively large (or high) resolution value may be set for an input device (e.g., a user hand) having low accuracy for object selection, and a relatively small (or low) resolution value may be set for an input device (e.g., a mouse) having high accuracy for object selection. For example, as accuracy of an object selection using the input device 720 is higher, a lower resolution value may be assigned. For example, as illustrated in FIG. 13, in a case of a first input device 1301 according to an embodiment (e.g., a user hand), a first resolution value (e.g., about 40 mm) based on an experimental value may be set. In a case of a second input device 1302 according to an embodiment (e.g., a watch), a second resolution value (e.g., about 35 mm) based on an experimental value may be set. In a case of a third input device 1303 according to an embodiment (e.g., a ring), a third resolution value (e.g., about 30 mm) based on an experimental value may be set. In a case of a fourth input device 1304 according to an embodiment (e.g., a controller), a fourth resolution value (e.g., about 25 mm) based on an experimental value may be set. In a case of a fifth input device 1305 according to an embodiment (e.g., a glove), a fifth resolution value (e.g., about 20 mm) based on an experimental value may be set. In a case of a sixth input device 1306 according to an embodiment (e.g., a smart pen), a sixth resolution value (e.g., about 15 mm) based on an experimental value may be set. In a case of a seventh input device 1307 according to an embodiment (e.g., a mouse), a seventh resolution value (e.g., about 10 mm) based on an experimental value may be set.

In operation 1105, the processor 120 may perform an operation of generating a virtual sphere having a resolution value as a diameter. According to an embodiment, the processor 120 may determine a size (or a range) of a virtual space (or a virtual sphere or a resolution sphere) based on a resolution value of an input device. According to an embodiment, the processor 120 may generate a virtual sphere (or a resolution sphere) formed with a resolution value of an input device as a diameter (or a radius being about 1/2 of the resolution value from an indicator of the input device).

In operation 1107, the processor 120 may perform an operation of mapping a center of gravity of a virtual sphere to an indicator. According to an embodiment, the processor 120 may map a center of gravity of a virtual space having a designated resolution value for an input device as a diameter to an indicator. An example thereof is illustrated in FIG. 12.

In operation 1109, the processor 120 may perform an operation of forming a virtual space. According to an embodiment, the processor 120 may map a center of gravity of a virtual space based on an indicator of an input device, and may form the virtual space having a designated resolution value as a diameter based on the center of gravity.

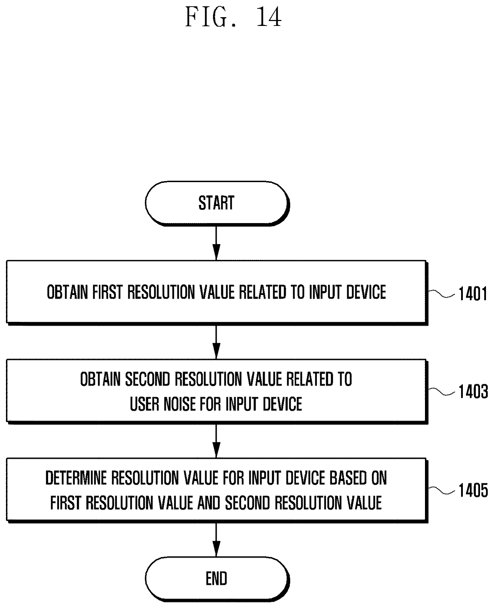

FIG. 14 is a flowchart illustrating an operation method of the electronic device according to an embodiment of the present disclosure.

According to an embodiment, FIG. 14 may indicate an example of an operation of determining a resolution value for an input device in the electronic device 101 according to an embodiment.

An operation method supported in the electronic device 101 according to an embodiment of the present disclosure may be performed, for example, according to the flowchart illustrated in FIG. 14. The flowchart illustrated in FIG. 14 is an example according to an embodiment of an operation of the electronic device 101, and an order of at least some operations may be changed or performed in parallel, performed as independent operations, or at least some other operations may be performed complementarily to at least some operations. According to an embodiment of the present disclosure, operations 1401 to 1405 may be performed in at least one processor 120 of the electronic device 101 (e.g., the processor 120 of FIG. 1 or FIG. 5).

According to an embodiment, the operation described in FIG. 14 may be performed, for example, heuristically in combination with operations described in FIGS. 6 to 13, or may be performed heuristically in combination with at least some other operations by replacing at least some operations of the described operations, or may be performed heuristically as a detailed operation of at least some operations of the described operations.

As illustrated in FIG. 14, an operation method performed by the electronic device 101 according to an embodiment may include an operation 1401 of obtaining a first resolution value related to an input device, an operation 1403 of obtaining a second resolution value related to user noise for an input device, and an operation 1405 of determining a resolution value for an input device based on the first resolution value and the second resolution value.

With reference to FIG. 14, in operation 1401, the processor 120 of the electronic device 101 may perform an operation of obtaining a first resolution value related to an input device. In an embodiment, the first resolution value may include a basic resolution value predefined for an input device.

In operation 1403, the processor 120 may perform an operation of obtaining a second resolution value related to user noise for an input device. In an embodiment, the second resolution value may include a correction resolution value related to user noise generated by a user using an input device. For example, the second correction value may be updated, as a correction value for the input device, by learning, for human error such as hand tremor of a user, when the user uses the input device, and based on a learning result. For example, the second correction value may include a resolution value which is corrected by considering user noise using the input device, for the first resolution value for the input device. According to an embodiment, the resolution value may include the first resolution value pre-stored in the electronic device 101 for each input device, and a second resolution value (e.g., a hand tremor correction value) for correcting a user's noise which is updated according to learning of a user.

In operation 1405, the processor 120 may perform an operation of determining a resolution value for an input device based on the first resolution value and the second resolution value. According to an embodiment, the processor 120 may calculate a final resolution value for an input device by considering the first resolution value of the input device and the second resolution value compensating human error (e.g., user noise) of a user using the input device.

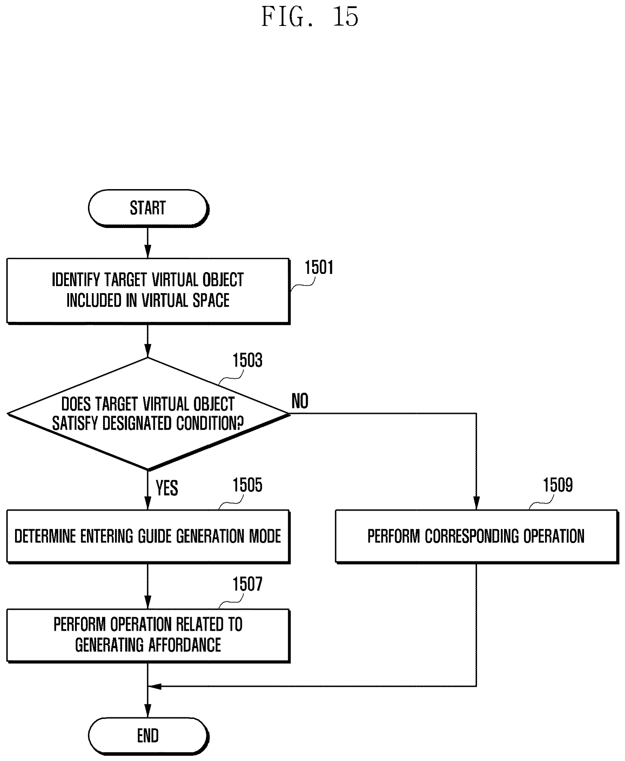

FIG. 15 is a flowchart illustrating an operation method of the electronic device according to an embodiment of the present disclosure.

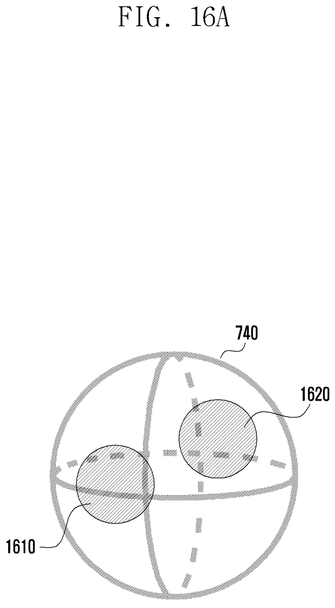

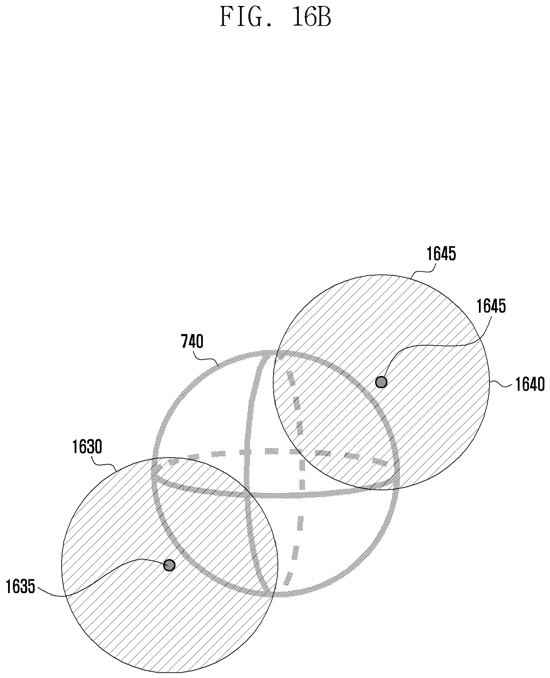

FIGS. 16A and 16B are diagrams illustrating examples of determining a target virtual object in the electronic device according to an embodiment of the present disclosure.

According to an embodiment, FIG. 15 may indicate an example of an operation of determining entry into the guide generation mode for providing an affordance in the electronic device 101 according to an embodiment.

An operation method supported in the electronic device 101 according to an embodiment of the present disclosure may be performed, for example, according to the flowchart illustrated in FIG. 15. The flowchart illustrated in FIG. 15 is an example according to an embodiment of an operation of the electronic device 101, and an order of at least some operations may be changed or performed in parallel, performed as independent operations, or at least some other operations may be performed complementarily to at least some operations. According to an embodiment of the present disclosure, operations 1501 to 1509 may be performed in at least one processor 120 of the electronic device 101 (e.g., the processor 120 of FIG. 1 or FIG. 5).

According to an embodiment, the operation described in FIG. 15 may be performed, for example, heuristically in combination with operations described in FIGS. 6 to 14, or may be performed heuristically in combination with at least some other operations by replacing at least some operations of the described operations, or may be performed heuristically as a detailed operation of at least some operations of the described operations.

As illustrated in FIG. 15, an operation method performed by the electronic device 101 according to an embodiment may include an operation 1501 of identifying a target virtual object included in a virtual space, an operation 1503 of determining whether the target virtual object satisfies a designated condition, an operation 1505 of determining entry into a guide generation mode based on the target virtual object satisfying the designated condition, an operation 1507 of performing an operation related to affordance generation, and an operation 1509 of processing performing the corresponding operation based on the target virtual object not satisfying the designated condition.

With reference to FIG. 15, in operation 1501, the processor 120 of the electronic device 101 may perform an operation of identifying a target virtual object included in a virtual space. According to an embodiment, the processor 120 may, among the plurality of virtual objects on the execution screen, extract (or infer) a virtual object included in the virtual space formed based on the input device, as the target virtual object. According to an embodiment, the processor 120 may identify, as the target virtual object, a case in which a part or all of a virtual object is included in a virtual space centered on an indicator of an input device.

In operation 1503, the processor 120 may perform an operation of determining whether the target virtual object satisfies the designated condition. According to an embodiment, the designated condition may include a condition in which the target virtual object is a plurality of virtual objects of at least two target virtual objects, and a distance between centers of gravity of each of the plurality of virtual objects is equal to or less than a designated proximity distance. An example thereof is illustrated in FIGS. 16A and 16B.

With reference to FIG. 16A, FIG. 16A may indicate an example of a case in which a first virtual object 1610 and a second virtual object 1620 are both included in the virtual space 740. For example, in a case in which a plurality of virtual objects are included in the virtual space 740 such as at least two virtual objects (e.g., the first virtual object 1610 and the second virtual object 1620), a user may have difficulty in distinguishing selection of a virtual object. According to an embodiment, in a case in which at least two virtual objects 1610 and 1620 are included in the virtual space 740, the processor 120 may operate to provide an affordance for at least two virtual objects 1610 and 1620, so as to allow a user to easily select and manipulate a virtual object.

With reference to FIG. 16B, FIG. 16B may indicate an example of a case in which a part of a third virtual object 1630 and a part of a fourth virtual object 1640 are included in the virtual space 740. For example, in a case in which a part of a plurality of virtual objects is included in the virtual space 740 such as at least two virtual objects (e.g., e.g., the third virtual object 1630 and the fourth virtual object 1640), depending on a distance between centers of gravity of each of the plurality of virtual objects 1630 and 1640, a user may easily or difficulty distinguish selection of a virtual object. According to an embodiment, as illustrated in FIG. 16B, in a case in which a distance (L) between a first center of gravity 1635 of the third virtual object 1630 and a second center of gravity 1645 of the fourth virtual object 1640 is larger than the designated proximity distance, a user may easily distinguish selection of a virtual object. For example, in a case in which a center of gravity of at least one virtual object exists outside the virtual space 740 and there is no overlap between the virtual objects 1630 and 1640, distinguishing selection for a virtual object of a user may be easy.

According to an embodiment, in a case in which the distance (L) between the first center of gravity 1635 of the third virtual object 1630 and the second center of gravity 1645 of the fourth virtual object 1640 is equal to or less than the designated proximity distance in FIG. 16B, a user may not easily distinguish selection of a virtual object. For example, in a case in which centers of gravity 1635 and 1645 of the plurality of virtual objects 1630 and 1640 exist in the virtual space 740, or overlap exists between the virtual objects 1630 and 1640, distinguishing selection for a virtual object of a user may be difficult. According to an embodiment, in a case in which the distance (L) between the centers of gravity 1635 and 1645 of the plurality of virtual objects 1630 and 1640 is equal to or less than the designated proximity distance, the processor 120 may operate to provide an affordance for at least two virtual objects 1630 and 1640, so as to allow a user to easily select and manipulate a virtual object.

In operation 1503, in a case in which the processor 120 determines that the target virtual object satisfies the designated condition (e.g., "YES" of operation 1503), in operation 1505, the processor 120 may perform an operation of determining entry into the guide generation mode. In an embodiment, in a case in which target virtual objects in the virtual space are a plurality of virtual objects for which the target virtual objects are at least two, and a distance between centers of gravity of each of the plurality of virtual objects is equal to or less than the designated proximity distance, the processor 120 may determine that the designated condition is satisfied. According to an embodiment, the processor 120 may determine entry into the guide generation mode for generating an affordance based on determining that the designated condition is satisfied. An example thereof is illustrated in FIG. 16A.

In operation 1507, the processor 120 may perform an operation related to affordance generation. According to an embodiment, the processor 120 may enter the guide generation mode, and may perform an operation of generating an affordance associated with a plurality of virtual objects included in a virtual space. According to an embodiment, an operation example related to generating and providing an affordance is described with reference to drawings to be described later.

In operation 1503, when the processor 120 determines that the target virtual object does not satisfy the designated condition (e.g., "NO" of operation 1503), in operation 1509, the processor 120 may perform an operation of processing performing the corresponding operation. According to an embodiment, the processor 120 may recognize a user input using an input device. According to an embodiment, the processor 120 may process an operation of selecting a virtual object based on a user input and executing a related function (e.g., object movement, object editing).

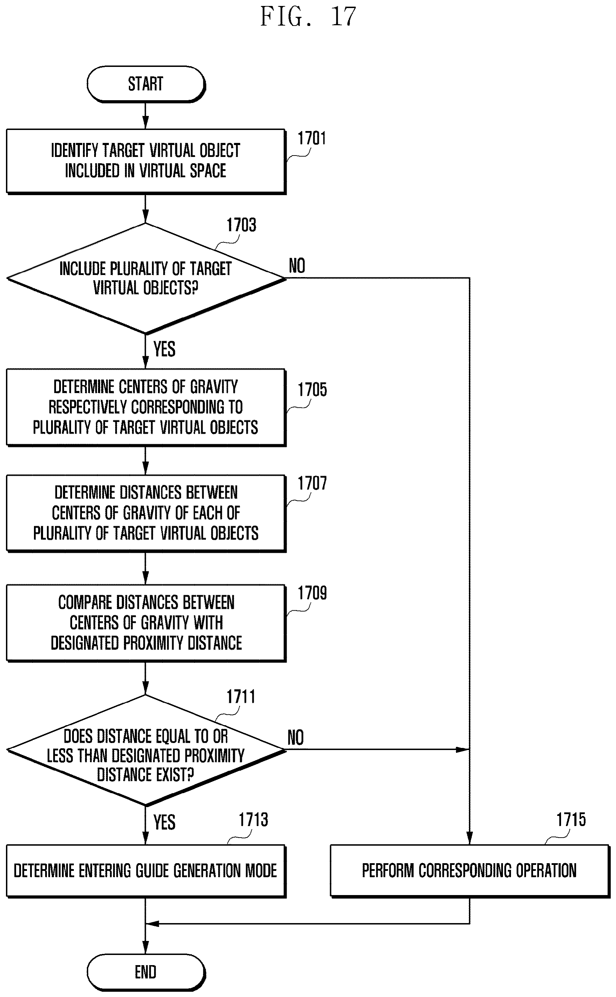

FIG. 17 is a flowchart illustrating an operation method of the electronic device according to an embodiment of the present disclosure.

According to an embodiment, FIG. 17 may indicate an example of an operation of determining entry into the guide generation mode for providing an affordance in the electronic device 101 according to an embodiment.

An operation method supported in the electronic device 101 according to an embodiment of the present disclosure may be performed, for example, according to the flowchart illustrated in FIG. 17. The flowchart illustrated in FIG. 17 is an example according to an embodiment of an operation of the electronic device 101, and an order of at least some operations may be changed or performed in parallel, performed as independent operations, or at least some other operations may be performed complementarily to at least some operations. According to an embodiment of the present disclosure, operations 1701 to 1715 may be performed in at least one processor 120 of the electronic device 101 (e.g., the processor 120 of FIG. 1 or FIG. 5).

According to an embodiment, the operation described in FIG. 17 may be performed, for example, heuristically in combination with operations described in FIGS. 6 to 16B, or may be performed heuristically in combination with at least some other operations by replacing at least some operations of the described operations, or may be performed heuristically as a detailed operation of at least some operations of the described operations.

As illustrated in FIG. 17, an operation method performed by the electronic device 101 according to an embodiment may include an operation 1701 of identifying a target virtual object included in a virtual space, an operation 1703 of determining whether the virtual space includes a plurality of target virtual objects, an operation 1705 of determining centers of gravity respectively corresponding to the plurality of target virtual objects based on determining that the virtual space includes the plurality of target virtual objects, an operation 1707 of determining distances between centers of gravity of each of the plurality of target virtual objects, an operation 1709 of comparing the distances between the centers of gravity with the designated proximity distance, an operation 1711 of determining whether a distance equal to or less than the designated proximity distance exists among the distances between the centers of gravity, an operation 1713 of determining entry into the guide generation mode based on determining that a distance equal to or less than the designated proximity distance exists, and an operation 1715 of processing performing the corresponding operation in a case in which the plurality of target virtual objects is not included in the virtual space, or a case in which a distance equal to or less than the designated proximity distance does not exist.

With reference to FIG. 17, in operation 1701, the processor 120 of the electronic device 101 may perform an operation of identifying a target virtual object included in a virtual space. According to an embodiment, the processor 120 may, among the plurality of virtual objects on the execution screen, extract (or infer) a virtual object included in the virtual space formed based on the input device, as the target virtual object. According to an embodiment, the processor 120 may identify, as the target virtual object, a case in which a part or all of a virtual object is included in a virtual space centered on an indicator of an input device.

In operation 1703, the processor 120 may perform an operation of determining whether the virtual space includes a plurality of target virtual objects. According to an embodiment, the processor 120 may determine whether at least two target virtual objects are included in the virtual space, as in an example of FIG. 16A and/or FIG. 16B.

In operation 1703, when the processor 120 determines that the plurality of target virtual objects is not included in the virtual space (e.g., "NO" of operation 1703), in operation 1715, the processor 120 may process performing the corresponding operation. According to an embodiment, the processor 120 may recognize a user input using an input device. According to an embodiment, the processor 120 may process an operation of selecting a virtual object based on a user input and executing a related function (e.g., object movement, object editing).

In operation 1703, when the processor 120 determines that the plurality of target virtual objects is included in the virtual space (e.g., "YES" of operation 1703), in operation 1705, the processor 120 may perform an operation of determining centers of gravity respectively corresponding to the plurality of target virtual objects.

In operation 1707, the processor 120 may perform an operation of determining distances between centers of gravity of each of the plurality of target virtual objects. According to an embodiment, when a part or all of a plurality of virtual objects is included such as at least two virtual objects in the virtual space, the processor 120 may determine a distance between centers of gravity of each of the plurality of virtual objects. For example, the processor 120 may determine a distance (L) between a first center of gravity 1635 of a third virtual object 1630 and a second center of gravity 1645 of a fourth virtual object 1640, as illustrated in FIG. 16B.

In operation 1709, the processor 120 may perform an operation of comparing the distances between the centers of gravity with the designated proximity distance. According to an embodiment, the processor 120 may respectively compare distances between centers of gravity respectively corresponding to the plurality of target virtual objects in the virtual space (e.g., a plurality of distances such as a first distance and a second distance) with the designated proximity distance. For example, a case in which a first virtual object, a second virtual object, and a third virtual object are included in the virtual space may be assumed. According to an embodiment, the processor 120 may determine a first distance between centers of gravity of the first virtual object and the second virtual object, a second distance between centers of gravity of the first virtual object and the third virtual object, and a third distance between centers of gravity of the second virtual object and the third virtual object. According to an embodiment, the processor 120 may compare the first distance with the designated proximity distance, may compare the second distance with the designated proximity distance, and may compare the third distance with the designated proximity distance.

In operation 1711, the processor 120 may perform an operation of determining whether a distance equal to or less than the designated proximity distance exists among distances between the centers of gravity. According to an embodiment, the processor 120 may determine whether a distance equal to or less than the designated proximity distance exists among the first distance, the second distance, and/or the third distance.

In operation 1711, when the processor 120 determines that a distance equal to or less than the designated proximity distance exists (e.g., "YES" of operation 1711), in operation 1713, the processor 120 may perform an operation of determining entry into the guide generation mode. According to an embodiment, when a target virtual object in the virtual space is a plurality of virtual objects having at least two target virtual objects, and a distance between centers of gravity of each of the plurality of virtual objects is equal to or less than the designated proximity distance, the processor 120 may determine entry into the guide generation mode for generating an affordance.

In operation 1711, when the processor 120 determines that a distance equal to or less than the designated proximity distance does not exist (e.g., "NO" of operation 1711), in operation 1715, the processor 120 may process performing the corresponding operation. According to an embodiment, the processor 120 may recognize a user input using an input device. According to an embodiment, the processor 120 may process an operation of selecting a virtual object based on a user input and executing a related function (e.g., object movement, object editing).

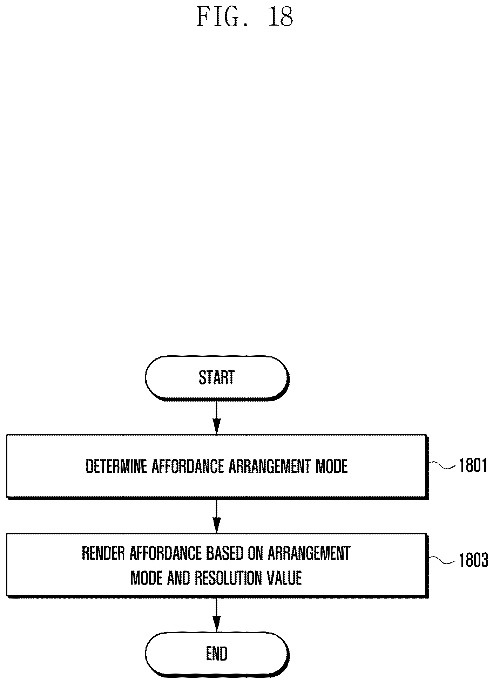

FIG. 18 is a flowchart illustrating an operation method of the electronic device according to an embodiment of the present disclosure.

According to an embodiment, FIG. 18 may indicate an example of an operation of providing an affordance in the electronic device 101 according to an embodiment.

An operation method supported in the electronic device 101 according to an embodiment of the present disclosure may be performed, for example, according to the flowchart illustrated in FIG. 18. The flowchart illustrated in FIG. 18 is an example according to an embodiment of an operation of the electronic device 101, and an order of at least some operations may be changed or performed in parallel, performed as independent operations, or at least some other operations may be performed complementarily to at least some operations. According to an embodiment of the present disclosure, operations 1801 to 1803 may be performed in at least one processor 120 (e.g., the processor 120 of FIG. 1 or FIG. 5) of the electronic device 101.

According to an embodiment, the operation described in FIG. 18 may be performed, for example, heuristically in combination with operations described in FIGS. 6 to 17, or may be performed heuristically in combination with at least some other operations by replacing at least some operations of the described operations, or may be performed heuristically as a detailed operation of at least some operations of the described operations.

As illustrated in FIG. 18, an operation method performed by the electronic device 101 according to an embodiment may include an operation 1801 of determining an affordance arrangement mode, and an operation 1803 of rendering an affordance based on the arrangement mode and a resolution value.

With reference to FIG. 18, in operation 1801, the processor 120 of the electronic device 101 may perform an operation of determining an affordance arrangement mode. According to an embodiment, the processor 120 may determine the designated arrangement mode (or an affordance type or an affordance display type) for arranging affordances on the virtual space based on a relationship between the virtual space and a target virtual object. According to an embodiment, the designated arrangement mode may include an arrangement mode (e.g., a first arrangement mode) of providing affordances by arranging the affordances in a space contacting the target virtual object and a surface of the virtual space. According to an embodiment, the designated arrangement mode may include an arrangement mode (e.g., a second arrangement mode) of providing affordances by arranging the affordances as a list corresponding to the respective target virtual objects outside the virtual space.

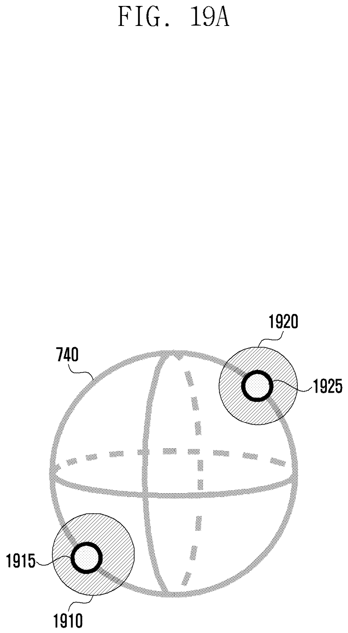

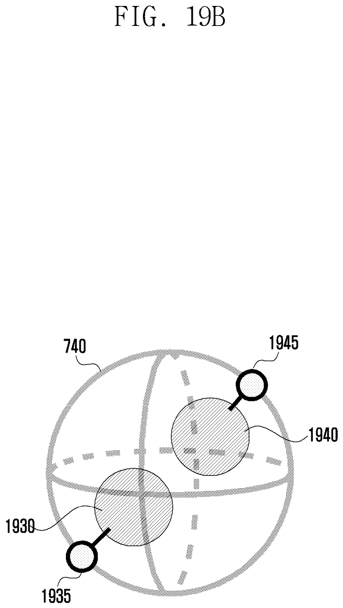

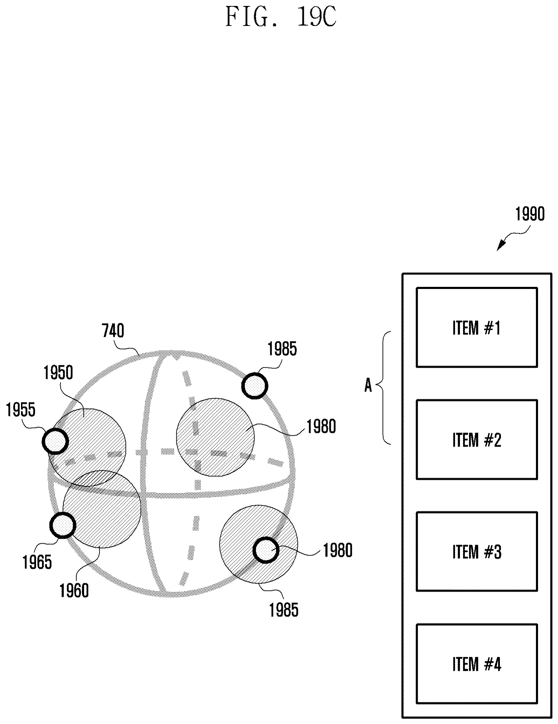

In operation 1803, the processor 120 may perform an operation of rendering an affordance based on the designated arrangement mode and the resolution value. According to an embodiment, the processor 120 may generate an affordance with two-dimensional or three-dimensional graphic data (e.g., an icon or an image of a designated shape (e.g., a cube shape, a circle shape, an ellipse shape, a triangle shape, a rhombus shape), an image of an object shape, text based on text recognition included in an object). According to an embodiment, the processor 120 may generate an affordance realistically by considering object information (e.g., information regarding a position, a color, and/or a light source) related to the target virtual object in a virtual environment. For example, the processor 120 may generate an affordance with a color contrasted with a color of the target virtual object, and may arrange affordances in a space not overlapping a position of the target virtual object in the virtual space. For example, the processor 120 may determine a size and/or an interval of an affordance based on the resolution value, and may arrange affordances based on the determined size and/or the determined interval. An example thereof is illustrated in FIG. 19A, FIG. 19B, and FIG. 19C.

FIGS. 19A, 19B, and 19C are diagrams illustrating examples of providing an affordance in the electronic device according to an embodiment of the present disclosure.

As illustrated in FIG. 19A, FIG. 19B, and FIG. 19C, an affordance may be provided in a designated object form respectively corresponding to a target virtual object based on the virtual space 740. According to an embodiment, when an interval (L) between arranged affordances is smaller than a radius (r) of the virtual space (e.g., L < r), an affordance may be provided in a designated list form respectively corresponding to the target virtual object.

With reference to FIG. 19A, FIG. 19A may indicate an example of arranging affordances in a case in which target virtual objects (e.g., a first virtual object 1910 and a second virtual object 1920) span the virtual space 740. According to an embodiment, when the target virtual objects 1910 and 1920 span the virtual space 740, the electronic device 101 may determine an affordance type as an internal arrangement mode (or an internal type) of arranging inside the target virtual objects 1910 and 1920.

According to an embodiment, the electronic device 101 may provide by arranging affordances (e.g., a first affordance 1915 and a second affordance 1925) (e.g., an internal affordance arranged inside a virtual object) in a space (or a surface) in which the target virtual objects 1910 and 1920 contact the surface of the virtual space 740. For example, a first affordance 1915 (e.g., a first internal handle) may be arranged on a surface in which a first virtual object 1910 contacts the virtual space 740, and a second affordance 1925 (e.g., a second internal handle) may be arranged on a surface in which a second virtual object 1920 contacts the virtual space 740.

With reference to FIG. 19B, FIG. 19B may indicate an example of arranging affordances in a case in which target virtual objects (e.g., a third virtual object 1930 and a fourth virtual object 1940) are inside the virtual space 740. According to an embodiment, when the target virtual objects 1930 and 1940 exist inside the virtual space 740, the electronic device 101 may determine an affordance type as an external arrangement mode (or an external type) of arranging in a space (or a surface) on an extension line toward a surface of the virtual space 740.

According to an embodiment, the electronic device 101 may provide by arranging affordances (e.g., a third affordance 1935 and a fourth affordance 1945) (e.g., an external affordance arranged on the surface of the virtual space 740) in a space on an extension line toward the surface of the virtual space 740. For example, a third affordance 1935 (e.g., a first external handle) may be arranged in a space on an extension line (or a surface contacting on the extension line) from the third virtual object 1930 toward a proximate surface (e.g., a surface of a short distance) of the virtual space 740, and a fourth affordance 1945 (e.g., a second external handle) may be arranged in a space on an extension line (or a surface contacting on the extension line) from the fourth virtual object 1940 toward a proximate surface (e.g., a surface of a short distance) of the virtual space 740.

With reference to FIG. 19C, FIG. 19C may indicate an example of arranging affordances in a case in which a part or a whole of target virtual objects (e.g., a fifth virtual object 1950, a sixth virtual object 1960, a seventh virtual object 1970, and an eighth virtual object 1980) exists inside the virtual space 740, or spans the virtual space 740, and an interval (L) between at least some affordances is smaller than a radius of the virtual space 740. According to an embodiment, the electronic device 101 may arrange affordances (e.g., a fifth affordance 1955, a sixth affordance 1965, a seventh affordance 1975, and an eighth affordance 1985) based on the virtual space 740, and, when an interval (L) between each of the affordances 1955, 1965, 1975, and 1985 arranged in the virtual space 740 is smaller than the radius of the virtual space 740, the electronic device 101 may determine an affordance type as a list arrangement mode (or a list type) of arranging in a list form at an outer periphery of the virtual space 740 in the virtual environment.

According to an embodiment, the electronic device 101 may provide by arranging affordances 1990 (e.g., a list-based affordance) in an area departing from the virtual space 740 in the virtual environment. For example, when an interval (L) between at least two affordances (e.g., the fifth affordance 1955 and the sixth affordance 1965) among affordances arranged based on the virtual space 740 (e.g., the fifth affordance 1955, the sixth affordance 1965, the seventh affordance 1975, and the eighth affordance 1985) is smaller than a radius (e.g., one half of a resolution value) of the virtual space 740, the electronic device 101 may generate a list-form affordance 1990 and may arrange the list-form affordance 1990 in an area in the virtual environment.

According to an embodiment, the list-based affordance 1990 may be provided in a list form including items (e.g., a fifth item, a sixth item, a seventh item, and an eighth item) respectively corresponding to target virtual objects (e.g., the fifth virtual object 1950, the sixth virtual object 1960, the seventh virtual object 1970, and the eighth virtual object 1980).

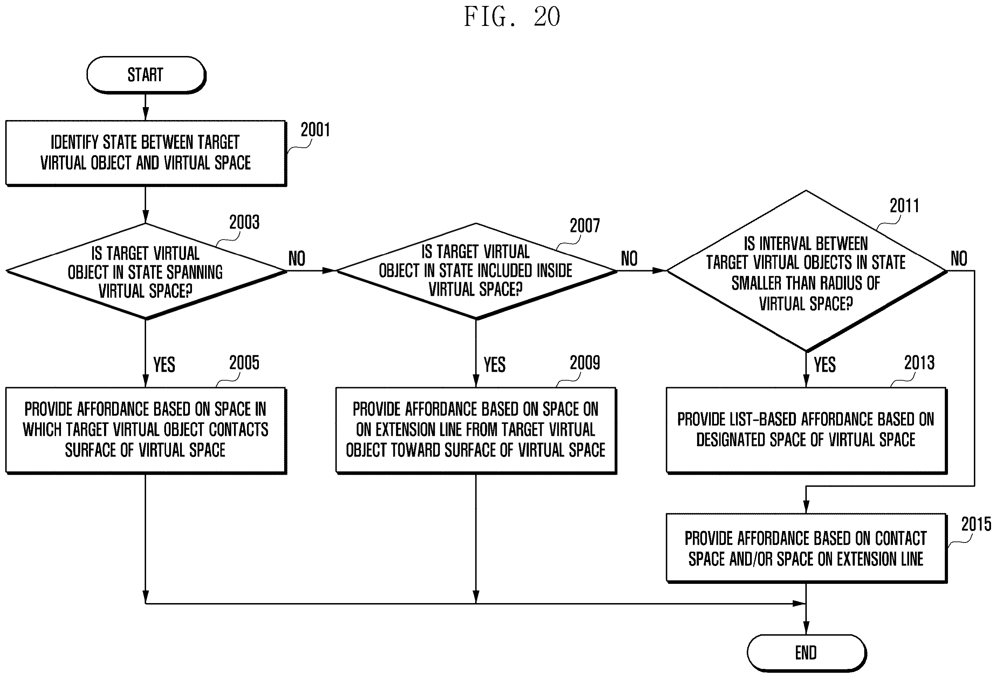

FIG. 20 is a flowchart illustrating an operation method of the electronic device according to an embodiment of the present disclosure.

According to an embodiment, FIG. 20 may indicate an example of an operation of providing an affordance in the electronic device 101 according to an embodiment.

An operation method supported in the electronic device 101 according to an embodiment of the present disclosure may be performed, for example, according to the flowchart illustrated in FIG. 20. The flowchart illustrated in FIG. 20 is an example according to an embodiment of an operation of the electronic device 101, and an order of at least some operations may be changed or performed in parallel, performed as independent operations, or at least some other operations may be performed complementarily to at least some operations. According to an embodiment of the present disclosure, operations 2001 to 2015 may be performed in at least one processor 120 of the electronic device 101 (e.g., the processor 120 of FIG. 1 or FIG. 5).

According to an embodiment, an operation described in FIG. 20 may be performed, for example, heuristically in combination with operations described in FIGS. 6 to 19C, or may be performed heuristically in combination with at least some other operations by replacing at least some operations of the described operations, or may be performed heuristically as a detailed operation of at least some operations of the described operations.

As illustrated in FIG. 20, an operation method performed by the electronic device 101 according to an embodiment may include an operation 2001 of identifying a state between a target virtual object and the virtual space, an operation 2003 of determining whether the target virtual object is in a state spanning the virtual space, an operation 2005 of providing an affordance based on a space in which the target virtual object contacts a surface of the virtual space when the target virtual object is in the state spanning the virtual space, an operation 2007 of determining whether the target virtual object is in a state included inside the virtual space, an operation 2009 of providing an affordance based on a space on an extension line from the target virtual object toward the surface of the virtual space when the target virtual object is in the state included inside the virtual space, an operation 2011 of determining whether an interval between the target virtual objects is in a state smaller than the radius of the virtual space, an operation 2013 of providing a list-based affordance based on a designated space of the virtual space when the interval between the target virtual objects is in the state smaller than the radius of the virtual space, and an operation 2015 of providing an affordance based on a contact space and/or a space on an extension line when the state between the target virtual object and the virtual space is not included in the states (e.g., the states of operations 2003, 2007, and 2011).

With reference to FIG. 20, in operation 2001, the processor 120 of the electronic device 101 may perform an operation of identifying a state between a target virtual object and the virtual space. According to an embodiment, the processor 120 may determine whether a state between the target virtual object and the virtual space corresponds to a first state, a second state, or a third state. In an embodiment, the first state may include a state in which the target virtual object spans the virtual space. In an embodiment, the second state may include a state in which the target virtual object is included inside the virtual space. In an embodiment, the third state may include a state in which an interval between affordances is smaller than the radius of the virtual space.

In operation 2003, the processor 120 may perform an operation of determining whether the target virtual object is in the state (e.g., the first state) spanning the virtual space. An example of the first state is illustrated in FIG. 19A.

In operation 2003, when the processor 120 determines that the target virtual object is in the state (e.g., the first state) spanning the virtual space (e.g., "YES" of operation 2003), in operation 2005, the processor 120 may perform an operation of providing an affordance based on a space in which the target virtual object contacts the surface of the virtual space. According to an embodiment, when the target virtual object spans the virtual space, the processor 120 may determine an affordance type as an internal arrangement mode (or an internal type) of arranging inside the target virtual object. According to an embodiment, the processor 120 may provide by arranging affordances in a space (or a surface) in which the target virtual object contacts the surface of the virtual space.

In operation 2007, the processor 120 may perform an operation of determining whether the target virtual object is in a state (e.g., the second state) included inside the virtual space. An example of the second state is illustrated in FIG. 19B.

In operation 2007, when the processor 120 determines that the target virtual object is in the state (e.g., the second state) included inside the virtual space (e.g., "YES" of operation 2007), in operation 2009, the processor 120 may perform an operation of providing an affordance based on a space on an extension line from the target virtual object toward the surface of the virtual space. According to an embodiment, when the target virtual object exists inside the virtual space, the processor 120 may determine an affordance type as an external arrangement mode (or an external type) of arranging in a space (or a surface) on an extension line toward the surface of the virtual space. According to an embodiment, the processor 120 may provide by arranging affordances in a space on an extension line toward the surface of the virtual space.

In operation 2011, the processor 120 may perform an operation of determining whether an interval between target virtual objects is a state smaller than a radius of the virtual space (e.g., a third state). An example of the third state is illustrated in FIG. 19C.

In operation 2011, when the processor 120 determines that the interval between the target virtual objects is the state smaller than the radius of the virtual space (e.g., the third state) (e.g., "YES" of operation 2011), in operation 2013, the processor 120 may perform an operation of providing a list-based affordance based on a designated space of the virtual space. According to an embodiment, the processor 120 may arrange affordances based on the virtual space, and, when an interval (L) between each of the affordances arranged in the virtual space is smaller than the radius of the virtual space, the processor 120 may determine an affordance type as a list arrangement mode (or a list type) of arranging in a list form at an outer periphery of the virtual space in the virtual environment. According to an embodiment, the processor 120 may provide by arranging affordances (e.g., a list-based affordance) in an area departing from the virtual space in the virtual environment. For example, when an interval (L) between at least two affordances among affordances arranged based on the virtual space is smaller than a radius (e.g., one half of a resolution value) of the virtual space, the processor 120 may generate a list-form affordance and may arrange the list-form affordance in an area in the virtual environment.

In operations 2003, 2005, and 2011, when a state between a target virtual object and the virtual space is not included in a first state, a second state, and a third state, the processor 120 may perform, in operation 2015, an operation of providing an affordance based on a contact space and/or a space on an extension line. According to an embodiment, the processor 120 may provide by arranging a part or a whole of affordances corresponding to the respective target virtual objects, as illustrated in an example of FIG. 19A, inside a corresponding object in the virtual space. According to an embodiment, the processor 120 may provide by arranging a part or a whole of affordances corresponding to the respective target virtual objects, as illustrated in an example of FIG. 19B, on a surface on an extension line contacting the virtual space. According to an embodiment, the processor 120 may provide by arranging a part of affordances corresponding to the respective target virtual objects inside a corresponding object in the virtual space, and arranging another part of the affordances on a surface on an extension line contacting the virtual space.

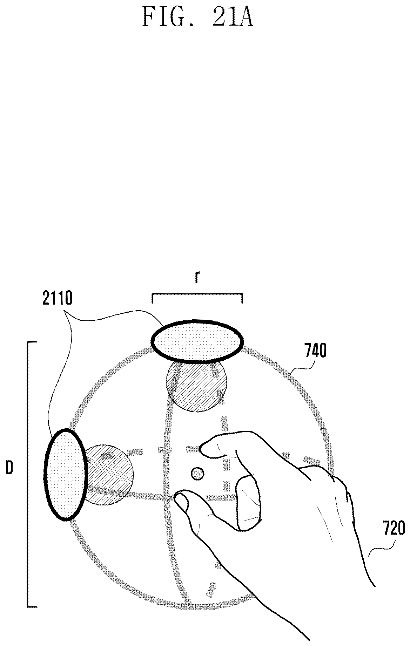

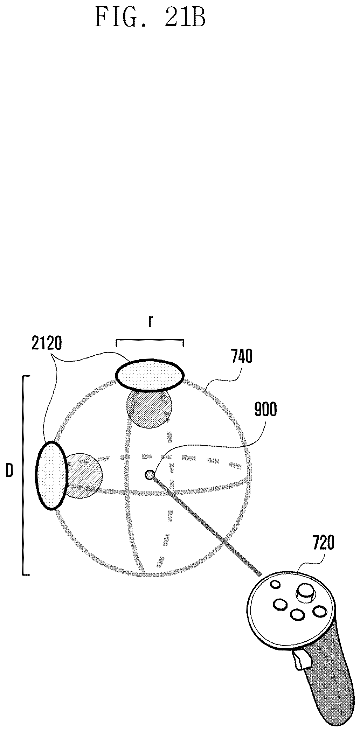

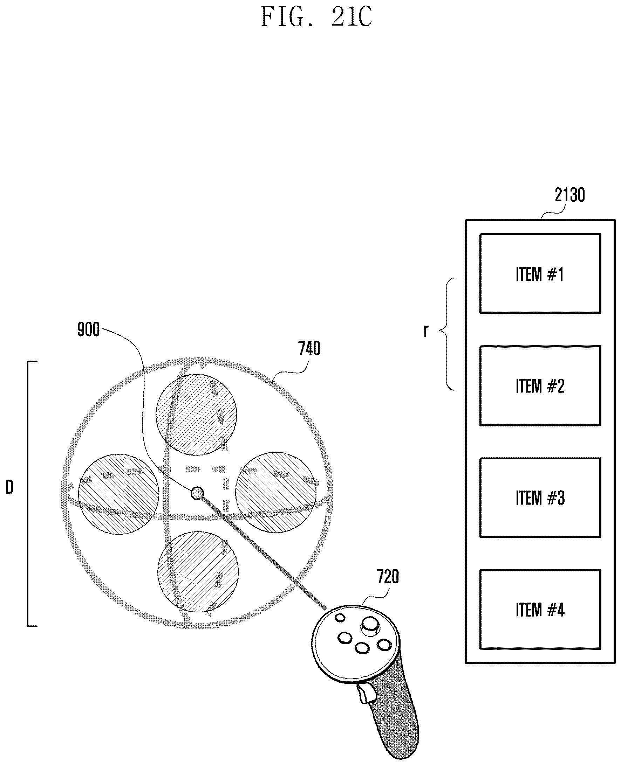

FIGS. 21A, 21B, and 21C are diagrams illustrating examples of determining a size of an affordance in the electronic device according to an embodiment of the present disclosure.

According to an embodiment, the electronic device 101 may determine a size and/or an interval of an affordance based on a resolution value (e.g., a diameter of the virtual space) for the virtual space.

With reference to FIG. 21A, the electronic device 101 may form the virtual space 740 having, as a diameter (D), a resolution value of the input device 720 based on an indicator 900 according to the input device 720 (e.g., a user hand). According to an embodiment, FIG. 21A may indicate an example in which the input device 720 is a user hand. According to an embodiment, the electronic device 101 may obtain a resolution value of the input device 720 (e.g., a first resolution value set for a user hand) (e.g., about 40 mm). According to an embodiment, the electronic device 101 may form the virtual space 740 having, as a diameter (D = about 40 mm), the first resolution value (e.g., about 40 mm) of the input device 720. According to an embodiment, the electronic device 101 may determine a size (e.g., a width) of an affordance 2110 based on one half (e.g., a radius (r), r = D/2) of the first resolution value (or the diameter (D) of the virtual space 740) (e.g., about 40 mm). For example, the affordance 2110 may be provided as a designated shape (e.g., a cube shape, a circular shape, an elliptical shape, a triangular shape, a rhombus shape) having a width of one half (e.g., about 20 mm) of the first resolution value (or the diameter (D) of the virtual space 740) (e.g., about 40 mm).

With reference to FIG. 21B, the electronic device 101 may form the virtual space 740 having, as a diameter (D), a resolution value of the input device 720 based on the indicator 900 according to the input device 720 (e.g., a controller). According to an embodiment, FIG. 21B may indicate an example in which the input device 720 is a controller. According to an embodiment, the electronic device 101 may obtain a resolution value of the input device 720 (e.g., a second resolution value set for a controller) (e.g., about 25 mm). According to an embodiment, the electronic device 101 may form the virtual space 740 having, as a diameter (D = about 25 mm), the second resolution value (e.g., about 25 mm) of the input device 720. According to an embodiment, the electronic device 101 may determine a size (e.g., a width) of an affordance 2120 based on one half (e.g., a radius (r), r = D/2) of the second resolution value (or the diameter (D) of the virtual space 740) (e.g., about 25 mm). For example, the affordance 2120 may be provided as a designated shape (e.g., a cube shape, a circular shape, an elliptical shape, a triangular shape, a rhombus shape) having a width of one half (e.g., about 12.5 mm) of the second resolution value (or the diameter (D) of the virtual space 740) (e.g., about 25 mm).

With reference to FIG. 21C, the electronic device 101 may form the virtual space 740 having, as a diameter (D), a resolution value of the input device 720 based on the indicator 900 according to the input device 720 (e.g., a controller). According to an embodiment, FIG. 21C may indicate an example in which the input device 720 is a controller and a list-form affordance 2130 is provided. According to an embodiment, the electronic device 101 may obtain a resolution value of the input device 720 (e.g., a second resolution value set for a controller) (e.g., about 25 mm). According to an embodiment, the electronic device 101 may form the virtual space 740 having, as a diameter (D = about 25 mm), the second resolution value (e.g., about 25 mm) of the input device 720. According to an embodiment, the electronic device 101 may determine a size (e.g., an interval between items) of the affordance 2130 based on one half (e.g., a radius (r), r = D/2) of the second resolution value (or the diameter (D) of the virtual space 740) (e.g., about 25 mm). For example, the affordance 2130 may be provided in a list form having an interval of one half (e.g., about 12.5 mm) of the second resolution value (or the diameter (D) of the virtual space 740) (e.g., about 25 mm).

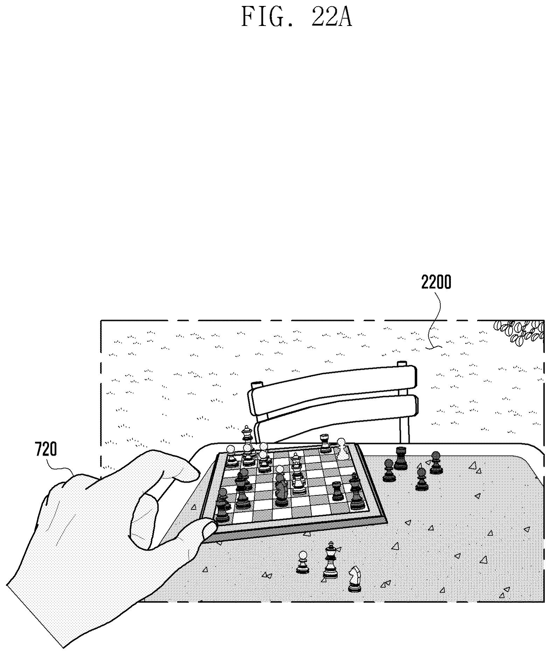

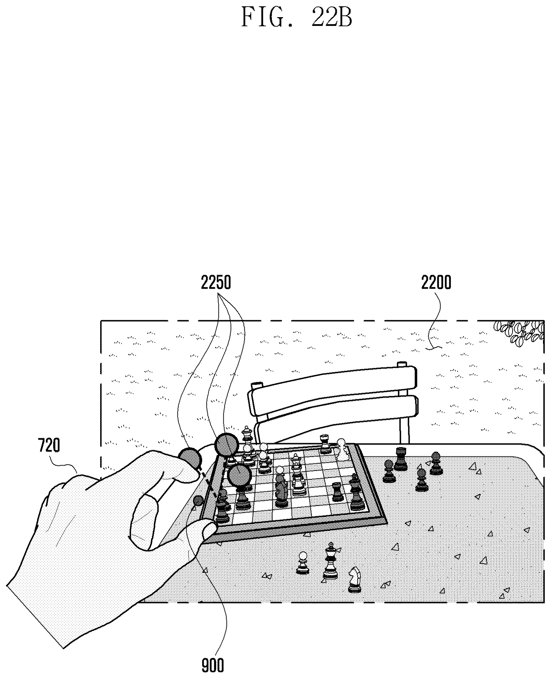

FIGS. 22A and 22B are diagrams illustrating operation examples of providing an affordance in association with a virtual object in the electronic device according to an embodiment of the present disclosure.

According to an embodiment, FIGS. 22A and 22B may indicate examples of an operation of providing an affordance 2250 capable of supporting selection of at least one among target virtual objects of a virtual environment 2200 in association with the target virtual objects in the electronic device 101 according to an embodiment.

With reference to FIGS. 22A to 22B, the electronic device 101 may recognize an input device 720 while displaying the virtual environment 2200 (or an execution screen 2200 of the virtual environment) through a display (e.g., a display module 160 of FIG. 1 or FIG. 5). According to an embodiment, in FIGS. 22A to 22B, an example in which the input device 720 is a user hand (e.g., a finger) is used, and the electronic device 101 may recognize the user hand 720 entering the virtual environment 2200.

According to an embodiment, the electronic device 101 may generate and display affordances 2250 corresponding to the respective target virtual objects that become targets of user selection, based on a virtual space formed based on the input device 720 (e.g., an indicator 900 of the input device 720).

According to an embodiment, when the input device 720 stops for a designated time based on at least one virtual object among a plurality of virtual objects in the virtual environment 2200, the electronic device 101 may display an affordance 2250 (e.g., a guide handle) related to a target virtual object (e.g., a chess piece) in a virtual space formed centered on the input device 720 (e.g., the indicator 900 of the input device 720). According to an embodiment, a user may select and manipulate (e.g., move, delete, copy, and/or edit) at least one target virtual object (e.g., a chess piece) based on the affordance 2250.

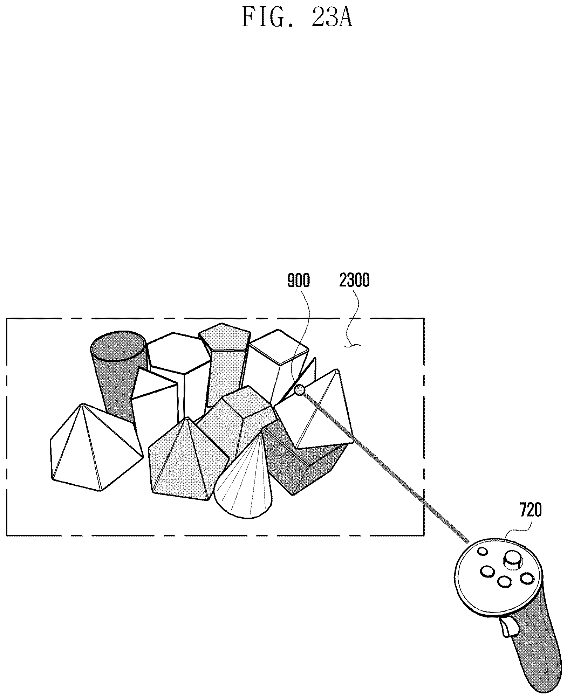

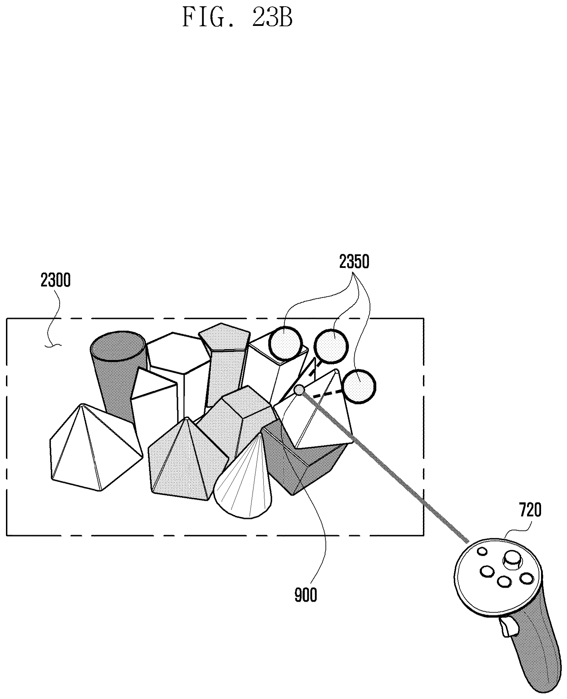

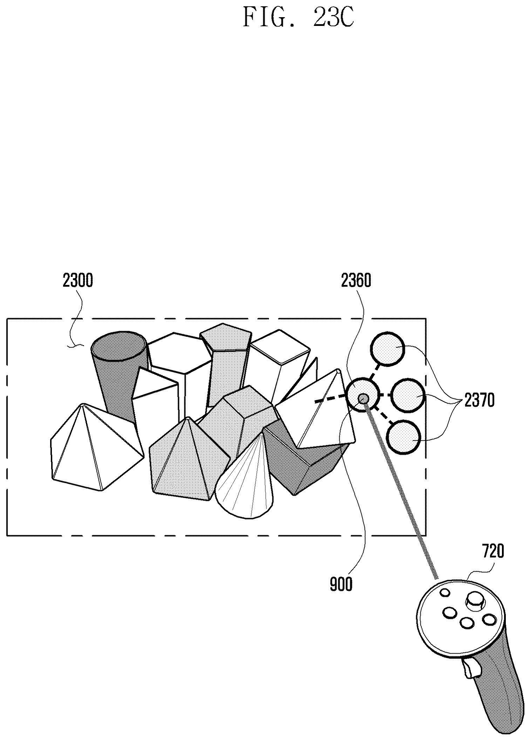

FIGS. 23A, 23B, and 23C are diagrams illustrating operation examples of providing an affordance in association with a virtual object in the electronic device according to an embodiment of the present disclosure.

According to an embodiment, FIGS. 23A to 23C may indicate examples of an operation of providing an affordance 2350 capable of supporting selection of at least one among target virtual objects of a virtual environment 2300 in association with the target virtual objects in the electronic device 101 according to an embodiment.

With reference to FIGS. 23A to 23B, the electronic device 101 may recognize an input device 720 while displaying the virtual environment 2300 (or an execution screen 2300 of the virtual environment) through a display (e.g., the display module 160 of FIG. 1 or FIG. 5). According to an embodiment, in FIGS. 23A to 23C, an example in which the input device 720 is a controller is used, and the electronic device 101 may recognize an indicator 900 of the input device 720 connected to the electronic device 101.

According to an embodiment, the electronic device 101 may generate and display affordances 2350 corresponding to the respective target virtual objects that become targets of user selection, based on a virtual space formed based on the input device 720 (e.g., an indicator 900 of the input device 720).

According to an embodiment, when the input device 720 (or the indicator 900 of the input device 720) stops for a designated time based on at least one virtual object among a plurality of virtual objects in the virtual environment 2300, the electronic device 101 may display an affordance 2350 (e.g., a guide handle) related to a target virtual object (e.g., a figure) in a virtual space formed centered on the input device 720 (e.g., the indicator 900 of the input device 720). According to an embodiment, a user may select and manipulate (e.g., move, delete, copy, and/or edit) at least one target virtual object (e.g., a figure) based on the affordance 2350.

With reference to FIG. 23C, a user may select one affordance 2360 among affordances 2350 corresponding to the respective target virtual objects by using the input device 720. According to an embodiment, when the input device 720 (e.g., the indicator 900 of the input device 720) stops (e.g., holding) for a designated time at one affordance 2360, the electronic device 101 may determine a depth of the affordance 2360 (e.g., a depth menu). For example, the electronic device 101 may determine whether menu expansion of the affordance 2360 is possible. According to an embodiment, when there is a depth menu related to the affordance 2360 selected by the input device 720, the electronic device 101 may provide a depth menu 2370 in association with (or adjacent to or around) the selected affordance 2360. According to an embodiment, the depth menu 2370 may include a plurality of lower depths such as an n-depth (n-depth), and the electronic device 101 may provide up to an n-depth.

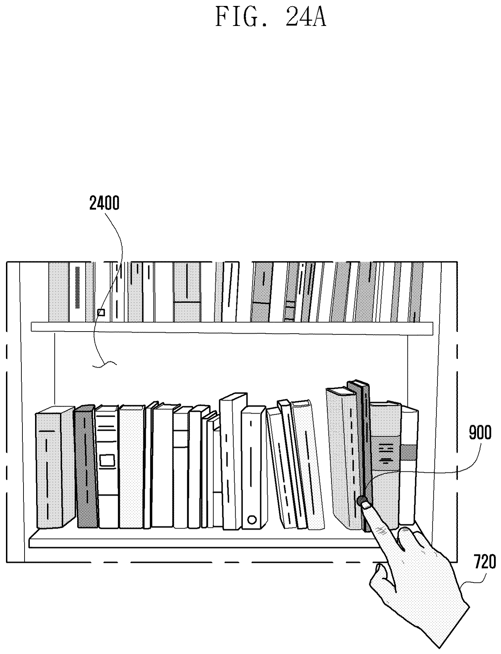

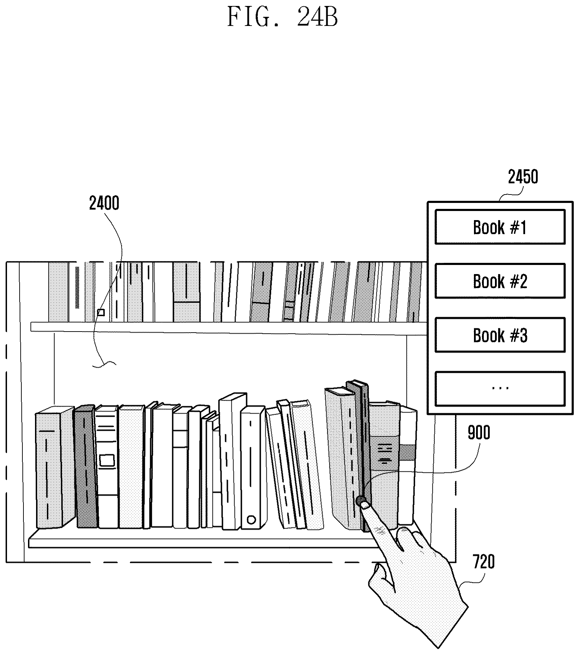

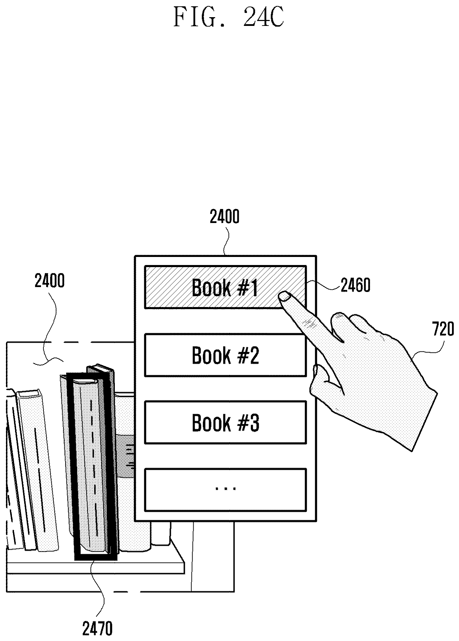

FIGS. 24A, 24B, and 24C are diagrams illustrating operation examples of providing an affordance in association with a virtual object in the electronic device according to an embodiment of the present disclosure.

According to an embodiment, FIGS. 24A to 24C may indicate examples of an operation of providing an affordance 2450 capable of supporting selection of at least one among target virtual objects of a virtual environment 2400 in association with the target virtual objects in the electronic device 101 according to an embodiment. According to an embodiment, FIGS. 24A to 24C may indicate an example in which the input device 720 is a user hand and a list-form affordance 2450 is provided.

With reference to FIGS. 24A to 24B, the electronic device 101 may recognize an input device 720 while displaying the virtual environment 2400 (or an execution screen 2400 of the virtual environment) through a display (e.g., the display module 160 of FIG. 1 or FIG. 5). According to an embodiment, in FIGS. 24A to 24C, an example in which the input device 720 is a user hand is used, and the electronic device 101 may recognize the user hand 720 entering the virtual environment 2400.

According to an embodiment, the electronic device 101 may generate and display affordances 2450 corresponding to the respective target virtual objects that become targets of user selection, based on a virtual space formed based on the input device 720 (e.g., an indicator 900 of the input device 720).

According to an embodiment, the electronic device 101 may arrange affordances corresponding to the respective target virtual objects based on the virtual space, and, when an interval (L) between each of the affordances arranged in the virtual space is smaller than a radius of the virtual space, the electronic device 101 may determine a list arrangement mode (or a list type) of arranging in a list form at an outer periphery of the virtual space in the virtual environment 2400. According to an embodiment, the electronic device 101 may provide by arranging affordances 2450 (e.g., a list-based affordance) in an area departing from the virtual space in the virtual environment 2400. For example, when an interval (L) between at least two affordances among affordances arranged based on the virtual space is smaller than a radius (e.g., one half of a resolution value) of the virtual space, the electronic device 101 may generate a list-form affordance 2450 and may arrange the list-form affordance 2450 in an area in the virtual environment 2400.

According to an embodiment, when the input device 720 (or the indicator 900 of the input device 720) stops for a designated time based on at least one virtual object among a plurality of virtual objects in the virtual environment 2400, the electronic device 101 may display, in a list form, an affordance 2450 (e.g., a guide handle) related to a target virtual object (e.g., a book) in a virtual space formed centered on the input device 720 (e.g., the indicator 900 of the input device 720). According to an embodiment, a user may select and manipulate (e.g., move, delete, copy, and/or edit) at least one target virtual object (e.g., a book) based on the affordance 2450.

With reference to FIG. 24C, a user may select one affordance 2460 among affordances 2450 corresponding to the respective target virtual objects by using the input device 720. According to an embodiment, when the input device 720 (e.g., the indicator 900 of the input device 720) stops (e.g., holding) for a designated time at one affordance 2460, the electronic device 101 may provide by emphasizing 2470 (e.g., highlighting, a selection box) a target virtual object corresponding to the affordance 2360 in the virtual environment 2400. For example, when an item 2460 is selected through the input device 720 in the list-form affordance 2450, the electronic device 101 may distinguish a target virtual object corresponding to the selected item 2460 from another target virtual object in the virtual environment 2400, thereby increasing visibility and/or legibility for the target virtual object. According to an embodiment, the electronic device 101 may increase visibility and/or legibility for a target virtual object corresponding to each item by configuring, for each item in the affordance 2450, two-dimensional or three-dimensional graphic data (e.g., an icon or an image of a designated shape (e.g., a cube shape, a circular shape, an elliptical shape, a triangular shape, a rhombus shape), an image of an object shape, text based on text recognition included in an object).

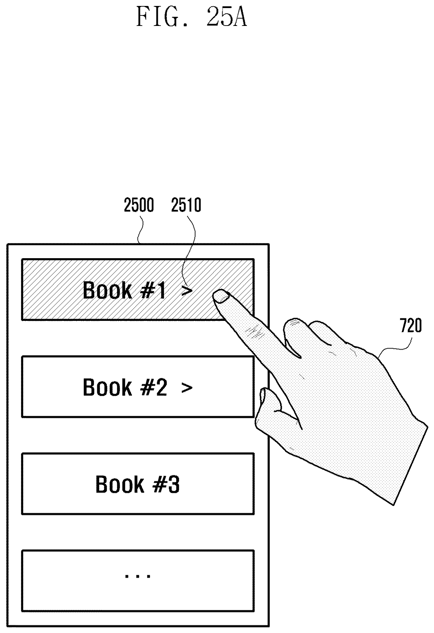

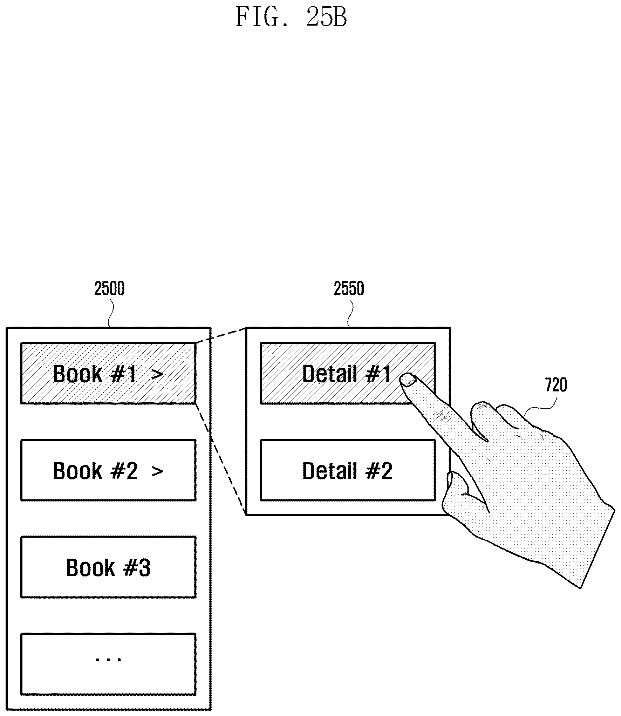

FIGS. 25A and 25B are diagrams illustrating operation examples of providing an affordance in association with a virtual object in the electronic device according to an embodiment of the present disclosure.

With reference to FIGS. 25A to 25B, the electronic device 101 may provide an affordance 2500 including a plurality of individual affordances (e.g., items). According to an embodiment, when providing the affordance 2500, the electronic device 101 may determine a depth of the affordance 2500 (e.g., a depth menu). For example, the electronic device 101 may determine whether menu expansion of the affordance 2500 is possible. According to an embodiment, when menu expansion is possible, the electronic device 101 may provide a menu expansion button (e.g., ">") for each affordance for which menu expansion is possible.

According to an embodiment, a user may select one affordance 2510 among affordances 2500 corresponding to the respective target virtual objects by using the input device 720. For example, a user may select a menu expansion button of one affordance 2510 by using the input device 720 (e.g., the indicator 900 of the input device 720). According to an embodiment, the electronic device 101 may expand a menu of the affordance 2510 based on a user input, thereby providing a depth menu 2550. According to an embodiment, when there is a depth menu related to the affordance 25100 selected by the input device 720, the electronic device 101 may provide the depth menu 2550 in association with (or adjacent to or around) the selected affordance 2510.

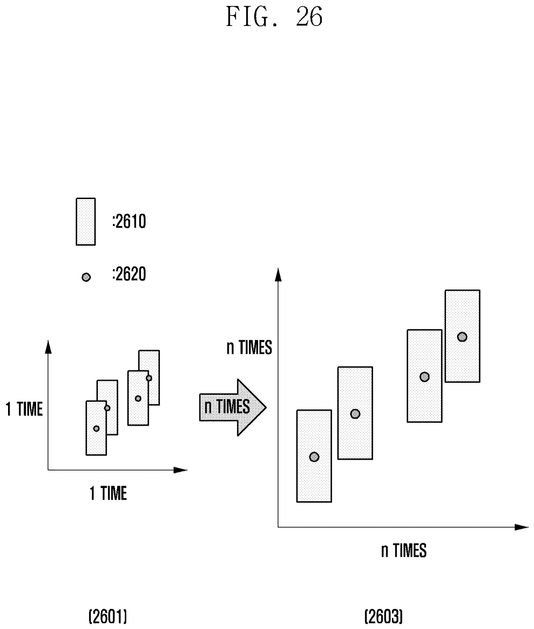

FIG. 26 is a diagram illustrating an operation example of providing an affordance in the electronic device according to an embodiment of the present disclosure.

According to an embodiment, FIG. 26 may indicate an example of a method of arranging a list affordance in consideration of a three-dimensional object layout.

According to an embodiment, in selecting a plurality of overlapped three-dimensional affordance objects in a virtual environment, the electronic device 101 may provide a list considering an actual three-dimensional layout. For example, the electronic device 101 may provide a list based on a three-dimensional object layout (e.g., three-dimensional affordance objects 2610) so as to improve intuitiveness for selection of a plurality of overlapped three-dimensional virtual objects.

According to an embodiment, in example <2601>, when an interval between a plurality of affordances in the virtual environment is smaller than a resolution value, thereby requiring generation of a list-form affordance, the electronic device 101 may project the three-dimensional affordance objects 2610 onto a plane from a view of a user, and may calculate a center of gravity 2620 of each affordance object 2610.

According to an embodiment, in example <2603>, the electronic device 101 may maintain a size (e.g., a size ratio) of the affordance object 2610 to be the same, and may enlarge only a distance between respective affordance objects 2610, based on the center of gravity 2620, by a designated magnification factor (e.g., about N times), thereby arranging overlapping affordance objects 2610 in an unfolded form in three dimensions. According to an embodiment, the designated magnification factor may be set to a minimum value (e.g., about 1.2 times, about 2 times, or about 3 times) satisfying a designated condition (e.g., an interval between centers of gravity, a minimum width) according to a resolution value of an input device.

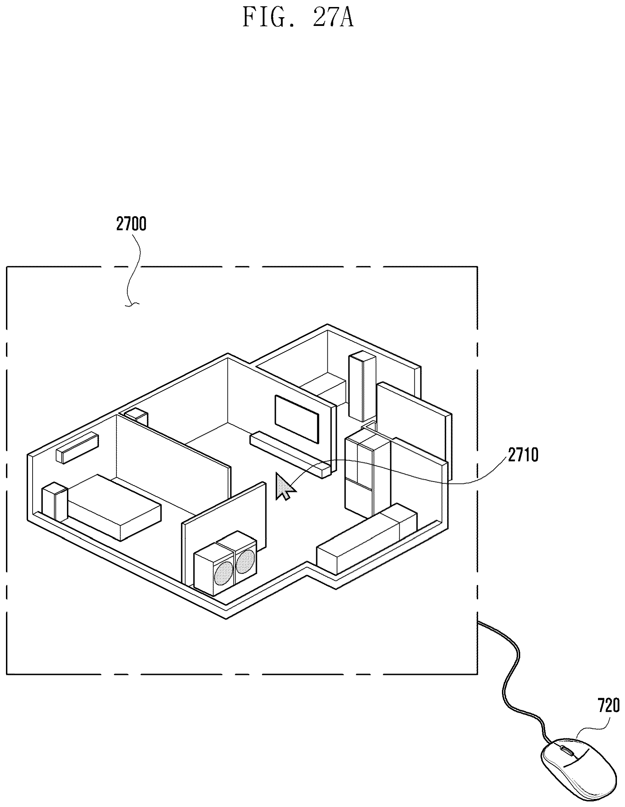

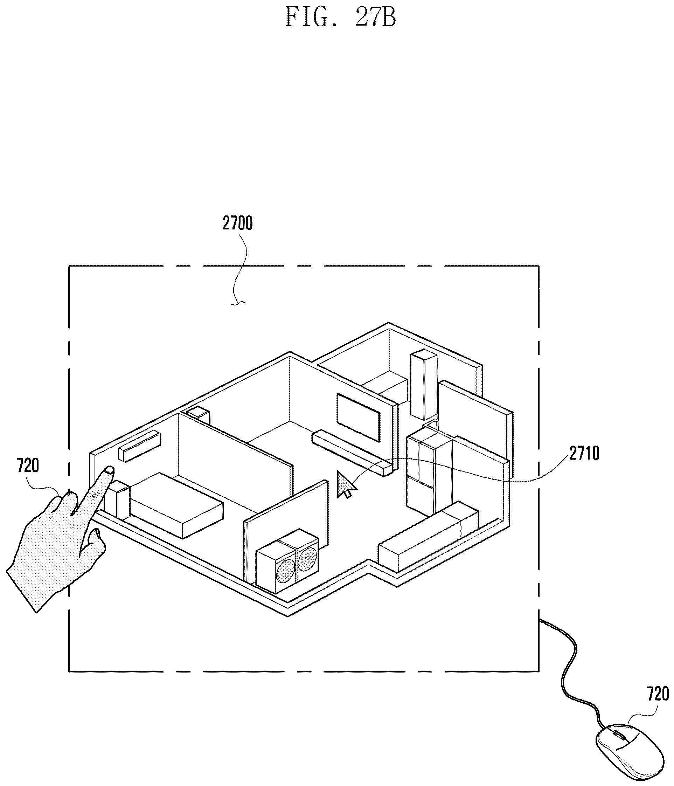

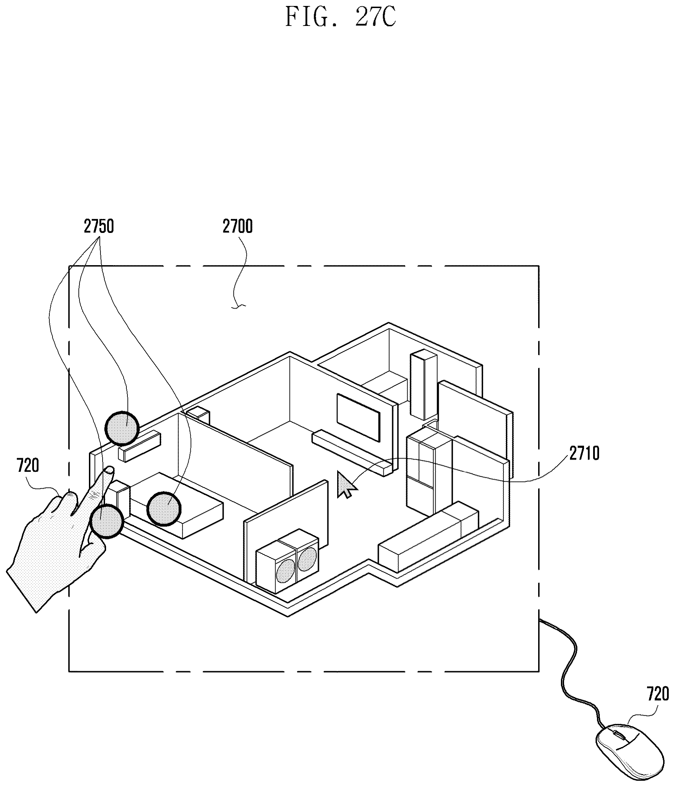

FIGS. 27A, 27B, and 27C are diagrams illustrating operation examples of providing an affordance in association with a virtual object in the electronic device according to an embodiment of the present disclosure.

According to an embodiment, FIGS. 27A to 27C may indicate examples of an operation of providing an affordance 2750 capable of supporting selection of at least one among target virtual objects of a virtual environment 2700 in association with the target virtual objects in the electronic device 101 according to an embodiment. According to an embodiment, FIGS. 27A to 27C may indicate an example of a case in which a plurality of input devices 270 (e.g., a mouse and a user hand or a user left hand and a user right hand) operate in the virtual environment 2700.

With reference to FIGS. 27A to 27C, the electronic device 101 may recognize a first input device 720 (e.g., a mouse) while displaying the virtual environment 2700 (or an execution screen 2700 of the virtual environment) through a display (e.g., a display module 160 of FIG. 1 or FIG. 5). According to an embodiment, FIGS. 27A to 27B may be a state in which there is no virtual object designated by the first input device 720 in the virtual environment 2700. For example, a state in which an affordance corresponding to the first input device 720 is not provided may be indicated. According to an embodiment, when there is a virtual object designated by the first input device 720, an affordance may be provided based on the first input device 720.

According to an embodiment, while manipulating the first input device 720, a user may move a second input device 720 (e.g., a user hand) into the virtual environment 2700. According to an embodiment, while recognizing the first input device 720 (e.g., a mouse) in the virtual environment 2700, the electronic device 101 may simultaneously recognize the second input device 720 (e.g., a user hand) entering the virtual environment 2700.

According to an embodiment, the electronic device 101 may generate and display affordances 2750 corresponding to the respective target virtual objects that become targets of user selection, based on a virtual space formed based on the second input device 720.

According to an embodiment, when the second input device 720 stops for a designated time based on at least one virtual object among a plurality of virtual objects in the virtual environment 2700, the electronic device 101 may display an affordance 2750 (e.g., a guide handle) related to target virtual objects in a virtual space formed centered on the second input device 720. According to an embodiment, a user may select and manipulate (e.g., move, delete, copy, and/or edit) at least one target virtual object based on the affordance 2750.

According to an embodiment, while displaying the affordance 2750 centered on the second input device 720, when the first input device 720 stops for a designated time based on at least one virtual object among a plurality of virtual objects in the virtual environment 2700, the electronic device 101 may also simultaneously provide another affordance (not illustrated) related to another target virtual object in a virtual space formed centered on the first input device 720. For example, the electronic device 101 may simultaneously provide affordances respectively corresponding to a plurality of input devices of different types.

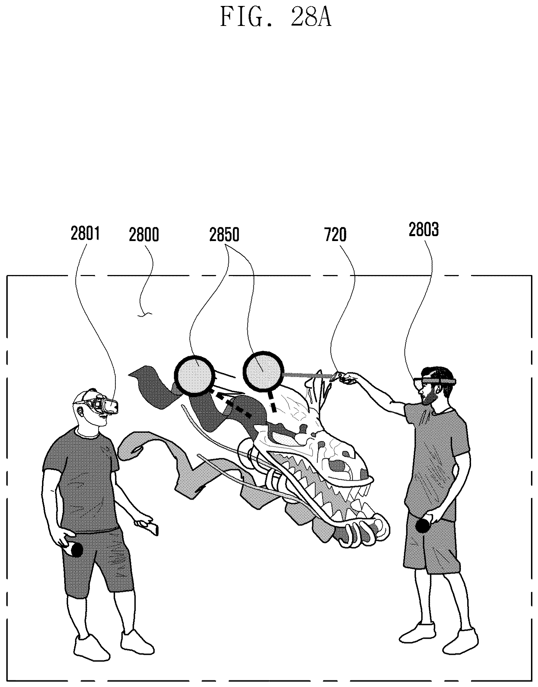

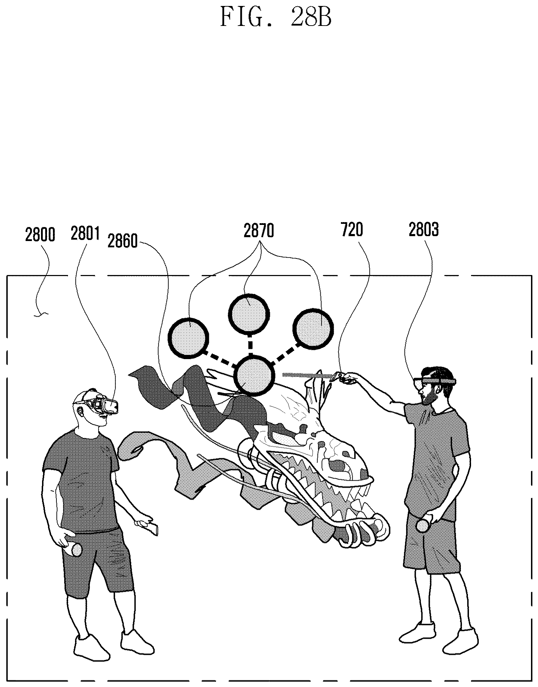

FIGS. 28A and 28B are diagrams illustrating operation examples of providing an affordance in association with a virtual object in the electronic device according to an embodiment of the present disclosure.

According to an embodiment, FIGS. 28A to 28B may indicate examples of an operation of providing an affordance 2850 capable of supporting selection of at least one among target virtual objects of a virtual environment 2800 in association with the target virtual objects in a case in which a plurality of electronic devices 101 (e.g., a first electronic device 2801, a second electronic device 2803) are connected to each other, share the virtual environment 2800, and collaborate. For example, FIGS. 28A to 28B may indicate an example of a scenario of working together in the virtual environment 2800 by interworking a first electronic device 2801 of a first user and a second electronic device 2803 of a second user.

With reference to FIG. 28A, the first electronic device 2801 or the second electronic device 2803 may recognize at least one input device while displaying the virtual environment 2800 (or an execution screen 2800 of the virtual environment) through a display of each electronic device (e.g., the display module 160 of FIG. 1 or FIG. 5). According to an embodiment, in the first electronic device 2801 and the second electronic device 2803, an electronic device 101 executing the virtual environment 2800 may be a master device. According to an embodiment, an electronic device 101 receiving sharing of the virtual environment 280 executing by the master device may be a slave device. According to an embodiment, recognition of an input device may be recognized by the master device providing the virtual environment 2800 (e.g., the first electronic device 2801 or the second electronic device 2803.

According to an embodiment, the master device (e.g., the first electronic device 2801) may generate and display affordances 2850 corresponding to the respective target virtual objects that become targets of user selection, based on a virtual space formed based on an input device. According to an embodiment, the affordance 2850 generated by the master device may be shared and displayed also on a virtual environment 2800 provided through a display of a slave device (e.g., the second electronic device 2803).

According to an embodiment, when an input device stops for a designated time based on at least one virtual object among a plurality of virtual objects in the virtual environment 2800, the master device may display an affordance 2850 (e.g., a guide handle) related to a target virtual object in a virtual space formed centered on the input device. According to an embodiment, a first user or a second user may select and manipulate (e.g., move, delete, copy, and/or edit) at least one target virtual object based on the affordance 2850.

With reference to FIG. 28B, a first user or a second user may select one affordance 2860 among affordances 2850 corresponding to the respective target virtual objects by using an input device. According to an embodiment, when an input device stops for a designated time (e.g., holding) on one affordance 2860, the master device may determine a depth menu of the affordance 2860. For example, the master device may determine whether menu expansion of the affordance 2860 is possible. According to an embodiment, when there is a depth menu related to the affordance 2860 selected by an input device, the master device may provide a depth menu 2870 in association with (or adjacent to or around) the selected affordance 2860. According to an embodiment, the depth menu 2870 generated by the master device may be shared and displayed also on the virtual environment 2800 provided through the display of the slave device.

An operation method performed in the electronic devices 101 and 201 according to an embodiment of the present disclosure may include an operation of recognizing an input device 720 in virtual environments 400 and 700. According to an embodiment, the operation method may include an operation of determining a virtual space 740 for determining a target virtual object 750 based on an attribute of the input device 720. According to an embodiment, the operation method may include an operation of determining the target virtual object 750 based on the virtual space 740. According to an embodiment, the operation method may include an operation of generating affordances 760 corresponding to the respective target virtual object 750. According to an embodiment, the operation method may include an operation of displaying the affordances 760 according to a designated arrangement mode.

According to an embodiment, the operation of recognizing the input device may include an operation of displaying, through a display, an execution screen for the virtual environments including a plurality of virtual objects, an operation of recognizing the input device while displaying the execution screen, and an operation of recognizing an indicator 900 corresponding to the input device based on recognizing the input device.

According to an embodiment, the operation of determining the virtual space may include an operation of determining an attribute of the input device, an operation of calculating a resolution value based on a first resolution value predefined according to the attribute of the input device and a second resolution value related to user noise generated by a user using the input device, an operation of calculating the virtual space having the resolution value as a diameter, and an operation of mapping a center of gravity of the virtual space based on the indicator.

According to an embodiment, the virtual space may include a virtual sphere formed with a resolution value based on an attribute of the input device as a diameter, centered on the indicator.

According to an embodiment, the operation of determining the virtual object may include an operation of determining, based on the virtual space, the target virtual object included in the virtual space among the plurality of virtual objects of the execution screen, an operation of determining whether the target virtual object included in the virtual space satisfies a designated condition, and an operation of entering a guide generation mode for providing the affordance when the target virtual object satisfies the designated condition.

According to an embodiment, the designated condition may include a condition in which the target virtual object is a plurality of target virtual objects of at least two target virtual objects, and a distance between centers of gravity of each of the plurality of target virtual objects is equal to or less than a designated proximity distance.

According to an embodiment, the operation of displaying the affordance may include an operation of providing an object-based affordance based on a contact space in which the target virtual object contacts a surface of the virtual space when the target virtual object spans the virtual space, an operation of providing an object-based affordance based on a space on an extension line from the target virtual object toward a surface of the virtual space when the target virtual object is inside the virtual space, and an operation of providing a list-based affordance in an outer peripheral space of the virtual space when an interval between the target virtual objects is smaller than a radius of the virtual space.

According to an embodiment, the affordance may include a virtual object supporting to enable a direct selection for the target virtual object among the plurality of virtual objects.

In a non-transitory computer-readable medium storing instructions causing the processor 120 to perform operations when executed by the processor 120 of the electronic device 101 according to an embodiment of the present disclosure, the instructions may include a medium causing, when executed by the processor 120, the electronic device 101 to perform an operation of recognizing an input device 720 in virtual environments 400 and 700, an operation of determining a virtual space 740 for determining target virtual objects 750 based on an attribute of the input device 720, an operation of determining the target virtual objects 750 based on the virtual space 740, an operation of generating affordances 760 corresponding to the respective target virtual objects 750, and an operation of displaying the affordances 760 according to a designated arrangement mode.

It may be understood that the above-described embodiments and technical features of the above-described embodiments may be combined with each other in all combinations of each, unless there is no conflict between two embodiments or features. For example, each of all combinations of two or more among the above-described embodiments may be envisioned and included within the present disclosure. One or more features from any embodiment may be integrated into any other embodiment, and may provide a corresponding advantage or corresponding advantages.

The various embodiments disclosed in the present specification and drawings are provided as examples merely for easily explaining the technical contents and helping understand the present disclosure, but not intended to limit the scope of the technology disclosed in the present disclosure. Therefore, the scope of the present disclosure should be interpreted that all changes or modified forms derived based on the technical spirit of the present disclosure fall within the scope of the present disclosure in addition to the embodiments disclosed herein.

## Claims

1. An electronic device, comprising:
a display;
at least one processor including processing circuitry; and
a memory storing instructions,
wherein the instructions, when executed by the at least one processor, cause the electronic device to:
recognize an input device in a virtual environment;
determine a virtual space for determining target virtual objects based on an attribute of the input device;
determine the target virtual objects based on the virtual space;
generate affordances corresponding to the respective target virtual objects; and
display the affordances according to a designated arrangement mode.

2. The electronic device of claim 1, wherein the instructions, when executed by the at least one processor, cause the electronic device to:
display, through the display, an execution screen for the virtual environment including a plurality of virtual objects;
recognize the input device while displaying the execution screen; and
recognize an indicator (900) corresponding to the input device based on recognizing the input device, and
wherein the input device includes a device supporting a user input for manipulating a virtual object in the virtual environment.

3. The electronic device of claim 2, wherein the affordance includes a designated object supporting to enable a direct selection for the target virtual object among the plurality of virtual objects.

4. The electronic device of claim 2, wherein the instructions, when executed by the at least one processor, cause the electronic device to:
determine the attribute of the input device; and
calculate a virtual space corresponding to the attribute of the input device based on the indicator.

5. The electronic device of claim 4, wherein the virtual space includes a virtual sphere formed with a resolution value based on the attribute of the input device as a diameter centered on the indicator, and
wherein the resolution value includes a first resolution value predefined for the input device and a second resolution value related to user noise generated by a user using the input device.

6. The electronic device of claim 5, wherein the instructions, when executed by the at least one processor, cause the electronic device to calculate the resolution value based on the first resolution value and the second resolution value.

7. The electronic device of claim 5, wherein the instructions, when executed by the at least one processor, cause the electronic device to:
map a center of gravity of the virtual space based on the indicator; and
form the virtual space having the diameter based on the center of gravity.

8. The electronic device of claim 5, wherein the instructions, when executed by the at least one processor, cause the electronic device to determine a size and/or an interval of the affordance based on the resolution value.

9. The electronic device of claim 4, wherein the instructions, when executed by the at least one processor, cause the electronic device to:
determine, based on the virtual space, the target virtual object included in the virtual space among the plurality of virtual objects of the execution screen;
determine whether the target virtual object included in the virtual space satisfies a designated condition; and
enter a guide generation mode for providing the affordance when the target virtual object satisfies the designated condition.

10. The electronic device of claim 9, wherein the designated condition includes a condition in which the target virtual object is a plurality of target virtual objects of at least two target virtual objects, and a distance between centers of gravity of each of the plurality of target virtual objects is equal to or less than a designated proximity distance.

11. The electronic device of claim 9, wherein the instructions, when executed by the at least one processor, cause the electronic device to:
determine whether a plurality of target virtual objects are included in the virtual space;
determine, when the plurality of target virtual objects are included, a center of gravity respectively corresponding to the plurality of target virtual objects;
determine distances between the centers of gravity of each of the plurality of target virtual objects;
compare the distances between the centers of gravity with a designated proximity distance; and
enter the guide generation mode when at least one distance among the distances between the centers of gravity is equal to or less than the designated proximity distance.

12. The electronic device of claim 2, wherein the designated arrangement mode includes a first mode of providing affordances by arranging the affordances in a space contacting a surface of the virtual space and the target virtual object, and a second mode of providing affordances by arranging the affordances as a list corresponding to the respective target virtual objects outside the virtual space.

13. The electronic device of claim 12, wherein the instructions, when executed by the at least one processor, cause the electronic device to:
provide an object-based affordance based on a space in which the target virtual object contacts the surface of the virtual space when the target virtual object spans the virtual space;
provide an object-based affordance based on a space on an extension line from the target virtual object toward the surface of the virtual space when the target virtual object is inside the virtual space; and
provide a list-based affordance in an outer peripheral space of the virtual space when an interval between the target virtual objects is smaller than a radius of the virtual space.

14. A method for operating an electronic device, the method comprising:
recognizing an input device in a virtual environment;
determining a virtual space for determining target virtual objects based on an attribute of the input device;
determining the target virtual objects based on the virtual space;
generating affordances corresponding to the respective target virtual objects; and
displaying the affordances according to a designated arrangement mode.

15. A non-transitory computer-readable storage medium storing instructions causing a processor of an electronic device to perform operations when executed by the processor,
wherein the instructions, when executed by the processor, cause the electronic device to perform:
recognizing an input device (720) in a virtual environment (400, 700);
determining a virtual space (740) for determining target virtual objects (750) based on an attribute of the input device (720);
determining the target virtual objects (750) based on the virtual space (740);
generating affordances (760) corresponding to the respective target virtual objects (750); and
displaying the affordances (760) according to a designated arrangement mode.
